(19) Europäisches Patentamt
European Patent Office
Office européen des brevets

(11) **EP 4 753 265 A1**

(12) # EUROPEAN PATENT APPLICATION
published in accordance with Art. 153(4) EPC

(43) Date of publication:
**03.06.2026 Bulletin 2026/23**

(21) Application number: **24845760.8**

(22) Date of filing: **24.05.2024**

(51) International Patent Classification (IPC):
***H04N 19/593*** *(2014.01)* ***H04N 19/105*** *(2014.01)*
***H04N 19/176*** *(2014.01)* ***H04N 19/159*** *(2014.01)*
***H04N 19/157*** *(2014.01)*

(52) Cooperative Patent Classification (CPC):
**H04N 19/105; H04N 19/157; H04N 19/159; H04N 19/176; H04N 19/593**

(86) International application number:
**PCT/KR2024/007090**

(87) International publication number:
**WO 2025/023456 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.07.2023 KR 20230096411**
**13.03.2024 KR 20240035426**

(71) Applicant: **Samsung Electronics Co., Ltd.**
**Suwon-si, Gyeonggi-do 16677 (KR)**

(72) Inventors:
- **LI, Ling**
  **Suwon-si, Gyeonggi-do 16677 (KR)**
- **PARK, Minwoo**
  **Suwon-si, Gyeonggi-do 16677 (KR)**
- **PARK, Jeeyoon**
  **Suwon-si, Gyeonggi-do 16677 (KR)**
- **PARK, Minsoo**
  **Suwon-si, Gyeonggi-do 16677 (KR)**
- **CHOI, Kwangpyo**
  **Suwon-si, Gyeonggi-do 16677 (KR)**

(74) Representative: **Appleyard Lees IP LLP**
**G Mill**
**Dean Clough Industrial Park**
**Halifax HX3 5AH (GB)**

(54) **ENCODING METHOD, ENCODING APPARATUS, DECODING METHOD, AND DECODING APPARATUS FOR IMAGE**

(57) Provided are an image decoding method, an image decoding apparatus, an image encoding method and an image encoding apparatus, the image decoding method including determining one or more candidate vectors for performing template matching on a current block, determining at least one reference vector with respect to the current block, from among the one or more candidate vectors, and reconstructing the current block by using the at least one reference vector.

FIG. 21

START
IDENTIFY CANDIDATE VECTOR
S2110
REMOVE REDUNDANT CANDIDATE VECTOR
S2120
DETERMINE REFERENCE VECTOR AND/OR REFERENCE BLOCK
S2130
END

EP 4 753 265 A1

## Description

### Technical Field

The present disclosure relates to the fields of image encoding and decoding. More particularly, the present disclosure relates to an encoding and decoding method and apparatus for predicting a sample of an image.

### Background Art

In image encoding and decoding, an image is split into blocks, and each block is prediction-encoded and prediction-decoded via inter prediction or intra prediction.

Inter prediction is a technique of compressing images by removing temporal redundancy between the images. In inter prediction, blocks of a current image are predicted by using a reference image. A reference block that is most similar to a current block may be searched for within a certain search range in the reference image. The current block is predicted based on the reference block, and a prediction block generated as a result of prediction is subtracted from the current block to generate a residual block.

Intra prediction is a technique of compressing an image by removing spatial redundancy within the image. In intra prediction, a prediction block is generated based on neighboring pixels of a current block according to a prediction mode. Also, a residual block is generated by subtracting the prediction block from the current block.

The residual block generated through the inter prediction or the intra prediction is transformed and quantized and then transmitted to the decoder. The decoder inversely quantizes and inversely transforms the residual block and reconstructs the current block by combining the prediction block of the current block with the residual block. The decoder may remove an artifact in the reconstructed current block by filtering the reconstructed current block.

### Disclosure of Invention

### Solution to Problem

According to an embodiment of the present disclosure, an image decoding method is provided. The image decoding method may include determining one or more candidate vectors for performing template matching on a current block. The image decoding method may include determining at least one reference vector with respect to the current block, from among the one or more candidate vectors. The image decoding method may include reconstructing the current block by using the at least one reference vector.

According to an embodiment of the present disclosure, an image decoding apparatus is provided. The image decoding apparatus may include at least one processor and one or more memories. The at least one processor may execute one or more instructions included in the one or more memories to determine one or more candidate vectors for performing template matching on a current block. The at least one processor may execute the one or more instructions included in the one or more memories to determine at least one reference vector with respect to the current block, from among the one or more candidate vectors. The at least one processor may execute the one or more instructions included in the one or more memories to reconstruct the current block by using the at least one reference vector.

According to an embodiment of the present disclosure, an image encoding method is provided. The image encoding method may include determining one or more candidate vectors for performing template matching on a current block. The image encoding method may include determining at least one reference vector with respect to the current block, from among the one or more candidate vectors. The image encoding method may include reconstructing the current block by using the at least one reference vector.

According to an embodiment of the present disclosure, an image encoding apparatus is provided. The image encoding apparatus may include at least one processor and one or more memories. The at least one processor may execute one or more instructions included in the one or more memories to determine one or more candidate vectors for performing template matching on a current block. The at least one processor may execute the one or more instructions included in the one or more memories to determine at least one reference vector with respect to the current block, from among the one or more candidate vectors. The at least one processor may execute the one or more instructions included in the one or more memories to reconstruct the current block by using the at least one reference vector.

According to an embodiment of the present disclosure, according to an embodiment of the present disclosure, a computer-readable storage medium having stored therein a bitstream encoded by an image encoding method is provided.

BRIEF DESCRIPTION OF DRAWINGS

FIG. 1 is a block diagram of an image decoding apparatus according to an embodiment of the present disclosure.
FIG. 2 is a block diagram of an image encoding apparatus according to an embodiment of the present disclosure.
FIG. 3 illustrates a process of determining at least one coding unit by splitting a current coding unit, according to an embodiment of the present disclosure.
FIG. 4 illustrates a process of determining at least one coding unit by splitting a non-square coding unit, according to an embodiment of the present disclosure.
FIG. 5 illustrates a process of splitting a coding unit, based on at least one of block shape information and split shape mode information, according to an embodiment of the present disclosure.
FIG. 6 illustrates a method of determining a certain coding unit from among an odd number of coding units, according to an embodiment of the present disclosure.
FIG. 7 illustrates an order of processing a plurality of coding units when the plurality of coding units are determined by splitting a current coding unit, according to an embodiment of the present disclosure.
FIG. 8 illustrates a process of determining that a current coding unit is to be split into an odd number of coding units, when the coding units are not processable in a certain order, according to an embodiment of the present disclosure.
FIG. 9 illustrates a process of determining at least one coding unit by splitting a first coding unit, according to an embodiment of the present disclosure.
FIG. 10 illustrates that a shape into which a second coding unit is splittable is restricted when the second coding unit having a non-square shape, determined by splitting a first coding unit, satisfies a certain condition, according to an embodiment of the present disclosure.
FIG. 11 illustrates a process of splitting a square coding unit when split shape mode information indicates that the square coding unit is not to be split into four square coding units, according to an embodiment of the present disclosure.
FIG. 12 illustrates that a processing order between a plurality of coding units may change depending on a process of splitting a coding unit, according to an embodiment of the present disclosure.
FIG. 13 illustrates a process of determining a depth of a coding unit when a shape and size of the coding unit change, when the coding unit is recursively split such that a plurality of coding units are determined, according to an embodiment of the present disclosure.
FIG. 14 illustrates depths that are determinable based on shapes and sizes of coding units, and part indexes (PIDs) that are for distinguishing the coding units, according to an embodiment of the present disclosure.
FIG. 15 illustrates that a plurality of coding units are determined based on a plurality of certain data units included in a picture, according to an embodiment of the present disclosure.
FIG. 16 illustrates coding units which may be determined for each picture, when a combination of shapes into which a coding unit may be split is different for each picture, according to an embodiment of the present disclosure.
FIG. 17 illustrates various shapes of a coding unit, which may be determined based on split shape mode information represented as a binary code, according to an embodiment of the present disclosure.
FIG. 18 illustrates another shape of a coding unit, which may be determined based on split shape mode information represented as a binary code, according to an embodiment of the present disclosure.
FIG. 19 illustrates a block diagram of an image encoding and decoding system performing loop filtering according to an embodiment of the present disclosure.
FIG. 20 is a block diagram illustrating components of an image decoding apparatus according to an embodiment of the present disclosure.
FIG. 21 is a flowchart of an image decoding method according to an embodiment of the present disclosure.
FIG. 22 is a diagram for describing a template matching prediction mode according to an embodiment of the present disclosure.
FIG. 23 is a diagram for describing a template of a template matching prediction mode according to an embodiment of the present disclosure.
FIG. 24 is a diagram for describing a search range of a template matching prediction mode according to an embodiment of the present disclosure.
FIG. 25 is a flowchart of an image decoding method according to an embodiment of the present disclosure.
FIG. 26 is a flowchart of a process of determining a candidate vector, according to an embodiment of the present disclosure.
FIG. 27 is a diagram for describing a neighboring block of a current block, according to an embodiment of the present disclosure.
FIG. 28 is a diagram for describing a block vector list according to an embodiment of the present disclosure.
FIG. 29 is a flowchart of an image decoding method according to an embodiment of the present disclosure.
FIG. 30 is a diagram for describing prediction of a current block by using a cost function, according to an embodiment of the present disclosure.
FIG. 31 is a diagram for determining a reference block which is not reconstructed, according to an embodiment of the present disclosure.
FIG. 32 is a diagram for determining a reference block which is not reconstructed, according to an embodiment of the present disclosure.
FIG. 33 is a block diagram illustrating components of an image encoding apparatus according to an embodiment of the present disclosure.
FIG. 34 is a flowchart of an image encoding method according to an embodiment of the present disclosure.

MODE FOR THE INVENTION

Throughout the present disclosure, the expression "at least one of a, b or c" may indicate "a," "b," "c," "a and b," "a and c," "b and c," "all of a, b, and c," or variations thereof.
In the present disclosure, the expression "a, b, and/or c" may be replaced by "at least one of a, b, or c." That is, the expression "a, b, and/or c" may indicate "a," "b," "c," "a and b," "a and c," "b and c," "all of a, b, and c," or variations thereof.
The present disclosure allows for various changes and a plurality of embodiments, and thus, the embodiments will be illustrated in the drawings and described in detail in the written description. However, this is not to limit modes of practice of the present disclosure, and the present disclosure may include all changes, equivalents, or substitutes that are encompassed in the spirit and technical scope of various embodiments.
The terms used in the present disclosure are general terms as possible that have been widely used nowadays in consideration of the functions in the present disclosure, which, however, may be changed according to an intention of a technician in the art, a precedent, the advent of new technologies, or the like. Also, in particular cases, there may be terms arbitrarily selected by an applicant, and in this case, the meanings of the terms will be understood through corresponding descriptions. Therefore, the terms used in the present disclosure should be defined based on the meanings of the terms and the content throughout the present disclosure, rather than simply based on the titles of the terms.
In the present disclosure, a singular expression may include a plural expression, unless an apparently different meaning is indicated in the context. When describing the embodiments, well-known arts will not be described in detail, when it is determined that the detail descriptions thereof may unnecessarily blur the concept of the present disclosure. Also, the numbers (for example, a first, a second, etc.) used for describing the embodiments correspond to identifiers for distinguishing elements from other elements.
In the present disclosure, when an element is referred to as being "connected to" or "in contact with" another element, the element may be directly connected to or in contact with the other element. However, alternatively, the element may be connected to or in contact with the other element with an intervening element therebetween, unless particularly otherwise described.
Throughout the present disclosure, when a part "includes" or "comprises" an element, the part may further include other elements, not excluding the other elements, unless there is a particular description contrary thereto. In the present disclosure, regarding an element represented as a "unit" or a "module," two or more elements may be combined into one element, or one element may be divided into two or more sub-divided elements. Also, each of the elements to be described hereinafter may additionally perform part or all of functions performed by other elements, in addition to a main function of each of the elements, and the other elements may take full charge of part of the main function of each of the elements.
The expression "configured to (or set to)" used in the present disclosure may be interchangeably used according to situations, for example, with an expression, "suitable for," "having the capacity to," "designed to," "adapted to," "made to," or "capable of." The term "configured to (or set to)" may not necessarily denote only "specifically designed to" in terms of hardware. Alternatively, in certain situations, the expression "a system configured to" may denote that the system "has the capacity" to perform certain operations with other devices or components. For example, the phrase "a processor formed to (or configured to) perform A, B, and C" may include a dedicated processor (for example, an embedded processor) for performing corresponding operations or a general-purpose processor (for example, a central processing unit (CPU) or an application processor) capable of performing the corresponding operations by executing one or more software programs stored in a memory.
At least one processor according to an embodiment of the present disclosure may include various processing circuits and/or multiple processors. For example, the term "processor used in the present disclosure including the claims may include various processing circuits including at least one processor, and one or more of the at least one processor may be configured to perform various functions described herein individually in a distributed fashion and/or collectively. As used in this specification, when "a processor," "at least one processor," and "one or more processors" are described as being configured to perform various functions, these terms may include, for example, a situation performed by one processor without limit. A processor (processors) different from some of the referred functions may perform functions different from the referred functions, and there may be a situation in which a single processor may perform all of the referred functions. Additionally, at least one processor may include a combination of processors configured to perform, for example, in a distributed fashion, listed/described various functions. The at least one processor may be configured to execute a program instruction to achieve or perform various functions.

In the present disclosure, an "image" may include a picture, a still image, a frame, a moving image including a plurality of consecutive still images, or a video.

In the present disclosure, "a sample" may refer to data assigned to a sampling position of an image and may include data to be processed. For example, a sample may include a pixel in a frame of a spatial domain. A block may denote a unit including a plurality of samples.

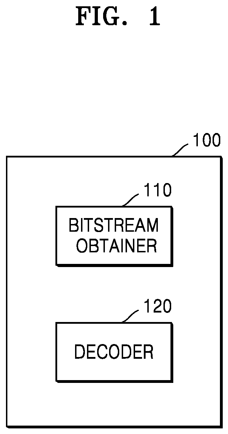

Hereinafter, an image encoding method and apparatus and an image decoding method and apparatus based on a coding unit and a transform unit of a tree structure according to an embodiment of the present disclosure are described with reference to FIGS. 1 through 19.

FIG. 1 is a block diagram of an image decoding apparatus 100 according to an embodiment of the present disclosure.

The image decoding apparatus 100 may include a bitstream obtainer 110 and a decoder 120. The bitstream obtainer 110 and the decoder 120 may include at least one processor. Also, the bitstream obtainer 110 and the decoder 120 may include a memory storing instructions to be performed by the at least one processor.

The bitstream obtainer 110 may receive a bitstream. The bitstream includes information about image encoding of an image encoding apparatus 200 described later. Also, the bitstream may be transmitted from the image encoding apparatus 200. The image encoding apparatus 200 and the image decoding apparatus 100 may be connected by wire or wirelessly, and the bitstream obtainer 110 may receive the bitstream by wire or wirelessly. The bitstream obtainer 110 may receive the bitstream from a storage medium, such as an optical medium or a hard disk. The decoder 120 may reconstruct an image based on information obtained from the received bitstream. The decoder 120 may obtain, from the bitstream, a syntax element for reconstructing the image. The decoder 120 may reconstruct the image based on the syntax element.

To describe, in detail, an operation of the image decoding apparatus 100, the bitstream obtainer 110 may receive the bitstream.

The image decoding apparatus 100 may perform an operation of obtaining, from the bitstream, a bin string corresponding to a split shape mode of a coding unit. Also, the image decoding apparatus 100 may perform an operation of determining a split rule of the coding unit. Also, the image decoding apparatus 100 may perform an operation of splitting the coding unit into a plurality of coding units, based on at least one of the bin string corresponding to the split shape mode and the split rule. In order to determine the split rule, the image decoding apparatus 100 may determine a first range of a permissible size of the coding unit according to a ratio between a width and a height of the coding unit. In order to determine the split rule, the image decoding apparatus 100 may determine a second range of the permissible size of the coding unit according to a split shape mode of the coding unit.

Hereinafter, splitting of the coding unit is described in detail according to an embodiment of the present disclosure.

First, one picture may be split into one or more slices or one or more tiles. One slice or one tile may be a sequence of one or more largest coding units (i.e., coding tree units (CTUs)). According to an embodiment, one slice may include one or more tiles, and one slice may include one or more CTUs. The slice including one tile or a plurality of tiles may be determined in the picture.

As a concept compared to the CTU, there is a largest coding block (i.e., a coding tree block (CTB)). The CTB denotes NxN blocks including NxN samples (N is an integer). Each color component may be split into one or more CTBs.

When a picture has three sample arrays (sample arrays for Y, Cr, and Cb components), a CTU includes a CTB of a luma sample, two CTBs of chroma samples corresponding to the luma sample, and syntax structures used to encode the luma sample and the chroma samples. When a picture is a monochrome picture, a CTU includes a CTB of a monochrome sample and syntax structures used to encode the monochrome samples. When a picture is a picture encoded in color planes separated according to color components, a CTU includes syntax structures used to encode the picture and samples of the image.

One CTB may be split into MxN coding blocks including MxN samples (M and N are integers).

When a picture has sample arrays for Y, Cr, and Cb components, a coding unit includes a coding block of a luma sample, two coding blocks of chroma samples corresponding to the luma sample, and syntax structures used to encode the luma sample and the chroma samples. When a picture is a monochrome picture, a coding unit includes a coding block of a monochrome sample and syntax structures used to encode the monochrome samples. When a picture is a picture encoded in color planes separated according to color components, a coding unit includes syntax structures used to encode the picture and samples of the image.

As described above, a CTB and a CTU are conceptually distinguished from each other, and a coding block and a coding unit are conceptually distinguished from each other. That is, a coding unit (a CTU) refers to a data structure including a coding block (a CTB) including a corresponding sample and a syntax structure corresponding to the coding block (the CTB). However, because it is understood by one of ordinary skill in the art that a coding unit (a CTU) or a coding block (a CTB) refers to a block of a certain size including a certain number of samples, a CTB and a CTU, or a coding block and a coding unit are mentioned in the following specification without being distinguished unless otherwise described.

An image may be split into CTUs. A size of each CTU may be determined based on information obtained from a bitstream. A shape of each CTU may be a square shape of the same size. However, an embodiment is not limited thereto.

For example, information about a maximum size of a luma coding block may be obtained from a bitstream. For example, the maximum size of the luma coding block indicated by the information about the maximum size of the luma coding block may be one of 4x4, 8x8, 16x16, 32x32, 64x64, 128x128, and 256x256.

For example, information about a luma block size difference and a maximum size of a luma coding block that may be split into two may be obtained from a bitstream. The information about the luma block size difference may refer to a size difference between a luma CTU and a luma CTB that may be split into two. Accordingly, when the information about the maximum size of the luma coding block that may be split into two and the information about the luma block size difference obtained from the bitstream are combined with each other, a size of the luma CTU may be determined. A size of a chroma CTU may be determined by using the size of the luma CTU. For example, when a Y: Cb: Cr ratio is 4:2:0 according to a color format, a size of a chroma block may be half a size of a luma block, and a size of a chroma CTU may be half a size of a luma CTU.

According to an embodiment, because information about a maximum size of a luma coding block that is binary splittable is obtained from a bitstream, the maximum size of the luma coding block that is binary splittable may be variably determined. In contrast, a maximum size of a luma coding block that is ternary splittable may be fixed. For example, the maximum size of the luma coding block that is ternary splittable in an I-image may be 32x32, and the maximum size of the luma coding block that is ternary splittable in a P-picture or a B-image may be 64x64.

Also, a CTU may be hierarchically split into coding units based on split shape mode information obtained from a bitstream. At least one of information indicating whether quad splitting is performed, information indicating whether multi-splitting is performed, split direction information, and split type information may be obtained as the split shape mode information from the bitstream.

For example, the information indicating whether quad splitting is performed may indicate whether a current coding unit is quad split (QUAD_SPLIT) or not.

When the current coding unit is not quad split, the information indicating whether multi-splitting is performed may indicate whether the current coding unit is no longer split (NO_SPLIT) or binary/ternary split.

When the current coding unit is binary split or ternary split, the split direction information indicates that the current coding unit is split in one of a horizontal direction and a vertical direction.

When the current coding unit is split in the horizontal direction or the vertical direction, the split type information indicates that the current coding unit is binary split or ternary split.

A split mode of the current coding unit may be determined according to the split direction information and the split type information. A split mode when the current coding unit is binary split in the horizontal direction may be determined to be a binary horizontal split mode (SPLIT_BT_HOR), a split mode when the current coding unit is ternary split in the horizontal direction may be determined to be a ternary horizontal split mode (SPLIT_TT_HOR), a split mode when the current coding unit is binary split in the vertical direction may be determined to be a binary vertical split mode (SPLIT_BT_VER), and a split mode when the current coding unit is ternary split in the vertical direction may be determined to be a ternary vertical split mode SPLIT_TT_VER.

The image decoding apparatus 100 may obtain, from the bitstream, the split shape mode information from one bin string. A form of the bitstream received by the image decoding apparatus 100 may include fixed length binary code, unary code, truncated unary code, pre-determined binary code, or the like. The bin string is information in a binary number. The bin string may include at least one bit. The image decoding apparatus 100 may obtain the split shape mode information corresponding to the bin string, based on the split rule. The image decoding apparatus 100 may determine whether to quad-split a coding unit, whether not to split a coding unit, a split direction, and a split type, based on one bin string.

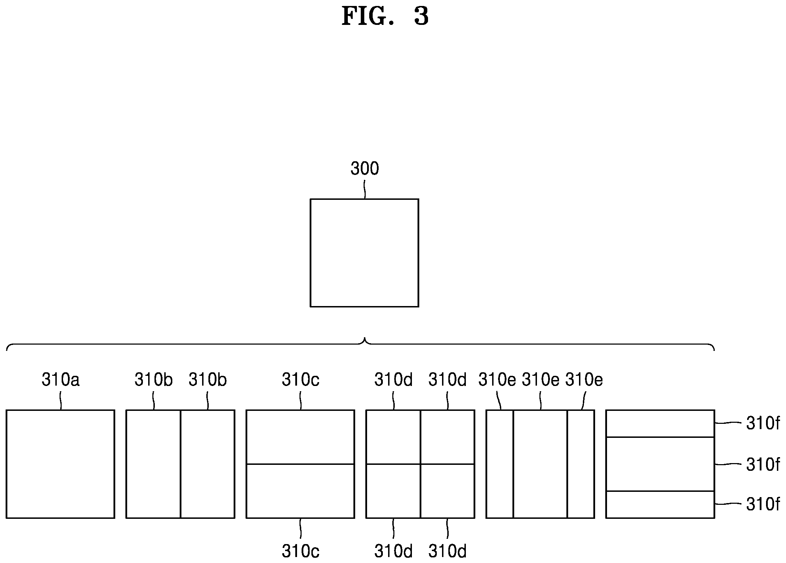

The coding unit may be smaller than or same as the CTU. For example, because a CTU is a coding unit having a maximum size, the CTU is one of coding units. When split shape mode information about a CTU indicates that splitting is not performed, a coding unit determined in the CTU has the same size as that of the CTU. When split shape code information about a CTU indicates that splitting is performed, the CTU may be split into coding units. Also, when split shape mode information about a coding unit indicates that splitting is performed, the coding unit may be split into smaller coding units. However, the splitting of the image is not limited thereto, and the CTU and the coding unit may not be distinguished. The splitting of the coding unit will be described in detail with reference to FIGS. 3 through 16.

Also, one or more prediction blocks for prediction may be determined from a coding unit. The prediction block may be the same as or smaller than the coding unit. Also, one or more transform blocks for transform may be determined from a coding unit. The transform block may be the same as or smaller than the coding unit.

The shapes and sizes of the transform block and prediction block may not be related to each other.

In another embodiment, prediction may be performed by using a coding unit as a prediction unit. Also, transform may be performed by using a coding unit as a transform block.

The splitting of the coding unit will be described in detail with reference to FIGS. 3 through 16. A current block and a neighboring block of the present disclosure may indicate one of the CTU, the coding unit, the prediction block, and the transform block. Also, the current block of the current coding unit is a block that is currently being decoded or encoded or a block that is currently being split. The neighboring block may be a block reconstructed before the current block. The neighboring block may be adjacent to the current block spatially or temporally. The neighboring block may be located at one of the lower left, left, upper left, top, upper right, right, and lower right of the current block.

Embodiments described above describe an operation related to the image decoding method performed by the image decoding apparatus 100. Hereinafter, an operation of the image encoding apparatus 200 performing an image encoding method, which corresponds to an inverse process of the image decoding method, is described according to an embodiment of the present disclosure.

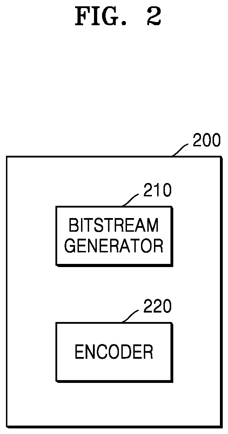

FIG. 2 is a block diagram of the image encoding apparatus 200 capable of encoding an image based on at least one of block shape information and split shape mode information, according to an embodiment of the present disclosure.

The image encoding apparatus 200 may include an encoder 220 and a bitstream generator 210. The encoder 220 may receive an input image and encode the input image. The encoder 220 may obtain at least one syntax element by encoding the input image. The syntax element may include at least one of a skip flag, a prediction mode, a motion vector difference, a motion vector prediction method (or index), a transform quantized coefficient, a coded block pattern, a coded block flag, an intra prediction mode, a direct flag, a merge flag, a delta QP, a reference index, a prediction direction, and a transform index. The encoder 220 may determine a context model based on the block shape information including at least one of a shape, a direction, a ratio between a width and a height, or a size of a coding unit.

The bitstream generator 210 may generate a bitstream based on the encoded input image. For example, the bitstream generator 210 may generate the bitstream by entropy encoding the syntax element based on the context model. Also, the image encoding apparatus 200 may transmit the bitstream to the image decoding apparatus 100.

According to an embodiment of the present disclosure, the encoder 220 of the image encoding apparatus 200 may determine a shape of the coding unit. For example, the coding unit may have a square shape or a non-square shape, and information indicating the square shape or the non-square shape may be included in the block shape information.

According to an embodiment of the present disclosure, the encoder 220 may determine into which shape the coding unit is to be split. The encoder 220 may determine a shape of at least one coding unit included in the coding unit, and the bitstream generator 210 may generate the bitstream including the split shape mode information including information about the shape of the coding unit.

According to an embodiment of the present disclosure, the encoder 220 may determine whether or not to split the coding unit. When the encoder 220 determines that only one coding unit is included in the coding unit or the coding unit is not split, the bitstream generator 210 may generate the bitstream including the split shape mode information indicating that the coding unit is not split. Also, the encoder 220 may split the coding unit into a plurality of coding units, and the bitstream generator 210 may generate the bitstream including the split shape mode information indicating that the coding unit is split into the plurality of coding units.

According to an embodiment of the present disclosure, information indicating into which number of coding units the coding unit is to be split or in which direction the coding unit is to be split may be included in the split shape mode information. For example, the split shape mode information may indicate to split the coding unit in at least one direction of a vertical direction and a horizontal direction or may indicate not to split the coding unit.

The image encoding apparatus 200 may determine information with respect to a split shape mode, based on the split shape mode of the coding unit. The image encoding apparatus 200 may determine a context model based on at least one of a shape, a direction, a ratio between a width and a height, or a size of the coding unit. Also, the image encoding apparatus 200 may generate the information with respect to the split shape mode for splitting the coding unit as a bitstream based on the context model.

In order to determine the context model, the image encoding apparatus 200 may obtain an arrangement for making a correspondence between at least one of the shape, the direction, the ratio between the width and the height, or the size of the coding unit, and an index with respect to the context model. The image encoding apparatus 200 may obtain, from the arrangement, the index with respect to the context model based on at least one of the shape, the direction, the ratio between the width and the height, or the size of the coding unit. The image encoding apparatus 200 may determine the context model based on the index with respect to the context model.

In order to determine the context model, the image encoding apparatus 200 may determine the context model further based on block shape information including at least one of a shape, a direction, a ratio between a width and a height, or a size of a neighboring coding unit adjacent to the coding unit. Also, the neighboring coding unit may include at least one of coding units located at a lower left side, a left side, an upper left side, an upper side, an upper right side, a right side, and a lower right side of the coding unit.

Also, the image encoding apparatus 200 may compare a width of the upper neighboring coding unit with a width of the coding unit, in order to determine the context model. Also, the image encoding apparatus 200 may compare heights of the left and right neighboring coding units with a height of the coding unit. Also, the image encoding apparatus 200 may determine the context model based on results of the comparison.

The operation of the image encoding apparatus 200 include similar aspects as the operation of the image decoding apparatus 100 described with reference to FIGS. 3 through 19, and thus, is not described in detail.

FIG. 3 illustrates a process, performed by the image decoding apparatus 100, of determining at least one coding unit by splitting a current coding unit, according to an embodiment of the present disclosure.

A block shape may include 4Nx4N, 4Nx2N, 2Nx4N, 4NxN, Nx4N, 32NxN, Nx32N, 16NxN, Nx16N, 8NxN, or Nx8N. Here, N may be a positive integer. Block shape information is information indicating at least one of a shape, a direction, a ratio of width and height, or a size of a coding unit.

The shape of the coding unit may include a square and a non-square. When the lengths of the width and height of the coding unit are the same (i.e., when the block shape of the coding unit is 4Nx4N), the image decoding apparatus 100 may determine the block shape information of the coding unit to be a square. The image decoding apparatus 100 may determine the shape of the coding unit to be a non-square.

When the width and the height of the coding unit are different from each other (i.e., when the block shape of the coding unit is 4Nx2N, 2Nx4N, 4NxN, Nx4N, 32NxN, Nx32N, 16NxN, Nx16N, 8NxN, or Nx8N), the image decoding apparatus 100 may determine the block shape information of the coding unit to be a non-square shape. When the shape of the coding unit is non-square, the image decoding apparatus 100 may determine the ratio of the width and height among the block shape information of the coding unit to be at least one of 1:2, 2:1, 1:4, 4:1, 1:8, 8:1, 1:16, 16:1, 1:32, and 32:1. Also, the image decoding apparatus 100 may determine whether the coding unit is in a horizontal direction or a vertical direction, based on the length of the width and the length of the height of the coding unit. Also, the image decoding apparatus 100 may determine the size of the coding unit, based on at least one of the length of the width, the length of the height, or the area of the coding unit.

According to an embodiment of the present disclosure, the image decoding apparatus 100 may determine the shape of the coding unit by using the block shape information, and may determine a splitting method of the coding unit by using the split shape mode information. That is, a coding unit splitting method indicated by the split shape mode information may be determined based on a block shape indicated by the block shape information used by the image decoding apparatus 100.

The image decoding apparatus 100 may obtain the split shape mode information from a bitstream. However, an embodiment is not limited thereto, and the image decoding apparatus 100 and the image encoding apparatus 200 may determine pre-agreed split shape mode information, based on the block shape information. The image decoding apparatus 100 may determine the pre-agreed split shape mode information with respect to a CTU or a smallest coding unit. For example, the image decoding apparatus 100 may determine split shape mode information with respect to the CTU to be a quad split. Also, the image decoding apparatus 100 may determine split shape mode information regarding the smallest coding unit to be "not to perform splitting." In particular, the image decoding apparatus 100 may determine the size of the CTU to be 256x256. The image decoding apparatus 100 may determine the pre-agreed split shape mode information to be a quad split. The quad split is a split shape mode in which the width and the height of the coding unit are both bisected. The image decoding apparatus 100 may obtain a coding unit of a 128x128 size from the CTU of a 256x256 size, based on the split shape mode information. Also, the image decoding apparatus 100 may determine the size of the smallest coding unit to be 4x4. The image decoding apparatus 100 may obtain split shape mode information indicating "not to perform splitting" with respect to the smallest coding unit.

According to an embodiment of the present disclosure, the image decoding apparatus 100 may use the block shape information indicating that the current coding unit has a square shape. For example, the image decoding apparatus 100 may determine whether not to split a square coding unit, whether to vertically split the square coding unit, whether to horizontally split the square coding unit, or whether to split the square coding unit into four coding units, based on the split shape mode information. Referring to FIG. 3, when the block shape information of a current coding unit 300 indicates a square shape, the decoder 120 may not split a coding unit 310a having the same size as the current coding unit 300, based on the split shape mode information indicating not to perform splitting, or may determine coding units 310b, 310c, 310d, 310e, or 310f split based on the split shape mode information indicating a certain splitting method.

Referring to FIG. 3, according to an embodiment of the present disclosure, the image decoding apparatus 100 may determine two coding units 310b obtained by splitting the current coding unit 300 in a vertical direction, based on the split shape mode information indicating to perform splitting in a vertical direction. The image decoding apparatus 100 may determine two coding units 310c obtained by splitting the current coding unit 300 in a horizontal direction, based on the split shape mode information indicating to perform splitting in a horizontal direction. The image decoding apparatus 100 may determine four coding units 310d obtained by splitting the current coding unit 300 in vertical and horizontal directions, based on the split shape mode information indicating to perform splitting in vertical and horizontal directions. According to an embodiment of the present disclosure, the image decoding apparatus 100 may determine three coding units 310e obtained by splitting the current coding unit 300 in a vertical direction, based on the split shape mode information indicating to perform ternary-splitting in a vertical direction. The image decoding apparatus 100 may determine three coding units 310f obtained by splitting the current coding unit 300 in a horizontal direction, based on the split shape mode information indicating to perform ternary-splitting in a horizontal direction. However, splitting methods of the square coding unit are not limited to the above-described methods, and the split shape mode information may indicate various methods. Certain splitting methods of splitting the square coding unit will be described in detail below in relation to an embodiment of the present disclosure.

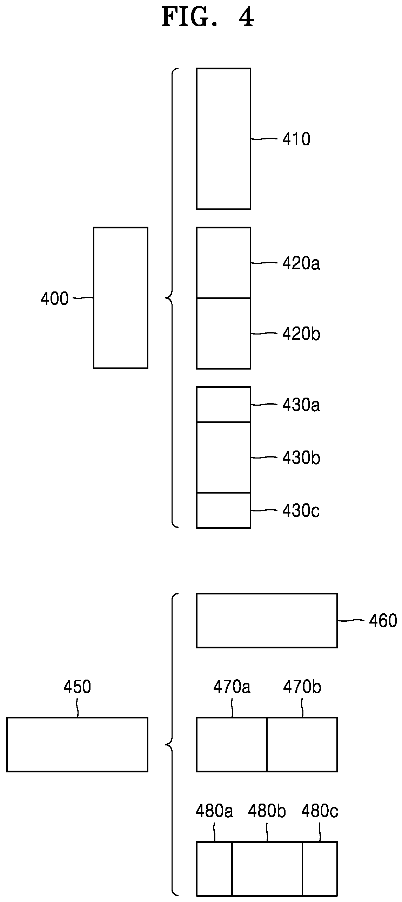

FIG. 4 illustrates a process, performed by the image decoding apparatus 100, of determining at least one coding unit by splitting a non-square coding unit, according to an embodiment of the present disclosure.

According to an embodiment of the present disclosure, the image decoding apparatus 100 may use the block shape information indicating that the current coding unit has a non-square shape. The image decoding apparatus 100 may determine whether not to split the non-square current coding unit or whether to split the non-square current coding unit by using a certain splitting method, based on split shape mode information. Referring to FIG. 4, when the block shape information of a current coding unit 400 or 450 indicates a non-square shape, the image decoding apparatus 100 may determine a coding unit 410 or 460 having the same size as the current coding unit 400 or 450, based on the split shape mode information indicating not to perform splitting, or may determine coding units 420a and 420b, 430a to 430c, 470a and 470b, or 480a to 480c split based on the split shape mode information indicating a certain splitting method. Certain splitting methods of splitting the non-square coding unit will be described in detail below in relation to an embodiment of the present disclosure.

According to an embodiment of the present disclosure, the image decoding apparatus 100 may determine a splitting method of a coding unit by using the split shape mode information and, in this case, the split shape mode information may indicate the number of one or more coding units generated by splitting a coding unit. Referring to FIG. 4, when the split shape mode information indicates to split the current coding unit 400 or 450 into two coding units, the image decoding apparatus 100 may determine two coding units 420a and 420b, or 470a and 470b included in the current coding unit 400 or 450, by splitting the current coding unit 400 or 450 based on the split shape mode information.

According to an embodiment of the present disclosure, when the image decoding apparatus 100 splits the non-square current coding unit 400 or 450 based on the split shape mode information, the image decoding apparatus 100 may consider the location of a long side of the non-square current coding unit 400 or 450 to split a current coding unit. For example, the image decoding apparatus 100 may determine a plurality of coding units by splitting a long side of the current coding unit 400 or 450, based on the shape of the current coding unit 400 or 450.

According to an embodiment of the present disclosure, when the split shape mode information indicates to split (ternary-split) a coding unit into an odd number of blocks, the image decoding apparatus 100 may determine an odd number of coding units included in the current coding unit 400 or 450. For example, when the split shape mode information indicates to split the current coding unit 400 or 450 into three coding units, the image decoding apparatus 100 may split the current coding unit 400 or 450 into three coding units 430a, 430b, and 430c, or 480a, 480b, and 480c.

According to an embodiment of the present disclosure, a ratio of the width and height of the current coding unit 400 or 450 may be 4:1 or 1:4. When the ratio of the width and height is 4:1, the block shape information may be a horizontal direction because the length of the width is longer than the length of the height. When the ratio of the width and height is 1:4, the block shape information may be a vertical direction because the length of the width is shorter than the length of the height. The image decoding apparatus 100 may determine to split a current coding unit into the odd number of blocks, based on the split shape mode information. Also, the image decoding apparatus 100 may determine a split direction of the current coding unit 400 or 450, based on the block shape information of the current coding unit 400 or 450. For example, when the current coding unit 400 is in the vertical direction, the image decoding apparatus 100 may determine the coding units 430a to 430c by splitting the current coding unit 400 in the horizontal direction. Also, when the current coding unit 450 is in the horizontal direction, the image decoding apparatus 100 may determine the coding units 480a to 480c by splitting the current coding unit 450 in the vertical direction.

According to an embodiment of the present disclosure, the image decoding apparatus 100 may determine the odd number of coding units included in the current coding unit 400 or 450, and not all the determined coding units may have the same size. For example, a certain coding unit 430b or 480b from among the determined odd number of coding units 430a, 430b, and 430c, or 480a, 480b, and 480c may have a size different from the size of the other coding units 430a and 430c, or 480a and 480c. That is, coding units which may be determined by splitting the current coding unit 400 or 450 may have multiple sizes and, in some cases, all of the odd number of coding units 430a, 430b, and 430c, or 480a, 480b, and 480c may have different sizes.

According to an embodiment of the present disclosure, when the split shape mode information indicates to split a coding unit into the odd number of blocks, the image decoding apparatus 100 may determine the odd number of coding units included in the current coding unit 400 or 450, and in addition, may put a certain restriction on at least one coding unit from among the odd number of coding units generated by splitting the current coding unit 400 or 450. Referring to FIG. 4, the image decoding apparatus 100 may set a decoding process regarding the coding unit 430b or 480b located at the center among the three coding units 430a, 430b, and 430c or 480a, 480b, and 480c generated as the current coding unit 400 or 450 is split to be different from that of the other coding units 430a and 430c, or 480a or 480c. For example, the image decoding apparatus 100 may restrict the coding unit 430b or 480b at the center location to be no longer split or to be split only a certain number of times, unlike the other coding units 430a and 430c, or 480a and 480c.

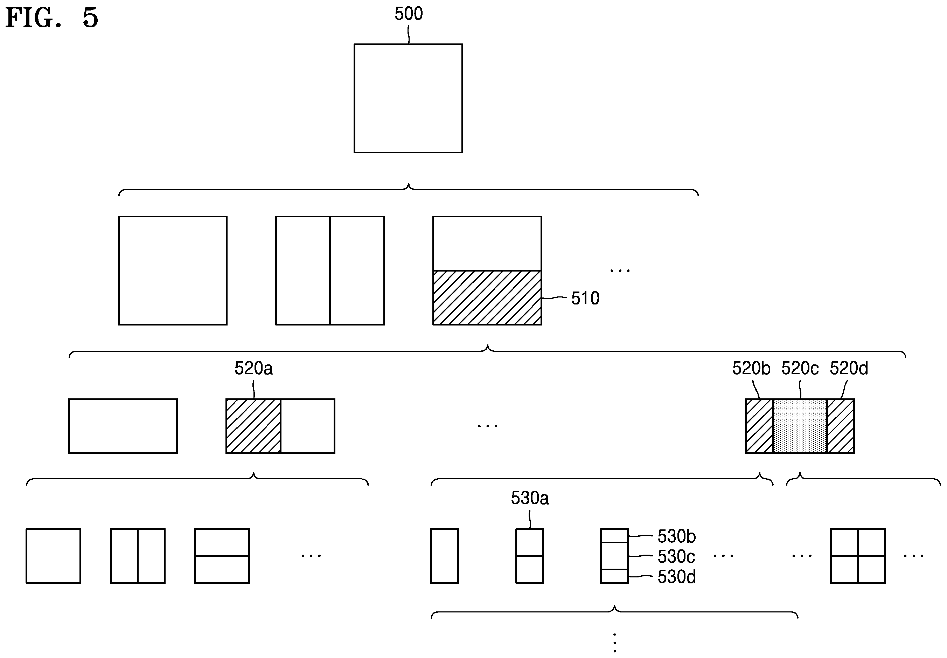

FIG. 5 illustrates a process, performed by the image decoding apparatus 100, of splitting a coding unit, based on at least one of block shape information and split shape mode information, according to an embodiment of the present disclosure.

According to an embodiment of the present disclosure, the image decoding apparatus 100 may determine to split or not to split a square first coding unit 500 into coding units, based on at least one of the block shape information and the split shape mode information. According to an embodiment of the present disclosure, when the split shape mode information indicates to split the first coding unit 500 in a horizontal direction, the image decoding apparatus 100 may determine a second coding unit 510 by splitting the first coding unit 500 in a horizontal direction. A first coding unit, a second coding unit, and a third coding unit used according to an embodiment of the present disclosure are terms used to understand a relation before and after splitting a coding unit. For example, a second coding unit may be determined by splitting a first coding unit, and a third coding unit may be determined by splitting the second coding unit. It will be understood that the structure of the first coding unit, the second coding unit, and the third coding unit follows the above descriptions.

According to an embodiment of the present disclosure, the image decoding apparatus 100 may determine to split or not to split the determined second coding unit 510 into coding units, based on the split shape mode information. Referring to FIG. 5, the image decoding apparatus 100 may or may not split the non-square second coding unit 510, which is determined by splitting the first coding unit 500, into one or more third coding units 520a, or 520b, 520c, and 520d based on the split shape mode information. The image decoding apparatus 100 may obtain the split shape mode information and may split a plurality of various-shaped second coding units (e.g., 510) by splitting the first coding unit 500 based on the obtained split shape mode information, and the second coding unit 510 may be split by using a splitting method of the first coding unit 500 based on the split shape mode information. According to an embodiment of the present disclosure, when the first coding unit 500 is split into the second coding units 510 based on the split shape mode information of the first coding unit 500, the second coding unit 510 may also be split into the third coding units 520a, or 520b, 520c, and 520d based on the split shape mode information of the second coding unit 510. That is, a coding unit may be recursively split based on the split shape mode information of each coding unit. Therefore, a square coding unit may be determined by splitting a non-square coding unit, and a non-square coding unit may be determined by recursively splitting the square coding unit.

Referring to FIG. 5, a certain coding unit from among the odd number of third coding units 520b, 520c, and 520d determined by splitting the non-square second coding unit 510 (e.g., a coding unit at a center location or a square coding unit) may be recursively split. According to an embodiment of the present disclosure, the non-square third coding unit 520b from among the odd number of third coding units 520b, 520c, and 520d may be split in a horizontal direction into a plurality of fourth coding units. A non-square fourth coding unit 530b or 530d from among a plurality of fourth coding units 530a, 530b, 530c, and 530d may be split into a plurality of coding units again. For example, the non-square fourth coding unit 530b or 530d may be split into the odd number of coding units again. A method that may be used to recursively split a coding unit will be described below in relation to an embodiment of the present disclosure.

According to an embodiment of the present disclosure, the image decoding apparatus 100 may split each of the third coding units 520a, or 520b, 520c, and 520d into coding units, based on the split shape mode information. Also, the image decoding apparatus 100 may determine not to split the second coding unit 510 based on the split shape mode information. According to an embodiment of the present disclosure, the image decoding apparatus 100 may split the non-square second coding unit 510 into the odd number of third coding units 520b, 520c, and 520d. The image decoding apparatus 100 may put a certain restriction on a certain third coding unit from among the odd number of third coding units 520b, 520c, and 520d. For example, the image decoding apparatus 100 may restrict the third coding unit 520c at a center location from among the odd number of third coding units 520b, 520c, and 520d to be no longer split or to be split a settable number of times.

Referring to FIG. 5, the image decoding apparatus 100 may restrict the third coding unit 520c, which is at the center location from among the odd number of third coding units 520b, 520c, and 520d included in the non-square second coding unit 510, to be no longer split, to be split by using a certain splitting method (e.g., split into only four coding units or split by using a splitting method of the second coding unit 510), or to be split only a certain number of times (e.g., split only n times (where n>0)). However, the restrictions on the third coding unit 520c at the center location are not limited to the above-described examples, and may include various restrictions for decoding the third coding unit 520c at the center location differently from the other third coding units 520b and 520d.

According to an embodiment of the present disclosure, the image decoding apparatus 100 may obtain the split shape mode information, which is used to split a current coding unit, from a certain location in the current coding unit.

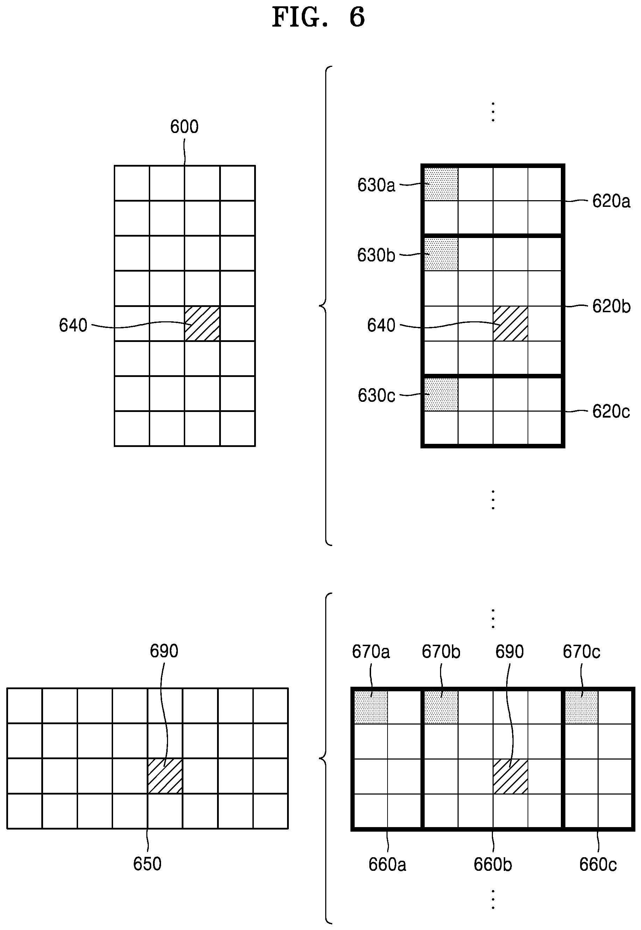

FIG. 6 illustrates a method, performed by the image decoding apparatus 100, of determining a certain coding unit from among an odd number of coding units, according to an embodiment of the present disclosure.

Referring to FIG. 6, split shape mode information of a current coding unit 600 or 650 may be obtained from a sample of a certain location (e.g., a sample 640 or 690 of a center location) from among a plurality of samples included in the current coding unit 600 or 650. However, the certain location in the current coding unit 600, from which at least one piece of the split shape mode information may be obtained, is not limited to the center location in FIG. 6, and may include various locations included in the current coding unit 600 (e.g., top, bottom, left, right, upper left, lower left, upper right, and lower right locations). The image decoding apparatus 100 may obtain the split shape mode information from the certain location and may determine to split or not to split the current coding unit into various-shaped and various-sized coding units.

According to an embodiment of the present disclosure, when the current coding unit is split into a certain number of coding units, the image decoding apparatus 100 may select one of the coding units. Various methods may be used to select one of a plurality of coding units, as will be described below in relation to an embodiment of the present disclosure.

According to an embodiment of the present disclosure, the image decoding apparatus 100 may split the current coding unit into a plurality of coding units, and may determine a coding unit at a certain location.

According to an embodiment of the present disclosure, image decoding apparatus 100 may use information indicating locations of the odd number of coding units, to determine a coding unit at a center location from among the odd number of coding units. Referring to FIG. 6, the image decoding apparatus 100 may determine the odd number of coding units 620a, 620b, and 620c or the odd number of coding units 660a, 660b, and 660c by splitting the current coding unit 600 or the current coding unit 650. The image decoding apparatus 100 may determine the middle coding unit 620b or the middle coding unit 660b by using information about the locations of the odd number of coding units 620a, 620b, and 620c or the odd number of coding units 660a, 660b, and 660c. For example, the image decoding apparatus 100 may determine the coding unit 620b of the center location by determining the locations of the coding units 620a, 620b, and 620c based on information indicating locations of certain samples included in the coding units 620a, 620b, and 620c. In detail, the image decoding apparatus 100 may determine the coding unit 620b at the center location by determining the locations of the coding units 620a, 620b, and 620c based on information indicating locations of upper left samples 630a, 630b, and 630c of the coding units 620a, 620b, and 620c.

According to an embodiment of the present disclosure, the information indicating the locations of the upper left samples 630a, 630b, and 630c, which are included in the coding units 620a, 620b, and 620c, respectively, may include information about locations or coordinates of the coding units 620a, 620b, and 620c in a picture. According to an embodiment of the present disclosure, the information indicating the locations of the upper left samples 630a, 630b, and 630c, which are included in the coding units 620a, 620b, and 620c, respectively, may include information indicating widths or heights of the coding units 620a, 620b, and 620c included in the current coding unit 600, and the widths or heights may correspond to information indicating differences between the coordinates of the coding units 620a, 620b, and 620c in the picture. That is, the image decoding apparatus 100 may determine the coding unit 620b at the center location by directly using the information about the locations or coordinates of the coding units 620a, 620b, and 620c in the picture, or by using the information about the widths or heights of the coding units, which correspond to the difference values between the coordinates.

According to an embodiment of the present disclosure, information indicating the location of the upper left sample 630a of the upper coding unit 620a may include coordinates (xa, ya), information indicating the location of the upper left sample 630b of the middle coding unit 620b may include coordinates (xb, yb), and information indicating the location of the upper left sample 630c of the lower coding unit 620c may include coordinates (xc, yc). The image decoding apparatus 100 may determine the middle coding unit 620b by using the coordinates of the upper left samples 630a, 630b, and 630c which are included in the coding units 620a, 620b, and 620c, respectively. For example, when the coordinates of the upper left samples 630a, 630b, and 630c are sorted in an ascending or descending order, the coding unit 620b including the coordinates (xb, yb) of the sample 630b at a center location may be determined as a coding unit at a center location from among the coding units 620a, 620b, and 620c determined by splitting the current coding unit 600. However, the coordinates indicating the locations of the upper left samples 630a, 630b, and 630c may include coordinates indicating absolute locations in the picture, or may use coordinates (dxb, dyb) indicating a relative location of the upper left sample 630b of the middle coding unit 620b and coordinates (dxc, dyc) indicating a relative location of the upper left sample 630c of the lower coding unit 620c with reference to the location of the upper left sample 630a of the upper coding unit 620a. A method of determining a coding unit at a certain location by using coordinates of a sample included in the coding unit, as information indicating a location of the sample, is not limited to the above-described method, and may include various arithmetic methods capable of using the coordinates of the sample.

According to an embodiment of the present disclosure, the image decoding apparatus 100 may split the current coding unit 600 into a plurality of coding units 620a, 620b, and 620c, and may select one of the coding units 620a, 620b, and 620c based on a certain criterion. For example, the image decoding apparatus 100 may select the coding unit 620b, which has a size different from that of the others, from among the coding units 620a, 620b, and 620c.

According to an embodiment of the present disclosure, the image decoding apparatus 100 may determine the width or height of each of the coding units 620a, 620b, and 620c by using the coordinates (xa, ya) that is the information indicating the location of the upper left sample 630a of the upper coding unit 620a, the coordinates (xb, yb) that is the information indicating the location of the upper left sample 630b of the middle coding unit 620b, and the coordinates (xc, yc) that is the information indicating the location of the upper left sample 630c of the lower coding unit 620c. The image decoding apparatus 100 may determine the respective sizes of the coding units 620a, 620b, and 620c by using the coordinates (xa, ya), (xb, yb), and (xc, yc) indicating the locations of the coding units 620a, 620b, and 620c. According to an embodiment of the present disclosure, the image decoding apparatus 100 may determine the width of the upper coding unit 620a to be the width of the current coding unit 600. The image decoding apparatus 100 may determine the height of the upper coding unit 620a to be yb-ya. According to an embodiment of the present disclosure, the image decoding apparatus 100 may determine the width of the middle coding unit 620b to be the width of the current coding unit 600. The image decoding apparatus 100 may determine the height of the middle coding unit 620b to be yc-yb. According to an embodiment of the present disclosure, the image decoding apparatus 100 may determine the width or height of the lower coding unit 620c by using the width or height of the current coding unit 600 or the widths or heights of the upper and middle coding units 620a and 620b. The image decoding apparatus 100 may determine a coding unit, which has a size different from that of the others, based on the determined widths and heights of the coding units 620a to 620c. Referring to FIG. 6, the image decoding apparatus 100 may determine the middle coding unit 620b, which has a size different from the size of the upper and lower coding units 620a and 620c, as the coding unit of the certain location. However, the above-described method, performed by the image decoding apparatus 100, of determining a coding unit having a size different from the size of the other coding units merely corresponds to an example of determining a coding unit at a certain location by using the sizes of coding units, which are determined based on coordinates of samples, and thus, various methods of determining a coding unit at a certain location by comparing the sizes of coding units, which are determined based on coordinates of certain samples, may be used.

The image decoding apparatus 100 may determine the width or height of each of the coding units 660a, 660b, and 660c by using the coordinates (xd, yd) that is information indicating the location of an upper left sample 670a of the left coding unit 660a, the coordinates (xe, ye) that is information indicating the location of an upper left sample 670b of the middle coding unit 660b, and the coordinates (xf, yf) that is information indicating a location of the upper left sample 670c of the right coding unit 660c. The image decoding apparatus 100 may determine the respective sizes of the coding units 660a, 660b, and 660c by using the coordinates (xd, yd), (xe, ye), and (xf, yf) indicating the locations of the coding units 660a, 660b, and 660c.

According to an embodiment of the present disclosure, the image decoding apparatus 100 may determine the width of the left coding unit 660a to be xe-xd. The image decoding apparatus 100 may determine the height of the left coding unit 660a to be the height of the current coding unit 650. According to an embodiment of the present disclosure, the image decoding apparatus 100 may determine the width of the middle coding unit 660b to be xf-xe. The image decoding apparatus 100 may determine the height of the middle coding unit 660b to be the height of the current coding unit 600. According to an embodiment of the present disclosure, the image decoding apparatus 100 may determine the width or height of the right coding unit 660c by using the width or height of the current coding unit 650 or the widths or heights of the left and middle coding units 660a and 660b. The image decoding apparatus 100 may determine a coding unit, which has a size different from that of the others, based on the determined widths and heights of the coding units 660a to 660c. Referring to FIG. 6, the image decoding apparatus 100 may determine the middle coding unit 660b, which has a size different from the sizes of the left and right coding units 660a and 660c, as the coding unit of the certain location. However, the above-described method, performed by the image decoding apparatus 100, of determining a coding unit having a size different from the size of the other coding units merely corresponds to an example of determining a coding unit at a certain location by using the sizes of coding units, which are determined based on coordinates of samples, and thus, various methods of determining a coding unit at a certain location by comparing the sizes of coding units, which are determined based on coordinates of certain samples, may be used.

However, locations of samples considered to determine locations of coding units are not limited to the above-described upper left locations, and information about arbitrary locations of samples included in the coding units may be used.

According to an embodiment of the present disclosure, the image decoding apparatus 100 may select a coding unit at a certain location from among an odd number of coding units determined by splitting the current coding unit, considering the shape of the current coding unit. For example, when the current coding unit has a non-square shape, a width of which is longer than a height, the image decoding apparatus 100 may determine the coding unit at the certain location in a horizontal direction. That is, the image decoding apparatus 100 may determine one of coding units, locations of which are different in the horizontal direction, and put a restriction on the coding unit. When the current coding unit has a non-square shape, a height of which is longer than a width, the image decoding apparatus 100 may determine the coding unit at the certain location in a vertical direction. That is, the image decoding apparatus 100 may determine one of coding units, locations of which are different in the vertical direction, and may put a restriction on the coding unit.

According to an embodiment of the present disclosure, the image decoding apparatus 100 may use information indicating respective locations of an even number of coding units, to determine the coding unit at the certain location from among the even number of coding units. The image decoding apparatus 100 may determine an even number of coding units by splitting (binary-splitting) the current coding unit, and may determine the coding unit at the certain location by using the information about the locations of the even number of coding units. An operation related thereto may correspond to the operation of determining a coding unit at a certain location (e.g., a center location) from among an odd number of coding units, which has been described in detail above in relation to FIG. 6, and thus, detailed descriptions thereof are not provided here.

According to an embodiment of the present disclosure, when a non-square current coding unit is split into a plurality of coding units, certain information about a coding unit at a certain location may be used in a splitting operation to determine the coding unit at the certain location from among the plurality of coding units. For example, the image decoding apparatus 100 may use at least one of block shape information and split shape mode information, which is stored in a sample included in a middle coding unit, in a splitting operation to determine a coding unit at a center location from among the plurality of coding units determined by splitting the current coding unit.

Referring to FIG. 6, the image decoding apparatus 100 may split the current coding unit 600 into the plurality of coding units 620a, 620b, and 620c based on the split shape mode information, and may determine the coding unit 620b at a center location from among the plurality of the coding units 620a, 620b, and 620c. Furthermore, the image decoding apparatus 100 may determine the coding unit 620b at the center location, based on a location from which the split shape mode information is obtained. That is, the split shape mode information of the current coding unit 600 may be obtained from the sample 640 at a center location of the current coding unit 600 and, when the current coding unit 600 is split into the plurality of coding units 620a, 620b, and 620c based on the split shape mode information, the coding unit 620b including the sample 640 may be determined as the coding unit at the center location. However, information used to determine the coding unit at the center location is not limited to the split shape mode information, and various types of information may be used to determine the coding unit at the center location.

According to an embodiment of the present disclosure, certain information for identifying the coding unit at the certain location may be obtained from a certain sample included in a coding unit to be determined. Referring to FIG. 6, the image decoding apparatus 100 may use the split shape mode information, which is obtained from a sample at a certain location in the current coding unit 600 (e.g., a sample at a center location of the current coding unit 600) to determine a coding unit at a certain location from among the plurality of the coding units 620a, 620b, and 620c determined by splitting the current coding unit 600 (e.g., a coding unit at a center location from among a plurality of split coding units). That is, the image decoding apparatus 100 may determine the sample at the certain location by considering a block shape of the current coding unit 600, determine the coding unit 620b including a sample, from which certain information (e.g., the split shape mode information) may be obtained, from among the plurality of coding units 620a, 620b, and 620c determined by splitting the current coding unit 600, and may put a certain restriction on the coding unit 620b. Referring to FIG. 6, according to an embodiment of the present disclosure, the image decoding apparatus 100 may determine the sample 640 at the center location of the current coding unit 600 as the sample from which the certain information may be obtained, and may put a certain restriction on the coding unit 620b including the sample 640, in a decoding operation. However, the location of the sample from which the certain information may be obtained is not limited to the above-described location, and may include arbitrary locations of samples included in the coding unit 620b to be determined for a restriction.

According to an embodiment of the present disclosure, the location of the sample from which the certain information may be obtained may be determined based on the shape of the current coding unit 600. According to an embodiment of the present disclosure, the block shape information may indicate whether the current coding unit has a square or non-square shape, and the location of the sample from which the certain information may be obtained may be determined based on the shape. For example, the image decoding apparatus 100 may determine a sample located on a boundary for splitting at least one of a width and height of the current coding unit in half, as the sample from which the certain information may be obtained, by using at least one of information about the width of the current coding unit and information about the height of the current coding unit. As another example, when the block shape information of the current coding unit indicates a non-square shape, the image decoding apparatus 100 may determine one of samples adjacent to a boundary for splitting a long side of the current coding unit in half, as the sample from which the certain information may be obtained.

According to an embodiment of the present disclosure, when the current coding unit is split into a plurality of coding units, the image decoding apparatus 100 may use the split shape mode information to determine a coding unit at a certain location from among the plurality of coding units. According to an embodiment of the present disclosure, the image decoding apparatus 100 may obtain the split shape mode information from a sample at a certain location in a coding unit, and split the plurality of coding units, which are generated by splitting the current coding unit, by using the split shape mode information, which is obtained from the sample of the certain location in each of the plurality of coding units. That is, a coding unit may be recursively split based on the split shape mode information, which is obtained from the sample at the certain location in each coding unit. An operation of recursively splitting a coding unit has been described above in relation to FIG. 5, and thus, detailed descriptions thereof will not be provided here.

According to an embodiment of the present disclosure, the image decoding apparatus 100 may determine one or more coding units by splitting the current coding unit, and may determine an order of decoding the one or more coding units, based on a certain block (e.g., the current coding unit).

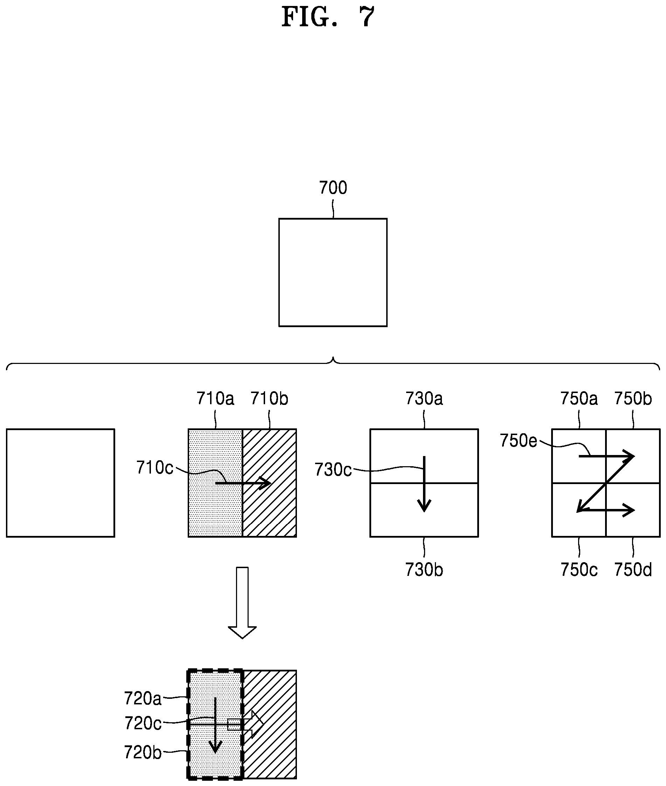

FIG. 7 illustrates an order of processing a plurality of coding units when the image decoding apparatus 100 determines the plurality of coding units by splitting a current coding unit, according to an embodiment of the present disclosure.

According to an embodiment of the present disclosure, the image decoding apparatus 100 may determine second coding units 710a and 710b by splitting a first coding unit 700 in a vertical direction, determine second coding units 730a and 730b by splitting the first coding unit 700 in a horizontal direction, or determine second coding units 750a to 750d by splitting the first coding unit 700 in vertical and horizontal directions, based on split shape mode information.

Referring to FIG. 7, the image decoding apparatus 100 may determine to process the second coding units 710a and 710b, which are determined by splitting the first coding unit 700 in a vertical direction, in a horizontal direction order 710c. The image decoding apparatus 100 may determine to process the second coding units 730a and 730b, which are determined by splitting the first coding unit 700 in a horizontal direction, in a vertical direction order 730c. The image decoding apparatus 100 may determine to process the second coding units 750a to 750d, which are determined by splitting the first coding unit 700 in vertical and horizontal directions, in a certain order for processing coding units in a row and then processing coding units in a next row (e.g., in a raster scan order or Z-scan order 750e).

According to an embodiment of the present disclosure, the image decoding apparatus 100 may recursively split coding units. Referring to FIG. 7, the image decoding apparatus 100 may determine the plurality of coding units 710a and 710b, 730a and 730b, or 750a to 750d by splitting the first coding unit 700, and recursively split each of the determined plurality of coding units 710a and 710b, 730a and 730b, or 750a to 750d. A splitting method of the plurality of coding units 710a and 710b, 730a and 730b, or 750a to 750d may correspond to a splitting method of the first coding unit 700. As such, each of the plurality of coding units 710a and 710b, 730a and 730b, or 750a to 750d may be independently split into a plurality of coding units. Referring to FIG. 7, the image decoding apparatus 100 may determine the second coding units 710a and 710b by splitting the first coding unit 700 in a vertical direction, and may determine to independently split or not to split each of the second coding units 710a and 710b.

According to an embodiment of the present disclosure, the image decoding apparatus 100 may determine third coding units 720a and 720b by splitting the left second coding unit 710a in a horizontal direction, and may not split the right second coding unit 710b.

According to an embodiment of the present disclosure, a processing order of coding units may be determined based on an operation of splitting a coding unit. In other words, a processing order of split coding units may be determined based on a processing order of coding units immediately before being split. The image decoding apparatus 100 may determine a processing order of the third coding units 720a and 720b determined by splitting the left second coding unit 710a, independently of the right second coding unit 710b. Because the third coding units 720a and 720b are determined by splitting the left second coding unit 710a in a horizontal direction, the third coding units 720a and 720b may be processed in a vertical direction order 720c. Because the left and right second coding units 710a and 710b are processed in the horizontal direction order 710c, the right second coding unit 710b may be processed after the third coding units 720a and 720b included in the left second coding unit 710a are processed in the vertical direction order 720c. An operation of determining a processing order of coding units based on a coding unit before being split is not limited to the above-described example, and various methods may be used to independently process coding units, which are split and determined to have various shapes, in a certain order.

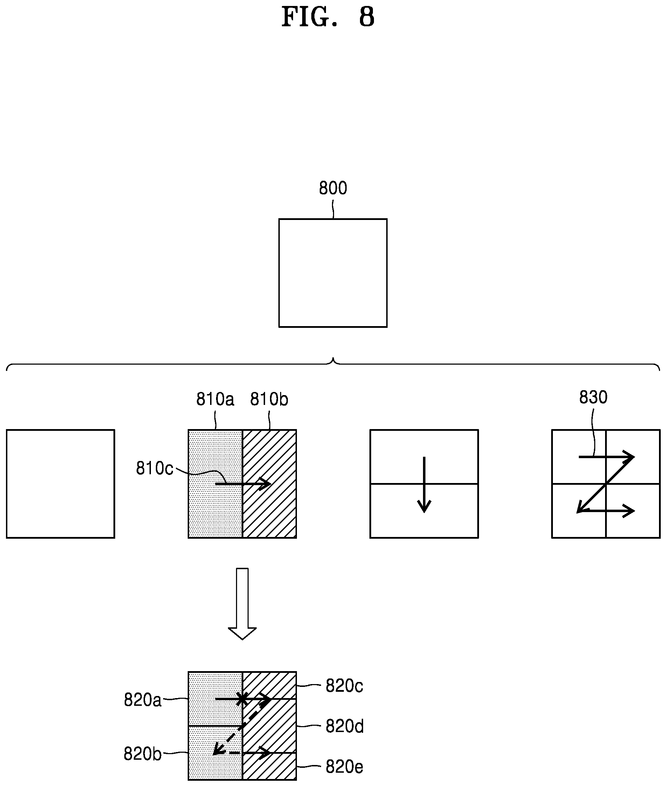

FIG. 8 illustrates a process in which, when coding units are not processable in a certain order, an image decoding apparatus determines that a current coding unit is split into an odd number of coding units, according to an embodiment of the present disclosure.

According to an embodiment of the present disclosure, the image decoding apparatus 100 may determine that the current coding unit is split into an odd number of coding units, based on obtained split shape mode information. Referring to FIG. 8, a square first coding unit 800 may be split into non-square second coding units 810a and 810b, and the second coding units 810a and 810b may be independently split into third coding units 820a and 820b, and 820c to 820e. According to an embodiment of the present disclosure, the image decoding apparatus 100 may determine the plurality of third coding units 820a and 820b by splitting the left second coding unit 810a in a horizontal direction, and may split the right second coding unit 810b into the odd number of third coding units 820c to 820e.

According to an embodiment of the present disclosure, the image decoding apparatus 100 may determine whether any coding unit is split into an odd number of coding units, by determining whether the third coding units 820a and 820b, and 820c to 820e are processable in a certain order. Referring to FIG. 8, the image decoding apparatus 100 may determine the third coding units 820a and 820b, and 820c to 820e by recursively splitting the first coding unit 800. The image decoding apparatus 100 may determine whether any of the first coding unit 800, the second coding units 810a and 810b, and the third coding units 820a and 820b, and 820c to 820e are split into an odd number of coding units, based on at least one of the block shape information and the split shape mode information. For example, the right second coding unit 810b among the second coding units 810a and 810b may be split into an odd number of third coding units 820c, 820d, and 820e. A processing order of a plurality of coding units included in the first coding unit 800 may be a certain order (e.g., a Z-scan order 830), and the image decoding apparatus 100 may determine whether the third coding units 820c, 820d, and 820e, which are determined by splitting the right second coding unit 810b into an odd number of coding units, satisfy a condition for processing in the certain order.

According to an embodiment of the present disclosure, the image decoding apparatus 100 may determine whether the third coding units 820a and 820b, and 820c to 820e included in the first coding unit 800 satisfy the condition for processing in the certain order, and the condition relates to whether at least one of a width and height of the second coding units 810a and 810b is split in half along a boundary of the third coding units 820a and 820b, and 820c to 820e. For example, the third coding units 820a and 820b determined when the height of the left second coding unit 810a of the non-square shape is split in half may satisfy the condition. It may be determined that the third coding units 820c to 820e do not satisfy the condition because the boundaries of the third coding units 820c to 820e determined when the right second coding unit 810b is split into three coding units are unable to split the width or height of the right second coding unit 810b in half. When the condition is not satisfied as described above, the image decoding apparatus 100 may determine disconnection of a scan order, and may determine that the right second coding unit 810b is split into an odd number of coding units, based on a result of the determination. According to an embodiment of the present disclosure, when a coding unit is split into an odd number of coding units, the image decoding apparatus 100 may put a certain restriction on a coding unit at a certain location from among the split coding units. The restriction or the certain location has been described above in relation to an embodiment of the present disclosure, and thus, detailed descriptions thereof will not be provided herein.

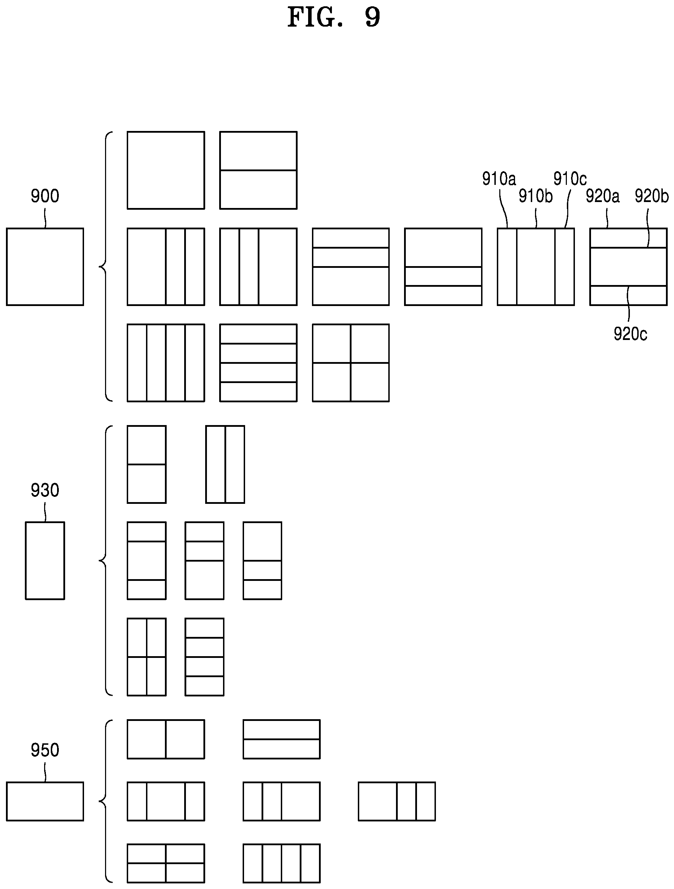

FIG. 9 illustrates a process, performed by the image decoding apparatus 100, of determining at least one coding unit by splitting a first coding unit 900, according to an embodiment of the present disclosure.

According to an embodiment of the present disclosure, the image decoding apparatus 100 may split the first coding unit 900, based on split shape mode information, which is obtained through the bitstream obtainer 110. The square first coding unit 900 may be split into four square coding units, or may be split into a plurality of non-square coding units. For example, referring to FIG. 9, when the split shape mode information indicates to split the first coding unit 900 into non-square coding units, the image decoding apparatus 100 may split the first coding unit 900 into a plurality of non-square coding units. In detail, when the split shape mode information indicates to determine an odd number of coding units by splitting the first coding unit 900 in a horizontal direction or a vertical direction, the image decoding apparatus 100 may split the square first coding unit 900 into an odd number of coding units, e.g., second coding units 910a, 910b, and 910c determined by splitting the square first coding unit 900 in a vertical direction or second coding units 920a, 920b, and 920c determined by splitting the square first coding unit 900 in a horizontal direction.

According to an embodiment of the present disclosure, the image decoding apparatus 100 may determine whether the second coding units 910a, 910b, 910c, 920a, 920b, and 920c included in the first coding unit 900 satisfy a condition for processing in a certain order, and the condition relates to whether at least one of a width and height of the first coding unit 900 is split in half along a boundary of the second coding units 910a, 910b, 910c, 920a, 920b, and 920c. Referring to FIG. 9, because boundaries of the second coding units 910a, 910b, and 910c determined by splitting the square first coding unit 900 in a vertical direction do not split the width of the first coding unit 900 in half, it may be determined that the first coding unit 900 does not satisfy the condition for processing in the certain order. In addition, because boundaries of the second coding units 920a, 920b, and 920c determined by splitting the square first coding unit 900 in a horizontal direction do not split the height of the first coding unit 900 in half, it may be determined that the first coding unit 900 does not satisfy the condition for processing in the certain order. When the condition is not satisfied as described above, the image decoding apparatus 100 may decide disconnection of a scan order, and may determine that the first coding unit 900 is split into an odd number of coding units, based on a result of the decision. According to an embodiment of the present disclosure, when a coding unit is split into an odd number of coding units, the image decoding apparatus 100 may put a certain restriction on a coding unit at a certain location from among the split coding units. The restriction or the certain location has been described above in relation to an embodiment of the present disclosure, and thus, detailed descriptions thereof will not be provided herein.

According to an embodiment of the present disclosure, the image decoding apparatus 100 may determine various-shaped coding units by splitting a first coding unit.

Referring to FIG. 9, the image decoding apparatus 100 may split the square first coding unit 900 or a non-square first coding unit 930 or 950 into various-shaped coding units.

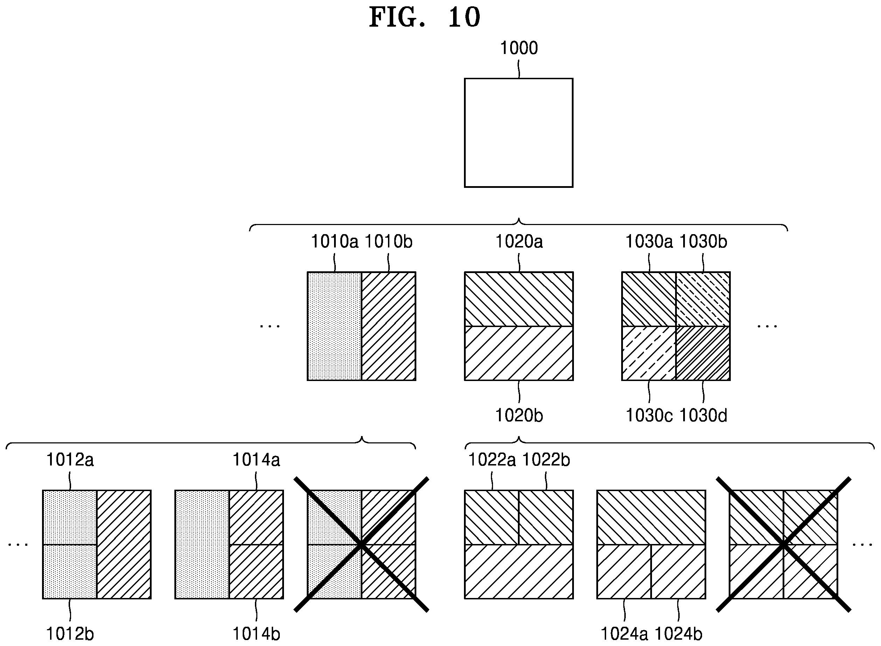

FIG. 10 illustrates that a shape into which a second coding unit is splittable is restricted when the second coding unit having a non-square shape, determined when the image decoding apparatus 100 splits a first coding unit 1000, satisfies a certain condition, according to an embodiment of the present disclosure.

According to an embodiment of the present disclosure, the image decoding apparatus 100 may determine to split the square first coding unit 1000 into non-square second coding units 1010a and 1010b or 1020a and 1020b, based on split shape mode information, which is obtained by the bitstream obtainer 110. The second coding units 1010a and 1010b or 1020a and 1020b may be independently split. As such, the image decoding apparatus 100 may determine to split or not to split each of the second coding units 1010a and 1010b or 1020a and 1020b into a plurality of coding units, based on the split shape mode information of each of the second coding units 1010a and 1010b or 1020a and 1020b. According to an embodiment of the present disclosure, the image decoding apparatus 100 may determine third coding units 1012a and 1012b by splitting the non-square left second coding unit 1010a, which is determined by splitting the first coding unit 1000 in a vertical direction, in a horizontal direction. However, when the left second coding unit 1010a is split in a horizontal direction, the image decoding apparatus 100 may restrict the right second coding unit 1010b not to be split in a horizontal direction in which the left second coding unit 1010a is split. When third coding units 1014a and 1014b are determined by splitting the right second coding unit 1010b in a same direction, because the left and right second coding units 1010a and 1010b are independently split in a horizontal direction, the third coding units 1012a and 1012b or 1014a and 1014b may be determined. However, this case serves equally as a case in which the image decoding apparatus 100 splits the first coding unit 1000 into four square second coding units 1030a, 1030b, 1030c, and 1030d, based on the split shape mode information, and may be inefficient in terms of image decoding.

According to an embodiment of the present disclosure, the image decoding apparatus 100 may determine third coding units 1022a and 1022b or 1024a and 1024b by splitting the non-square second coding unit 1020a or 1020b, which is determined by splitting the first coding unit 1000 in a horizontal direction, in a vertical direction. However, when a second coding unit (e.g., the upper second coding unit 1020a) is split in a vertical direction, for the above-described reason, the image decoding apparatus 100 may restrict the other second coding unit (e.g., the lower second coding unit 1020b) not to be split in a vertical direction in which the upper second coding unit 1020a is split.

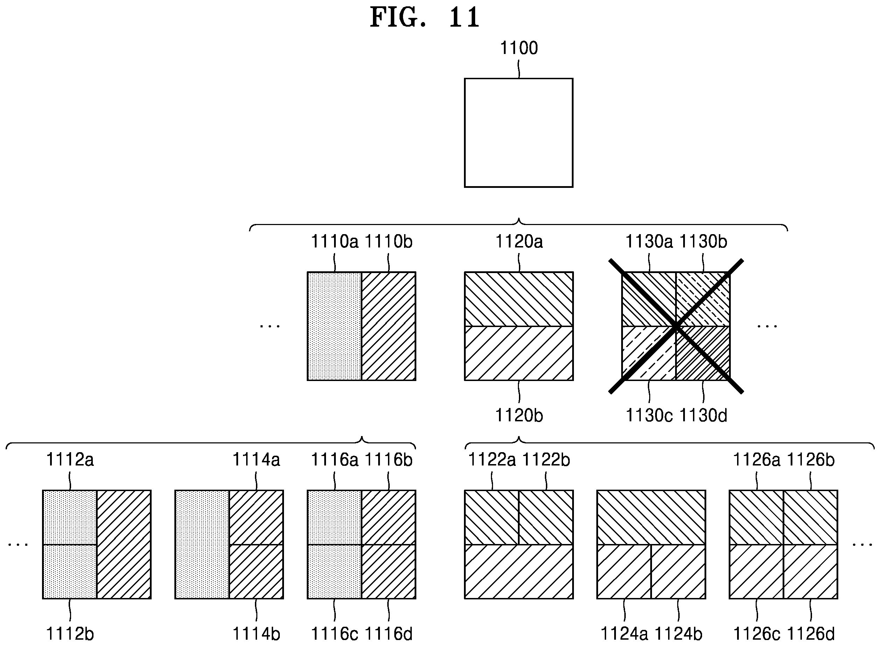

FIG. 11 illustrates a process, performed by the image decoding apparatus 100, of splitting a square coding unit when split shape mode information is unable to indicate that the square coding unit is split into four square coding units, according to an embodiment of the present disclosure.

According to an embodiment of the present disclosure, the image decoding apparatus 100 may determine second coding units 1110a and 1110b or 1120a and 1120b, etc. by splitting a first coding unit 1100, based on split shape mode information. The split shape mode information may include information about various methods of splitting a coding unit but, the information about various splitting methods may not include information for splitting a coding unit into four square coding units. According to such split shape mode information, the image decoding apparatus 100 may not split the square first coding unit 1100 into four square second coding units 1130a, 1130b, 1130c, and 1130d. The image decoding apparatus 100 may determine the non-square second coding units 1110a and 1110b or 1120a and 1120b, etc., based on the split shape mode information.

According to an embodiment of the present disclosure, the image decoding apparatus 100 may independently split the non-square second coding units 1110a and 1110b or 1120a and 1120b, etc. Each of the second coding units 1110a and 1110b or 1120a and 1120b, etc. may be recursively split in a certain order, and this splitting method may correspond to a method of splitting the first coding unit 1100, based on the split shape mode information.

For example, the image decoding apparatus 100 may determine square third coding units 1112a and 1112b by splitting the left second coding unit 1110a in a horizontal direction, and may determine square third coding units 1114a and 1114b by splitting the right second coding unit 1110b in a horizontal direction. Furthermore, the image decoding apparatus 100 may determine square third coding units 1116a, 1116b, 1116c, and 1116d by splitting both of the left and right second coding units 1110a and 1110b in a horizontal direction. In this case, coding units having the same shape as the four square second coding units 1130a, 1130b, 1130c, and 1130d split from the first coding unit 1100 may be determined.

As another example, the image decoding apparatus 100 may determine square third coding units 1122a and 1122b by splitting the upper second coding unit 1120a in a vertical direction, and may determine square third coding units 1124a and 1124b by splitting the lower second coding unit 1120b in a vertical direction. Furthermore, the image decoding apparatus 100 may determine square third coding units 1126a, 1126b, 1126c, and 1126d by splitting both of the upper and lower second coding units 1120a and 1120b in a vertical direction. In this case, coding units having the same shape as the four square second coding units 1130a, 1130b, 1130c, and 1130d split from the first coding unit 1100 may be determined.

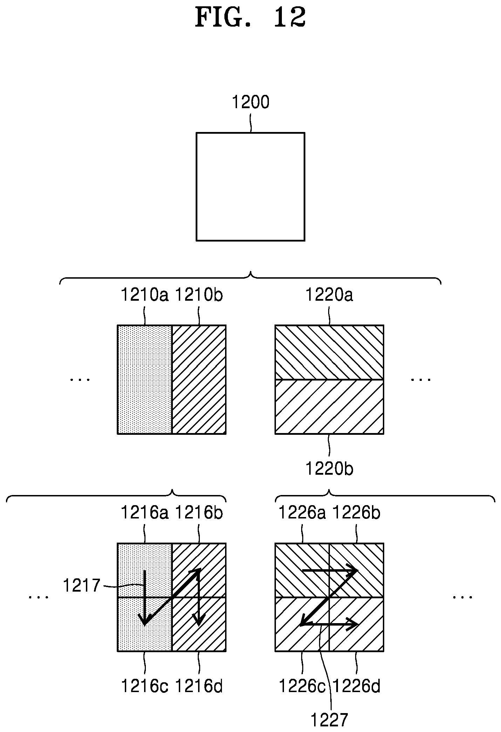

FIG. 12 illustrates that a processing order between a plurality of coding units may change depending on a process of splitting a coding unit, according to an embodiment of the present disclosure.

According to an embodiment of the present disclosure, the image decoding apparatus 100 may split a first coding unit 1200, based on split shape mode information. When a block shape indicates a square shape and the split shape mode information indicates to split the first coding unit 1200 in at least one of horizontal and vertical directions, the image decoding apparatus 100 may determine second coding units 1210a and 1210b or 1220a and 1220b, etc. by splitting the first coding unit 1200. Referring to FIG. 12, the non-square second coding units 1210a and 1210b or 1220a and 1220b determined by splitting the first coding unit 1200 in only a horizontal direction or vertical direction may be independently split based on the split shape mode information of each coding unit. For example, the image decoding apparatus 100 may determine third coding units 1216a, 1216b, 1216c, and 1216d by splitting the second coding units 1210a and 1210b, which are generated by splitting the first coding unit 1200 in a vertical direction, in a horizontal direction, and may determine third coding units 1226a, 1226b, 1226c, and 1226d by splitting the second coding units 1220a and 1220b, which are generated by splitting the first coding unit 1200 in a horizontal direction, in a vertical direction. An operation of splitting the second coding units 1210a and 1210b or 1220a and 1220b has been described above in relation to FIG. 11, and thus, detailed descriptions thereof will not be provided herein.

According to an embodiment of the present disclosure, the image decoding apparatus 100 may process coding units in a certain order. An operation of processing coding units in a certain order has been described above in relation to FIG. 7, and thus, detailed descriptions thereof will not be provided herein. Referring to FIG. 12, the image decoding apparatus 100 may determine four square third coding units 1216a, 1216b, 1216c, and 1216d, and 1226a, 1226b, 1226c, and 1226d by splitting the square first coding unit 1200. According to an embodiment of the present disclosure, the image decoding apparatus 100 may determine processing orders of the third coding units 1216a, 1216b, 1216c, and 1216d, and 1226a, 1226b, 1226c, and 1226d based on a splitting method of the first coding unit 1200.

According to an embodiment of the present disclosure, the image decoding apparatus 100 may determine the third coding units 1216a, 1216b, 1216c, and 1216d by splitting the second coding units 1210a and 1210b generated by splitting the first coding unit 1200 in a vertical direction, in a horizontal direction, and may process the third coding units 1216a, 1216b, 1216c, and 1216d in a processing order 1217 for initially processing the third coding units 1216a and 1216c, which are included in the left second coding unit 1210a, in a vertical direction and then processing the third coding unit 1216b and 1216d, which are included in the right second coding unit 1210b, in a vertical direction.

According to an embodiment of the present disclosure, the image decoding apparatus 100 may determine the third coding units 1226a, 1226b, 1226c, and 1226d by splitting the second coding units 1220a and 1220b generated by splitting the first coding unit 1200 in a horizontal direction, in a vertical direction, and may process the third coding units 1226a, 1226b, 1226c, and 1226d in a processing order 1227 for initially processing the third coding units 1226a and 1226b, which are included in the upper second coding unit 1220a, in a horizontal direction and then processing the third coding unit 1226c and 1226d, which are included in the lower second coding unit 1220b, in a horizontal direction.

Referring to FIG. 12, the square third coding units 1216a, 1216b, 1216c, and 1216d, and 1226a, 1226b, 1226c, and 1226d may be determined by splitting the second coding units 1210a and 1210b, and 1220a and 1920b, respectively. Although the second coding units 1210a and 1210b are determined by splitting the first coding unit 1200 in a vertical direction differently from the second coding units 1220a and 1220b which are determined by splitting the first coding unit 1200 in a horizontal direction, the third coding units 1216a, 1216b, 1216c, and 1216d, and 1226a, 1226b, 1226c, and 1226d split therefrom eventually show same-shaped coding units split from the first coding unit 1200. As such, by recursively splitting a coding unit in different manners based on the split shape information, the image decoding apparatus 100 may process a plurality of coding units in different orders even when the coding units are eventually determined to be the same shape.

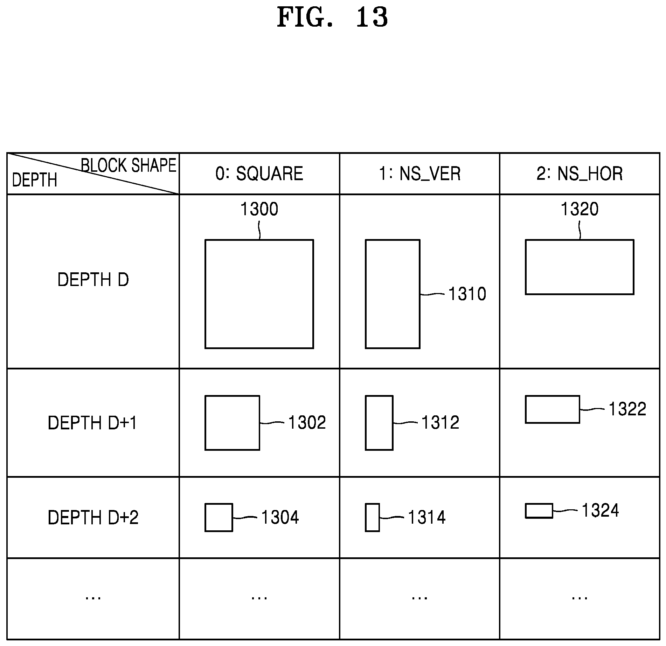

FIG. 13 illustrates a process of determining a depth of a coding unit when a shape and size of the coding unit change, when the coding unit is recursively split such that a plurality of coding units are determined, according to an embodiment of the present disclosure.

According to an embodiment of the present disclosure, the image decoding apparatus 100 may determine the depth of the coding unit, based on a certain criterion. For example, the certain criterion may be the length of a long side of the coding unit. When the length of a long side of a coding unit before being split is 2n times (n>0) the length of a long side of a split current coding unit, the image decoding apparatus 100 may determine that a depth of the current coding unit is increased from a depth of the coding unit before being split, by n. In the following description, a coding unit having an increased depth is expressed as a coding unit of a lower depth.

Referring to FIG. 13, according to an embodiment of the present disclosure, the image decoding apparatus 100 may determine a second coding unit 1302 and a third coding unit 1304 of lower depths by splitting a square first coding unit 1300 based on block shape information indicating a square shape (for example, the block shape information may be expressed as '0: SQUARE'). Assuming that the size of the square first coding unit 1300 is 2N×2N, the second coding unit 1302 determined by splitting a width and height of the first coding unit 1300 in 1/2 may have a size of N×N. Furthermore, the third coding unit 1304 determined by splitting a width and height of the second coding unit 1302 in 1/2 may have a size of N/2×N/2. In this case, a width and height of the third coding unit 1304 are 1/4 times those of the first coding unit 1300. When a depth of the first coding unit 1300 is D, a depth of the second coding unit 1302, the width and height of which are 1/2 times those of the first coding unit 1300, may be D+1, and a depth of the third coding unit 1304, the width and height of which are 1/4 times those of the first coding unit 1300, may be D+2.

According to an embodiment of the present disclosure, the image decoding apparatus 100 may determine a second coding unit 1312 or 1322 and a third coding unit 1314 or 1324 of lower depths by splitting a non-square first coding unit 1310 or 1320 based on block shape information indicating a non-square shape (for example, the block shape information may be expressed as '1: NS_VER' indicating a non-square shape, a height of which is longer than a width, or as '2: NS_HOR' indicating a non-square shape, a width of which is longer than a height).

The image decoding apparatus 100 may determine a second coding unit 1302, 1312, or 1322 by splitting at least one of a width and height of the first coding unit 1310 having a size of N×2N. That is, the image decoding apparatus 100 may determine the second coding unit 1302 having a size of N×N or the second coding unit 1322 having a size of N×N/2 by splitting the first coding unit 1310 in a horizontal direction, or may determine the second coding unit 1312 having a size of N/2×N by splitting the first coding unit 1310 in horizontal and vertical directions.

According to an embodiment of the present disclosure, the image decoding apparatus 100 may determine the second coding unit 1302, 1312, or 1322 by splitting at least one of a width and height of the first coding unit 1320 having a size of 2N×N. That is, the image decoding apparatus 100 may determine the second coding unit 1302 having a size of N×N or the second coding unit 1312 having a size of N/2×N by splitting the first coding unit 1320 in a vertical direction, or may determine the second coding unit 1322 having a size of N×N/2 by splitting the first coding unit 1320 in horizontal and vertical directions.

According to an embodiment of the present disclosure, the image decoding apparatus 100 may determine a third coding unit 1304, 1314, or 1324 by splitting at least one of a width and height of the second coding unit 1302 having a size of N×N. That is, the image decoding apparatus 100 may determine the third coding unit 1304 having a size of N/2×N/2, the third coding unit 1314 having a size of N/4×N/2, or the third coding unit 1324 having a size of N/2×N/4 by splitting the second coding unit 1302 in vertical and horizontal directions.

According to an embodiment of the present disclosure, the image decoding apparatus 100 may determine a third coding unit 1304, 1314, or 1324 by splitting at least one of a width and height of the second coding unit 1312 having a size of N/2xN. That is, the image decoding apparatus 100 may determine the third coding unit 1304 having a size of N/2×N/2 or the third coding unit 1324 having a size of N/2×N/4 by splitting the second coding unit 1312 in a horizontal direction, or may determine the third coding unit 1314 having a size of N/4×N/2 by splitting the second coding unit 1312 in vertical and horizontal directions.

According to an embodiment of the present disclosure, the image decoding apparatus 100 may determine a third coding unit 1304, 1314, or 1324 by splitting at least one of a width and height of the second coding unit 1322 having a size of N×N/2. That is, the image decoding apparatus 100 may determine the third coding unit 1304 having a size of N/2×N/2 or the third coding unit 1314 having a size of N/4×N/2 by splitting the second coding unit 1322 in a vertical direction, or may determine the third coding unit 1324 having a size of N/2×N/4 by splitting the second coding unit 1322 in vertical and horizontal directions.

According to an embodiment of the present disclosure, the image decoding apparatus 100 may split the square coding unit 1300, 1302, or 1304 in a horizontal or vertical direction. For example, the image decoding apparatus 100 may determine the first coding unit 1310 having a size of N×2N by splitting the first coding unit 1300 having a size of 2N×2N in a vertical direction, or may determine the first coding unit 1320 having a size of 2N×N by splitting the first coding unit 1300 in a horizontal direction. According to an embodiment of the present disclosure, when a depth is determined based on the length of the longest side of a coding unit, a depth of a coding unit determined by splitting the first coding unit 1300 having a size of 2N×2N in a horizontal or vertical direction may be the same as the depth of the first coding unit 1300.

According to an embodiment of the present disclosure, a width and height of the third coding unit 1314 or 1324 may be 1/4 times those of the first coding unit 1310 or 1320. When a depth of the first coding unit 1310 or 1320 is D, a depth of the second coding unit 1312 or 1322, the width and height of which are 1/2 times those of the first coding unit 1310 or 1320, may be D+1, and a depth of the third coding unit 1314 or 1324, the width and height of which are 1/4 times those of the first coding unit 1310 or 1320, may be D+2.

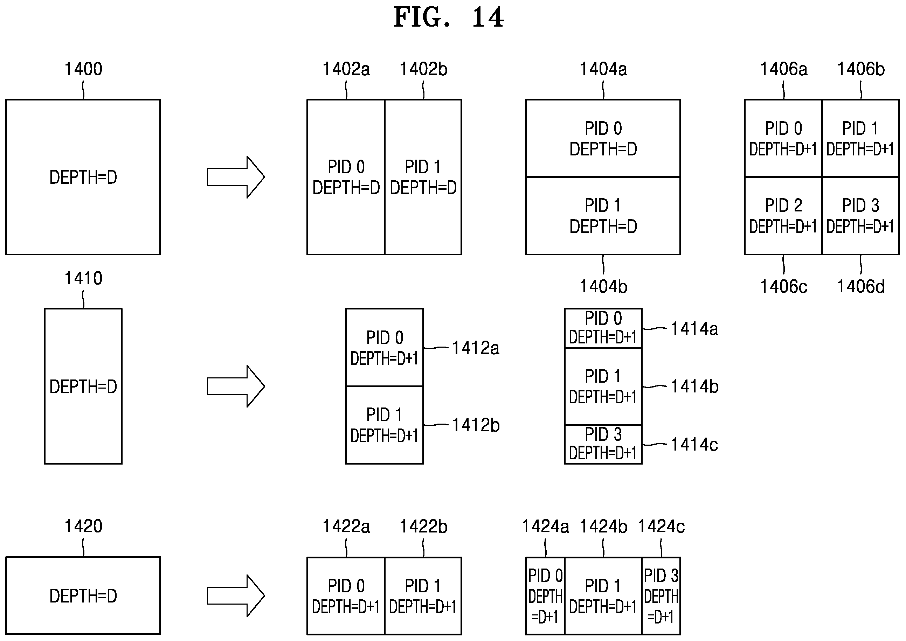

FIG. 14 illustrates depths that are determinable based on shapes and sizes of coding units, and part indexes (PIDs) that are for distinguishing the coding units, according to an embodiment of the present disclosure.

According to an embodiment of the present disclosure, the image decoding apparatus 100 may determine various-shape second coding units by splitting a square first coding unit 1400. Referring to FIG. 14, the image decoding apparatus 100 may determine second coding units 1402a and 1402b, 1404a and 1404b, and 1406a, 1406b, 1406c, and 1406d by splitting the first coding unit 1400 in at least one of vertical and horizontal directions based on split shape mode information. That is, the image decoding apparatus 100 may determine the second coding units 1402a and 1402b, 1404a and 1404b, and 1406a, 1406b, 1406c, and 1406d, based on the split shape mode information of the first coding unit 1400.

According to an embodiment of the present disclosure, a depth of the second coding units 1402a and 1402b, 1404a and 1404b, and 1406a, 1406b, 1406c, and 1406d, which are determined based on the split shape mode information of the square first coding unit 1400, may be determined based on the length of a long side thereof. For example, because the length of a side of the square first coding unit 1400 equals the length of a long side of the non-square second coding units 1402a and 1402b, and 1404a and 1404b, the first coding unit 2100 and the non-square second coding units 1402a and 1402b, and 1404a and 1404b may have the same depth, e.g., D. However, when the image decoding apparatus 100 splits the first coding unit 1400 into the four square second coding units 1406a, 1406b, 1406c, and 1406d based on the split shape mode information, because the length of a side of the square second coding units 1406a, 1406b, 1406c, and 1406d is 1/2 times the length of a side of the first coding unit 1400, a depth of the second coding units 1406a, 1406b, 1406c, and 1406d may be D+1 which is lower than the depth D of the first coding unit 1400 by 1.

According to an embodiment of the present disclosure, the image decoding apparatus 100 may determine a plurality of second coding units 1412a and 1412b, and 1414a, 1414b, and 1414c by splitting a first coding unit 1410, a height of which is longer than a width, in a horizontal direction based on the split shape mode information. According to an embodiment of the present disclosure, the image decoding apparatus 100 may determine a plurality of second coding units 1422a and 1422b, and 1424a, 1424b, and 1424c by splitting a first coding unit 1420, a width of which is longer than a height, in a vertical direction based on the split shape mode information.

According to an embodiment of the present disclosure, a depth of the second coding units 1412a and 1412b, and 1414a, 1414b, and 1414c, or 1422a and 1422b, and 1424a, 1424b, and 1424c, which are determined based on the split shape mode information of the non-square first coding unit 1410 or 1420, may be determined based on the length of a long side thereof. For example, because the length of a side of the square second coding units 1412a and 1412b is 1/2 times the length of a long side of the first coding unit 1410 having a non-square shape, a height of which is longer than a width, a depth of the square second coding units 1412a and 1412b is D+1 which is lower than the depth D of the non-square first coding unit 1410 by 1.

Furthermore, the image decoding apparatus 100 may split the non-square first coding unit 1410 into an odd number of second coding units 1414a, 1414b, and 1414c based on the split shape mode information. The odd number of second coding units 1414a, 1414b, and 1414c may include the non-square second coding units 1414a and 1414c and the square second coding unit 1414b. In this case, because the length of a long side of the non-square second coding units 1414a and 1414c and the length of a side of the square second coding unit 1414b are 1/2 times the length of a long side of the first coding unit 1410, a depth of the second coding units 1414a, 1414b, and 1414c may be D+1 which is lower than the depth D of the non-square first coding unit 1410 by 1. The image decoding apparatus 100 may determine depths of coding units split from the first coding unit 1420 having a non-square shape, a width of which is longer than a height, by using the above-described method of determining depths of coding units split from the first coding unit 1410.

According to an embodiment of the present disclosure, the image decoding apparatus 100 may determine PIDs for identifying split coding units, based on a size ratio between the coding units when an odd number of split coding units do not have equal sizes. Referring to FIG. 14, a coding unit 1414b of a center location among an odd number of split coding units 1414a, 1414b, and 1414c may have a width equal to that of the other coding units 1414a and 1414c and a height which is two times that of the other coding units 1414a and 1414c. That is, in this case, the coding unit 1414b at the center location may include two of the other coding unit 1414a or 1414c. Therefore, when a PID of the coding unit 1414b at the center location is 1 based on a scan order, a PID of the coding unit 1414c located next to the coding unit 1414b may be increased by 2 and may thus be 3. That is, discontinuity in PID values may be present. According to an embodiment of the present disclosure, the image decoding apparatus 100 may determine whether an odd number of split coding units do not have equal sizes, based on whether discontinuity is present in PIDs for identifying the split coding units.

According to an embodiment of the present disclosure, the image decoding apparatus 100 may determine whether to use a specific splitting method, based on PID values for identifying a plurality of coding units determined by splitting a current coding unit. Referring to FIG. 14, the image decoding apparatus 100 may determine an even number of coding units 1412a and 1412b or an odd number of coding units 1414a, 1414b, and 1414c by splitting the first coding unit 1410 having a rectangular shape, a height of which is longer than a width. The image decoding apparatus 100 may use PIDs indicating respective coding units so as to identify respective coding units. According to an embodiment of the present disclosure, the PID may be obtained from a sample of a certain location of each coding unit (e.g., an upper left sample).

According to an embodiment of the present disclosure, the image decoding apparatus 100 may determine a coding unit at a certain location from among the split coding units, by using the PIDs for distinguishing the coding units. According to an embodiment of the present disclosure, when the split shape mode information of the first coding unit 1410 having a rectangular shape, a height of which is longer than a width, indicates to split a coding unit into three coding units, the image decoding apparatus 100 may split the first coding unit 1410 into three coding units 1414a, 1414b, and 1414c. The image decoding apparatus 100 may assign a PID to each of the three coding units 1414a, 1414b, and 1414c. The image decoding apparatus 100 may compare PIDs of an odd number of split coding units to determine a coding unit at a center location from among the coding units. The image decoding apparatus 100 may determine the coding unit 1414b having a PID corresponding to a middle value among the PIDs of the coding units, as the coding unit at the center location from among the coding units determined by splitting the first coding unit 1410. According to an embodiment of the present disclosure, the image decoding apparatus 100 may determine PIDs for distinguishing split coding units, based on a size ratio between the coding units when the split coding units do not have equal sizes. Referring to FIG. 14, the coding unit 1414b generated by splitting the first coding unit 1410 may have a width equal to that of the other coding units 1414a and 1414c and a height which is two times that of the other coding units 1414a and 1414c. In this case, when the PID of the coding unit 1414b at the center location is 1, the PID of the coding unit 1414c located next to the coding unit 1414b may be increased by 2 and may thus be 3. When the PID is not uniformly increased as described above, the image decoding apparatus 100 may determine that a coding unit is split into a plurality of coding units including a coding unit having a size different from that of the other coding units. According to an embodiment of the present disclosure, when the split shape mode information indicates to split a coding unit into an odd number of coding units, the image decoding apparatus 100 may split a current coding unit in such a manner that a coding unit of a certain location among an odd number of coding units (e.g., a coding unit of a center location) has a size different from that of the other coding units. In this case, the image decoding apparatus 100 may determine the coding unit at the center location, which has a different size, by using PIDs of the coding units. However, the PIDs and the size or location of the coding unit at a certain location are not limited to the above-described examples, and various PIDs and various locations and sizes of coding units may be used.

According to an embodiment of the present disclosure, the image decoding apparatus 100 may use a certain data unit where a coding unit starts to be recursively split.

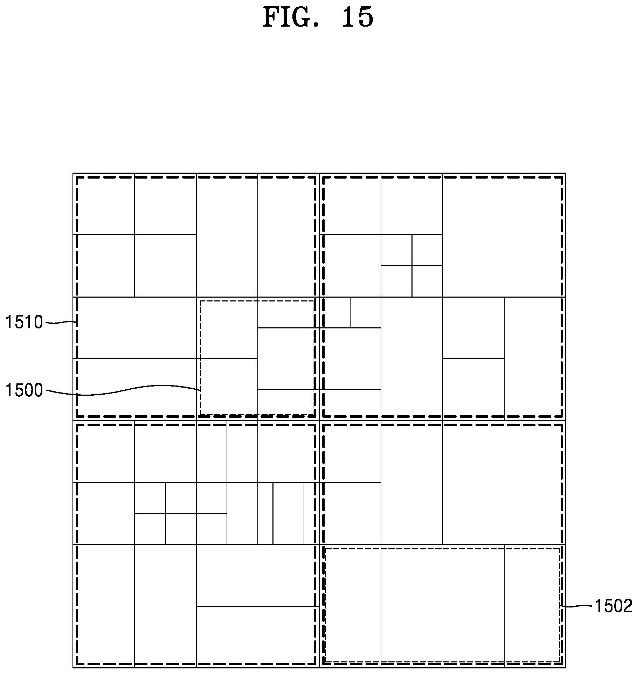

FIG. 15 illustrates that a plurality of coding units are determined based on a plurality of certain data units included in a picture, according to an embodiment of the present disclosure.

According to an embodiment of the present disclosure, a certain data unit may be defined as a data unit where a coding unit starts to be recursively split by using split shape mode information. That is, the certain data unit may correspond to a coding unit of an uppermost depth, which is used to determine a plurality of coding units split from a current picture. In the following descriptions, for convenience of explanation, the certain data unit is referred to as a reference data unit.

According to an embodiment of the present disclosure, the reference data unit may have a certain size and a certain size shape. According to an embodiment of the present disclosure, the reference data unit may include M×N samples. Herein, M and N may be equal to each other, and may be integers expressed as powers of 2. That is, the reference data unit may have a square or non-square shape, and may be split into an integer number of coding units.

According to an embodiment of the present disclosure, the image decoding apparatus 100 may split the current picture into a plurality of reference data units. According to an embodiment of the present disclosure, the image decoding apparatus 100 may split the plurality of reference data units, which are split from the current picture, by using the split shape mode information of each reference data unit. The operation of splitting the reference data unit may correspond to a splitting operation using a quad-tree structure.

According to an embodiment of the present disclosure, the image decoding apparatus 100 may previously determine the minimum size allowed for the reference data units included in the current picture. Accordingly, the image decoding apparatus 100 may determine various reference data units having sizes equal to or greater than the minimum size, and may determine one or more coding units by using the split shape mode information with reference to the determined reference data unit.

Referring to FIG. 15, the image decoding apparatus 100 may use a square reference coding unit 1500 or a non-square reference coding unit 1502. According to an embodiment of the present disclosure, the shape and size of reference coding units may be determined based on various data units capable of including at least one reference coding unit (e.g., sequences, pictures, slices, slice segments, tiles, tile groups, CTUs, or the like).

According to an embodiment of the present disclosure, for each of various data units described above, the bitstream obtainer 110 of the image decoding apparatus 100 may obtain, from a bitstream, at least one of information about a shape of the reference coding unit and information about a size of the reference coding unit. An operation of splitting the square reference coding unit 1500 into one or more coding units has been described above in relation to the operation of splitting the current coding unit 300 of FIG. 3, and an operation of splitting the non-square reference coding unit 1502 into one or more coding units has been described above in relation to the operation of splitting the current coding unit 400 or 450 of FIG. 4. Thus, detailed descriptions thereof will not be provided herein.

According to an embodiment of the present disclosure, the image decoding apparatus 100 may use a PID for identifying the size and shape of reference coding units, to determine the size and shape of reference coding units according to some data units previously determined based on a certain condition. That is, the bitstream obtainer 110 may obtain, from the bitstream, only the PID for identifying the size and shape of reference coding units with respect to each slice, slice segment, tile, tile group, or CTU which is a data unit satisfying a certain condition (e.g., a data unit having a size equal to or smaller than a slice) among the various data units (e.g., sequences, pictures, slices, slice segments, tiles, tile groups, CTUs, or the like). The image decoding apparatus 100 may determine the size and shape of reference data units with respect to each data unit, which satisfies the certain condition, by using the PID. When the reference coding unit shape information and the reference coding unit size information are obtained and used from the bitstream according to each data unit having a relatively small size, efficiency of using the bitstream may not be high, and therefore, only the PID may be obtained and used instead of directly obtaining the reference coding unit shape information and the reference coding unit size information. In this case, at least one of the size and shape of reference coding units corresponding to the PID for identifying the size and shape of reference coding units may be previously determined. That is, the image decoding apparatus 100 may determine at least one of the size and shape of reference coding units included in a data unit serving as a unit for obtaining the PID, by selecting the previously determined at least one of the size and shape of reference coding units based on the PID.

According to an embodiment of the present disclosure, the image decoding apparatus 100 may use one or more reference coding units included in a CTU 1510. That is, the CTU 1510 split from a picture may include one or more reference coding units, and coding units may be determined by recursively splitting each reference coding unit. According to an embodiment of the present disclosure, at least one of a width and height of the CTU 1510 may be integer times at least one of the width and height of the reference coding units. According to an embodiment of the present disclosure, the size of reference coding units may be obtained by splitting the CTU 1510 n times based on a quadtree structure. That is, the image decoding apparatus 100 may determine the reference coding units by splitting the CTU 1510 n times based on a quadtree structure, and may split the reference coding unit based on at least one of the block shape information and the split shape mode information according to an embodiment of the present disclosure.

According to an embodiment of the present disclosure, the image decoding apparatus 100 may obtain block shape information indicating the shape of a current coding unit or split shape mode information indicating a splitting method of the current coding unit, from the bitstream, and may use the obtained information. The split shape mode information may be included in the bitstream related to various data units. For example, the image decoding apparatus 100 may use the split shape mode information included in a sequence parameter set, a picture parameter set, a video parameter set, a slice header, a slice segment header, a tile header, or a tile group header. Furthermore, the image decoding apparatus 100 may obtain, from the bitstream, a syntax element corresponding to the block shape information or the split shape mode information according to each CTU or each reference coding unit, and may use the obtained syntax element.

Hereinafter, a method of determining a split rule, according to an embodiment of the present disclosure will be described in detail.

The image decoding apparatus 100 may determine a split rule of an image. The split rule may be pre-determined between the image decoding apparatus 100 and the image encoding apparatus 200. The image decoding apparatus 100 may determine the split rule of the image, based on information obtained from a bitstream. The image decoding apparatus 100 may determine the split rule based on the information obtained from at least one of a sequence parameter set, a picture parameter set, a video parameter set, a slice header, a slice segment header, a tile header, or a tile group header. The image decoding apparatus 100 may determine the split rule differently according to frames, slices, tiles, temporal layers, CTUs, or coding units.

The image decoding apparatus 100 may determine the split rule based on a block shape of a coding unit. The block shape may include a size, shape, a ratio of width and height, and a direction of the coding unit. The image encoding apparatus 200 and the image decoding apparatus 100 may pre-determine to determine the split rule based on the block shape of the coding unit. However, an embodiment is not limited thereto. The image decoding apparatus 100 may determine the split rule of the image, based on information obtained from a bitstream received from the image encoding apparatus 200.

The shape of the coding unit may include a square and a non-square. When the lengths of the width and height of the coding unit are the same, the image decoding apparatus 100 may determine the shape of the coding unit to be a square. Also, when the lengths of the width and height of the coding unit are not the same, the image decoding apparatus 100 may determine the shape of the coding unit to be a non-square.

The size of the coding unit may include various sizes, such as 4x4, 8x4, 4x8, 8x8, 16x4, 16x8, and to 256x256. The size of the coding unit may be classified based on the length of a long side of the coding unit, the length of a short side, or the area. The image decoding apparatus 100 may apply the same split rule to coding units classified as the same group. For example, the image decoding apparatus 100 may classify coding units having the same lengths of the long sides as having the same size. Also, the image decoding apparatus 100 may apply the same split rule to coding units having the same lengths of long sides.

The ratio of the width and height of the coding unit may include 1:2, 2:1, 1:4, 4:1, 1:8, 8:1, 1:16, 16:1, 32:1, 1:32, or the like. Also, a direction of the coding unit may include a horizontal direction and a vertical direction. The horizontal direction may indicate a case in which the length of the width of the coding unit is longer than the length of the height thereof. The vertical direction may indicate a case in which the length of the width of the coding unit is shorter than the length of the height thereof.

The image decoding apparatus 100 may adaptively determine the split rule based on the size of the coding unit. The image decoding apparatus 100 may differently determine an allowable split shape mode based on the size of the coding unit. For example, the image decoding apparatus 100 may determine whether splitting is allowed based on the size of the coding unit. The image decoding apparatus 100 may determine a split direction according to the size of the coding unit. The image decoding apparatus 100 may determine an allowable split type according to the size of the coding unit.

The split rule determined based on the size of the coding unit may be a split rule pre-determined between the image encoding apparatus 200 and the image decoding apparatus 100. Also, the image decoding apparatus 100 may determine the split rule based on the information obtained from the bitstream.

The image decoding apparatus 100 may adaptively determine the split rule based on a location of the coding unit. The image decoding apparatus 100 may adaptively determine the split rule based on the location of the coding unit in the image.

Also, the image decoding apparatus 100 may determine the split rule such that coding units generated via different splitting paths do not have the same block shape. However, an embodiment is not limited thereto, and the coding units generated via different splitting paths have the same block shape. The coding units generated via the different splitting paths may have different decoding process orders. Because the decoding process orders have been described above with reference to FIG. 12, details thereof are not provided again.

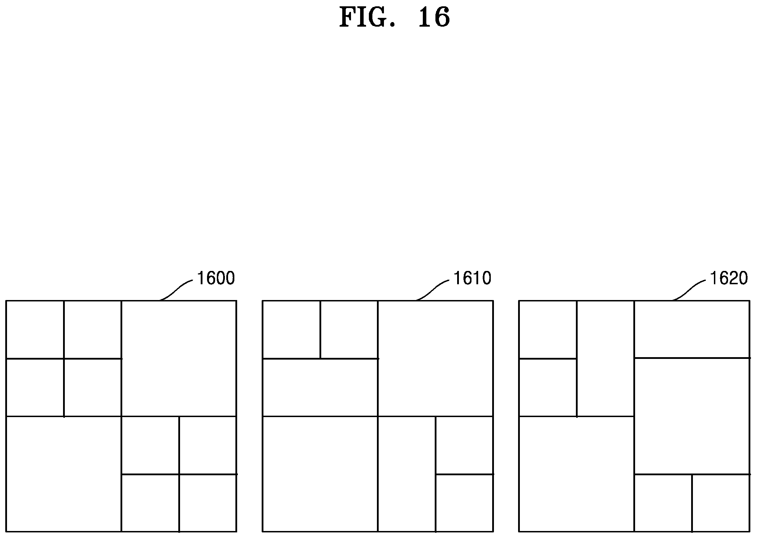

FIG. 16 illustrates coding units which may be determined for each picture, when a combination of shapes into which a coding unit may be split is different for each picture, according to an embodiment of the present disclosure.

Referring to FIG. 16, the image decoding apparatus 100 may, for each picture, differently determine a combination of split shapes into which a coding unit may be split. For example, the image decoding apparatus 100 may decode an image by using a picture 1600 which may be split into four coding units, a picture 1610 which may be split into two or four coding units, and a picture 1620 which may be split into two, three, or four coding units, from among one or more pictures included in the image. In order to split the picture 1600 into a plurality of coding units, the image decoding apparatus 100 may use only split shape information indicating a split into four square coding units. In order to split the picture 1610, the image decoding apparatus 100 may use only split shape information indicating a split into two or four coding units. In order to split the picture 1620, the image decoding apparatus 100 may use only split shape information indicating a split into two, three, or four coding units. The combinations of the split shapes described above are only an embodiment for describing an operation of the image decoding apparatus 100. Thus, the combinations of the split shapes described above should not be interpreted to be limited to the embodiment described above, and should be interpreted such that various types of combinations of the split shapes may be used for a certain data unit.

According to an embodiment of the present disclosure, the bitstream obtainer 110 of the image decoding apparatus 100 may obtain a bitstream including an index indicating a combination of split shape information for each certain data unit (for example, a sequence, a picture, a slice, a slice segment, a tile, or a tile group). For example, the bitstream obtainer 110 may obtain the index indicating the combination of the split shape information from a sequence parameter set, a picture parameter set, a slice header, a tile header, or a tile group header. The image decoding apparatus 100 may determine, for each certain data unit, a combination of split shapes into which a coding unit may be split by using the obtained index, and thus, for each certain data unit, a different combination of the split shapes may be used.

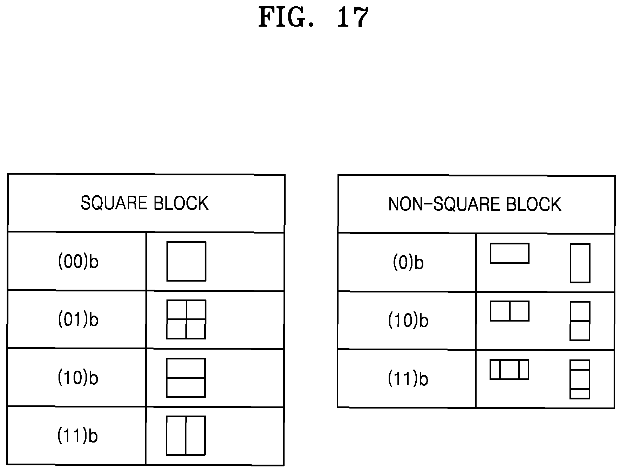

FIG. 17 illustrates various shapes of a coding unit, which may be determined based on split shape mode information which may be represented as a binary code, according to an embodiment of the present disclosure.

According to an embodiment of the present disclosure, the image decoding apparatus 100 may split the coding unit into various shapes by using block shape information and split shape mode information obtained by the bitstream obtainer 110. Shapes into which the coding unit may be split may correspond to various shapes including the shapes described according to the embodiments described above.

Referring to FIG. 17, the image decoding apparatus 100 may split a square coding unit in at least one of a horizontal direction and a vertical direction and may split a non-square coding unit in the horizontal direction or the vertical direction, based on the split shape mode information.

According to an embodiment of the present disclosure, when the image decoding apparatus 100 may split a square coding unit in the horizontal direction and the vertical direction into four square coding units, split shapes which may be indicated by the split shape mode information with respect to the square coding unit may correspond to four types. According to an embodiment of the present disclosure, the split shape mode information may be represented as a two-digit binary code, and each split shape may be assigned with a binary code. For example, when a coding unit is not split, the split shape mode information may be represented as (00)b, when a coding unit is split in a horizontal direction and a vertical direction, the split shape mode information may be represented as (01)b, when a coding unit is split in the horizontal direction, the split shape mode information may be represented as (10)b, and when a coding unit is split in the vertical direction, the split shape mode information may be represented as (11)b.

According to an embodiment of the present disclosure, when the image decoding apparatus 100 splits a non-square coding unit in a horizontal direction or a vertical direction, split shape types which may be indicated by the split shape mode information may be determined depending on the number of coding units into which the non-square coding unit is split. Referring to FIG. 17, the image decoding apparatus 100 may split up to three coding units from a non-square coding unit, according to an embodiment of the present disclosure. The image decoding apparatus 100 may split a coding unit into two coding units, and in this case, the split shape mode information may be represented as (10)b. The image decoding apparatus 100 may split a coding unit into three coding units, and in this case, the split shape mode information may be represented as (11)b. The image decoding apparatus 100 may determine not to split a coding unit, and in this case, the split shape mode information may be represented as (0)b. That is, to use the binary code indicating the split shape mode information, the image decoding apparatus 100 may use variable length coding (VLC) rather than fixed length coding (FLC).

Referring to FIG. 17, according to an embodiment of the present disclosure, a binary code of the split shape mode information indicating not to split the coding unit may be represented as (0)b. When the binary code of the split shape mode information indicating not to split the coding unit is configured as (00)b, all of 2-bit binary codes of the split shape mode information may have to be used, even though there is no split shape mode information configured as (01)b. However, when, as illustrated in FIG. 17, three split shape types with respect to the non-square coding unit are used, the image decoding apparatus 100 may determine not to split the coding unit, even by using a 1-bit binary code (0)b as the split shape mode information. Thus, a bitstream may be efficiently used. However, the split shapes of the non-square coding unit indicated by the split shape mode information should not be interpreted as being limited to the three split shape types illustrated in FIG. 17 and should be interpreted to include various shapes including the embodiments described above.

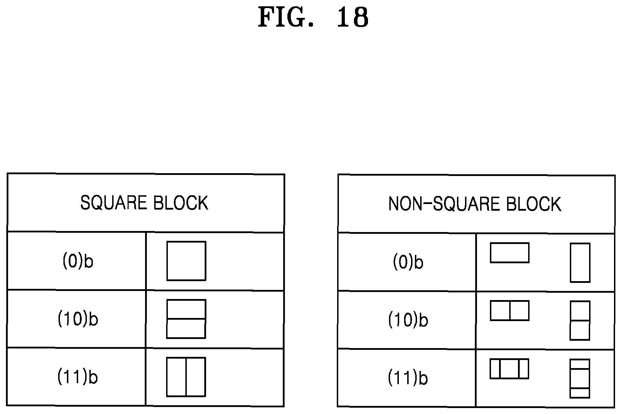

FIG. 18 illustrates another shape of a coding unit, which may be determined based on split shape mode information which may be represented as a binary code, according to an embodiment of the present disclosure.

Referring to FIG. 18, the image decoding apparatus 100 may split a square coding unit in a horizontal direction or a vertical direction and may split a non-square coding unit in the horizontal direction or the vertical direction, based on the split shape mode information. That is, the split shape mode information may indicate to split the square coding unit in one direction. In this case, a binary code of the split shape mode information indicating not to split the square coding unit may be represented as (0)b. When the binary code of the split shape mode information indicating not to split the coding unit is configured as (00)b, all of 2-bit binary codes of the split shape mode information may have to be used, even though there is no split shape mode information configured as (01)b. However, when, as illustrated in FIG. 18, three split shape types with respect to the square coding unit are used, the image decoding apparatus 100 may determine not to split the coding unit, even by using a 1-bit binary code (0)b as the split shape mode information. Thus, a bitstream may be efficiently used. However, the split shapes of the square coding unit indicated by the split shape mode information should not be interpreted as being limited to the three split shape types illustrated in FIG. 18 and should be interpreted to include various shapes including the embodiments described above.

According to an embodiment of the present disclosure, the block shape information or the split shape mode information may be represented by using a binary code, and the block shape information or the split shape mode information may be directly generated as a bitstream. Also, the block shape information or the split shape mode information which may be represented as a binary code may not be directly generated as a bitstream and may be used as a binary code which is input in context adaptive binary arithmetic coding (CABAC).

According to an embodiment of the present disclosure, a process in which the image decoding apparatus 100 obtains syntax with respect to the block shape information or the split shape mode information through the CABAC, is described. A bitstream including a binary code with respect to the syntax may be obtained by the bitstream obtainer 110. The image decoding apparatus 100 may detect a syntax element indicating the block shape information or the split shape mode information by inverse binarizing a bin string included in the obtained bistream. According to an embodiment of the present disclosure, the image decoding apparatus 100 may obtain a set of binary bin strings corresponding to a syntax element to be decoded and may decode each bin by using probability information. Also, the image decoding apparatus 100 may repeat this process until a bin string composed of these decoded bins becomes the same as one of previously obtained bin strings. The image decoding apparatus 100 may determine the syntax element by performing inverse binarization on the bin string.

According to an embodiment of the present disclosure, the image decoding apparatus 100 may determine the syntax with respect to the bin string by performing a decoding process of adaptive binary arithmetic coding, and the image decoding apparatus 100 may update a probability model with respect to the bins obtained by the bitstream obtainer 110. Referring to FIG. 17, the bitstream obtainer 110 of the image decoding apparatus 100 may obtain a bitstream indicating a binary code representing split shape mode information, according to an embodiment of the present disclosure. The image decoding apparatus 100 may determine the syntax with respect to the split shape mode information by using the obtained 1-bit or 2-bit-sized binary code. In order to determine the syntax with respect to the split shape mode information, the image decoding apparatus 100 may update a probability with respect to each bit of the 2-bit binary code. That is, according to whether a value of a first bin of the 2-bit binary code is 0 or 1, the image decoding apparatus 100 may update a probability for a next bin of having the value of 0 or 1 when the next bin is decoded.

According to an embodiment of the present disclosure, in the process of determining the syntax, the image decoding apparatus 100 may update the probability with respect to the bins, in a process of decoding the bins of the bin string with respect to the syntax, and with respect to a certain bit from among the bin string, the image decoding apparatus 100 may not update the probability and may determine that the probability is the same.

Referring to FIG. 17, in a process of determining the syntax by using the bin string representing the split shape mode information with respect to the non-square coding unit, the image decoding apparatus 100 may determine the syntax with respect to the split shape mode information by using one bin having a value of 0, when the non-square coding unit is not split. That is, when the block shape information indicates that a current coding unit has a non-square shape, a first bin of the bin string with respect to the split shape mode information may be 0, when the non-square coding unit is not split, and may be 1, when the non-square coding unit is split into two or three coding units. Accordingly, the probability that the first bin of the bin string of the split shape mode information with respect to the non-square coding unit is 0 may be 1/3, and the probability that the first bin of the bin string of the split shape mode information with respect to the non-square coding unit is 1 may be 2/3. As described above, because the split shape mode information indicating that the non-square coding unit is not split may be represented by using only a 1-bit bin string having the value of 0, the image decoding apparatus 100 may determine the syntax with respect to the split shape mode information by determining whether a second bin is 0 or 1, only when the first bin of the split shape mode information is 1. According to an embodiment of the present disclosure, when the first bin with respect to the split shape mode information is 1, the image decoding apparatus 100 may regard that the probability that the second bin is 0 and the probability that the second bin is 1 are the same as each other and may decode the bin.

According to an embodiment of the present disclosure, in the process of determining the bins of the bin string with respect to the split shape mode information, the image decoding apparatus 100 may use various probabilities with respect to each bin. According to an embodiment of the present disclosure, the image decoding apparatus 100 may differently determine the probabilities of the bins with respect to the split shape mode information, according to a direction of a non-square block. According to an embodiment of the present disclosure, the image decoding apparatus 100 may differently determine the probabilities of the bins with respect to the split shape mode information, according to a width or a length of a longer side of a current coding unit. According to an embodiment of the present disclosure, the image decoding apparatus 100 may differently determine the probabilities of the bins with respect to the split shape mode information, according to at least one of a shape and a length of a longer side of a current coding unit.

According to an embodiment of the present disclosure, the image decoding apparatus 100 may determine that the probabilities of the bins with respect to the split shape mode information are the same for coding units having a size that is equal to or greater than a certain size. For example, the image decoding apparatus 100 may determine that the probabilities of the bins with respect to the split shape mode information are the same as each other with respect to the coding units having a size that is equal to or greater than 64 samples based on a length of a longer side of the coding unit.

According to an embodiment of the present disclosure, the image decoding apparatus 100 may determine initial probabilities of the bins composed in the bin string of the split shape mode information based on a slice type (for example, an I-slice, a P-slice, or a B-slice).

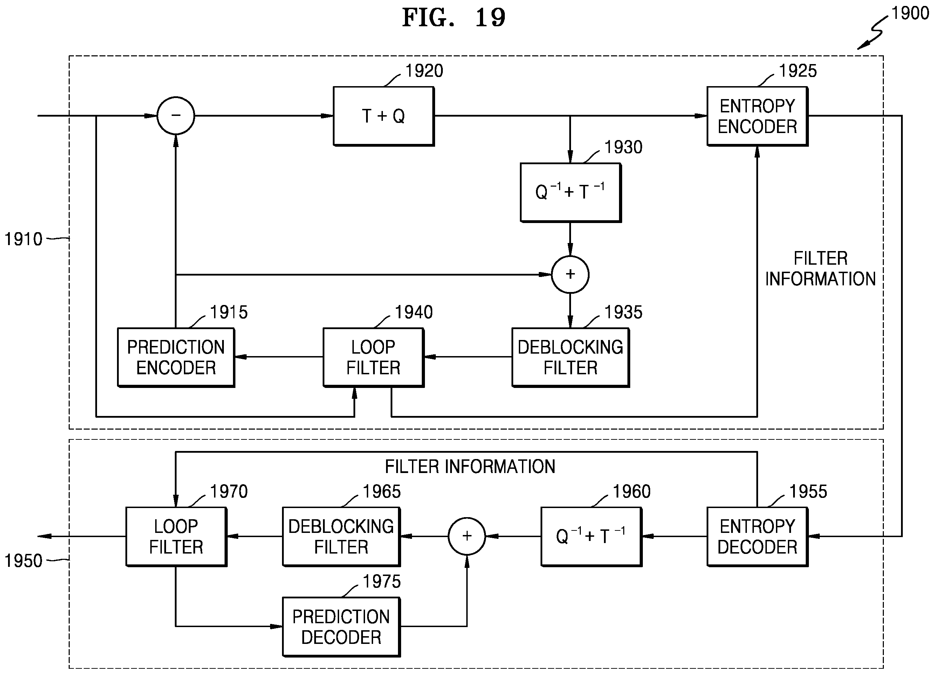

FIG. 19 illustrates a block diagram of an image encoding and decoding system performing loop filtering.

An encoding end 1910 of an image encoding and decoding system 1900 transmits an encoded bitstream of an image and a decoding end 1950 outputs a reconstructed image by receiving and decoding the bitstream. Here, the encoding end 1910 may have a similar configuration as the image encoding apparatus 200 to be described below, and the decoding end 1950 may have a similar configuration as the image decoding apparatus 100.

In the encoding end 1910, a prediction encoder 1915 outputs prediction data via inter prediction and intra prediction, and a transformer and quantizer 1920 outputs a quantized transform coefficient of residual data between the prediction data and a current input image. An entropy encoder 1925 encodes and transforms the quantized transform coefficient and outputs the quantized transform coefficient as a bitstream. The quantized transform coefficient is reconstructed as data of a spatial domain via an inverse quantizer and inverse transformer 1930, and the reconstructed data of the spatial domain is output as a reconstructed image via a deblocking filter 1935 and a loop filter 1940. The reconstructed image may be used as a reference image of a next input image via the prediction encoder 1915.

Encoded image data among the bitstream received by the decoding end 1950 is reconstructed as residual data of the spatial domain via an entropy decoder 1955 and an inverse quantizer and inverse transformer 1960. Prediction data and residual data that are output from a prediction decoder 1975 may be combined to construct image data of the spatial domain, and a deblocking filter 1965 and a loop filter 1970 may perform filtering on the image data of the spatial domain to output a reconstructed image with respect to a current original image. The reconstructed image may be used as a reference image for a next original image via the prediction decoder 1975.

The loop filter 1940 of the encoding end 1910 performs loop filtering by using filter information input according to a user input or system setting. The filter information used by the loop filter 1940 is output to the entropy encoder 1925 and transmitted to the decoding end 1950 together with the encoded image data. The loop filter 1970 of the decoding end 1950 may perform loop filtering based on the filter information input from the decoding end 1950.

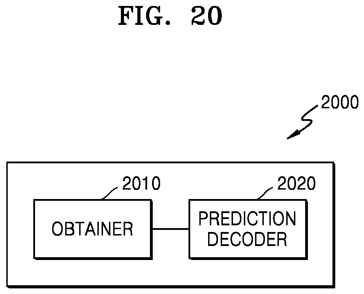

FIG. 20 is a diagram illustrating components of an image decoding apparatus according to an embodiment of the present disclosure.

Referring to FIG. 20, an image decoding apparatus 2000 may include an obtainer 2010 and a prediction decoder 2020.

According to an embodiment of the present disclosure, the obtainer 2010 and the prediction decoder 2020 may be realized as at least one processor. According to an embodiment of the present disclosure, the image decoding apparatus 2000 may include memory storing at least one of input and output data or an instruction of the obtainer 2010 and the prediction decoder 2020. The obtainer 2010 and the prediction decoder 2020 may operate according to the instruction stored in the memory. According to an embodiment of the present disclosure, the image decoding apparatus 2000 may include a memory controller configured to control data inputting and outputting of the memory.

According to an embodiment of the present disclosure, the obtainer 2010 may correspond to the entropy decoder 1955 illustrated in FIG. 19. According to an embodiment of the present disclosure, the prediction decoder 2020 may correspond to the prediction decoder 1975 illustrated in FIG. 19.

The obtainer 2010 may obtain a bitstream generated as a result of encoding an image. The bitstream may include an encoding result with respect to a current block. According to an embodiment of the present disclosure, the obtainer 2010 may receive the bitstream from an image encoding apparatus through a network. According to an embodiment of the present disclosure, the obtainer 2010 may obtain the bitstream from a data storage medium including at least one of a magnetic medium such as a hard disk, a floppy disk, and a magnetic tape, an optical recording medium such as a compact disk read-only memory (CD-ROM) and a digital versatile disk (DVD), or a magneto-optical medium such as a floptical disk.

The obtainer 2010 may obtain, from the bitstream, syntax elements for decoding an image. Values corresponding to the syntax elements may be included in the bitstream according to a hierarchical structure of the image. According to an embodiment of the present disclosure, the obtainer 2010 may obtain the syntax elements by entropy decoding bins included in the bitstream.

According to an embodiment of the present disclosure, the bitstream may include information about a prediction mode of a current block in a current image. The current block may include at least one of a CTU, a coding unit, a transform unit, or a prediction unit split from the current image to be decoded. According to an embodiment of the present disclosure, the prediction mode of the current block may include at least one of an intra mode, an inter mode, a combined mode, a geometric partitioning mode, a block copy mode, or a template matching prediction mode.

According to an embodiment of the present disclosure, the intra mode may include 0 intra planar mode having no directionality, 1 intra DC mode having no directionality, 2 to 66 intra angular modes having directionality, and -14 to -1 and 67 to 80 intra wide angular modes. According to an embodiment of the present disclosure, the intra planar mode may denote a mode in which a prediction sample is determined based on a left reference sample, an upper reference sample, and a weighted average according to a distance between a lower left sample and an upper right sample of a current block. According to an embodiment of the present disclosure, the intra DC mode may denote a mode in which an average value of reference samples is determined as the prediction sample. According to an embodiment of the present disclosure, in the intra angular modes, positions of the reference samples for generating the prediction samples of samples in the current block may be identified by considering directions indicated by the intra angular modes. For example, in the 34 mode, the reference samples located in a direction of 45 degrees at an upper left side with respect to the samples in the current block may be identified. The intra wide angular modes may be used to identify the reference samples of the samples in the current bock having a non-square shape. According to an embodiment of the present disclosure, the image decoding apparatus 2000 may determine one of the intra wide angular modes as an intra prediction mode of a current block having a non-square shape. The number and types of intra prediction modes which may be used by the image decoding apparatus 2000 according to an embodiment of the present disclosure in an intra mode may be variously set.

According to an embodiment of the present disclosure, the block copy mode may include an intra block copy mode. According to an embodiment, the block copy mode may include an intra block copy mode. According to an embodiment, the intra block copy mode may be a sub-mode of the intra mode. However, the intra block copy mode is not limited thereto and may indicate a mode separate from the intra mode. According to an embodiment, the template matching prediction mode may include a template matching intra prediction mode. The combined mode may include a combined inter-intra prediction (CIIP) mode in which prediction is performed by combining prediction according to the intra mode and prediction according to the inter mode. The geometric partitioning mode may include a mode for splitting a block to have directionality. The geometric partitioning mode may perform prediction by using inter prediction or intra prediction with respect to each of split regions of the block.

The prediction decoder 2020 may reconstruct the current block by performing, on the current block, prediction according to the prediction mode, based on the prediction mode of the current block.

According to an embodiment of the present disclosure, the obtainer 2010 may obtain information about the prediction mode of the current block from a bitstream. For example, the obtainer 2010 may obtain index information indicating the prediction mode of the current block from the bitstream.

According to an embodiment of the present disclosure, when the prediction mode of the current block is the CIIP mode, the prediction decoder 2020 may reconstruct the current block by combining the inter prediction and the intra prediction. For example, the prediction decoder 2020 may perform the intra prediction according to a planar mode. For example, the prediction decoder 2020 may perform the inter prediction by using a motion vector (MV). The prediction decoder 2020 may reconstruct the current block by using a weighted sum of a prediction block according to the inter prediction and a prediction block of the intra prediction. A weight may be determined based on whether or not a neighboring block to the current block is intra predicted.

According to an embodiment of the present disclosure, when the prediction mode of the current block is the geometric partitioning mode, the prediction decoder 2020 may perform prediction by splitting the current block. The prediction decoder 2020 may obtain a split angle and a split distance for an edge on which the splitting of the current block is performed. The prediction decoder 2020 may split the current block based on the split angle and the split distance. The prediction decoder 2020 may reconstruct the current block by performing inter prediction or intra prediction on each of split regions of the current block. The prediction decoder 2020 may (i) perform intra prediction on both of the split regions, (ii) perform inter prediction on one region and intra prediction on the other region, or (iii) perform inter prediction on both of the split regions.

According to an embodiment of the present disclosure, when the prediction mode of the current block is the block copy mode, the prediction decoder 2020 may reconstruct the current block based on a reference block included in a current image. According to an embodiment of the present disclosure, when the prediction mode of the current block is the block copy mode, the prediction decoder 2020 may determine information about a block vector (BV) indicating the reference block. According to an embodiment of the present disclosure, the prediction decoder 2020 may determine a prediction block based on the reference block. For example, the prediction decoder 2020 may determine the prediction block to be same as the reference block or determine the prediction block by performing filtering on the reference block.

According to an embodiment of the present disclosure, when the prediction mode of the current block is the template matching prediction mode, the prediction decoder 2020 may reconstruct the current block by using the reference block. The reference block may be determined based on at least one of a region included in the current image or a region included in a previously decoded image. The prediction decoder 2020 may determine the prediction block by performing template matching intra prediction on the current image. In the present disclosure, a process of determining the reference block for the current block by using a template may be referred to as template matching (TM). In the present disclosure, performing prediction on the current block based on the TM may be referred to as template matching prediction (TMP) or template matching-based prediction.

The prediction decoder 2020 may generate the reconstructed current block by using the prediction block. According to an embodiment of the present disclosure, the prediction decoder 2020 may determine the prediction block as the reconstructed current block. According to an embodiment, the prediction decoder 2020 may generate the reconstructed current block by combining residual data obtained by the obtainer 2010 from a bitstream with the prediction block. The reconstructed current block may be used as a reference block for a next block.

In the prediction mode (e.g., the intra mode) in which the reference sample included in the current image is used, the prediction block of the current block may be generated based on neighboring samples of the current block according to the prediction mode on the assumption that there is a sequence between the neighboring samples of the current block and samples in the current block. The prediction decoder 2020 according to an embodiment of the present disclosure may use not only the neighboring samples of the current block included in the current image, but also a spatial reference sample included in the current image for the intra prediction. When a sample reconstructed before the current block is used, not only samples directly adjacent to the current block, but also samples far from the current block may be used to predict the samples of the current block, and thus, a size of residual data may be reduced. According to an embodiment of the present disclosure, the image decoding apparatus 2000 may perform the intra prediction by using the reference block including a sample not reconstructed, and thus, a range of a region which may be determined as the reference block may be increased. The image decoding apparatus 2000 according to an embodiment of the present disclosure may increase the intra prediction efficiency, thereby improving the compression efficiency.

In the prediction mode (e.g., the inter mode) in which the reference sample included in a reference image rather than the current image is used, the prediction block of the current block may be generated based on a reference block (or the reference sample) of the reference image according to the prediction mode on the assumption that there is a sequence between the current image and the reference image. The image decoding apparatus 2000 according to an embodiment of the present disclosure may increase the intra prediction efficiency, thereby improving the compression efficiency.

The image decoding apparatus 2000 may increase the prediction accuracy by taking into account both of the reference block (or the reference sample) included in the current image and the reference block (or the reference sample) included in an image which is not the current image. The image decoding apparatus 2000 according to an embodiment of the present disclosure may improve the prediction accuracy by taking into account both of the current image and the image which is not the current image.

The prediction decoder 2020 may perform deblocking filtering. A deblocking filter may improve image quality by smoothing an edge between blocks.

The prediction decoder 2020 may perform filtering on the sample of the current block on which the deblocking filtering is performed, by using a sample adaptive offset (SAO) filter and/or a bilateral filter (BIF). The SAO filter and the BIF may improve the image quality by reducing an error between a reconstructed image and an original image. The SAO filter and the BIF may perform filtering in a sample unit.

The prediction decoder 2020 may perform filtering by using an adaptive loop filter (ALF). The ALF may improve the image quality by reducing an error between a reconstructed image and an original image. The ALF may perform filtering in a block unit.

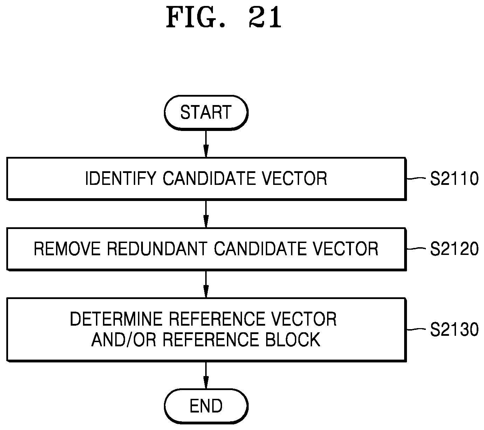

FIG. 21 is a flowchart of an image decoding method according to an embodiment of the present disclosure.

According to an embodiment of the present disclosure, the image decoding method may be performed by the image decoding apparatus 2000. For example, a processor of the image decoding apparatus 2000 may execute at least one instruction stored in memory to cause the image decoding apparatus 2000 to perform each of operations of the image decoding method.

In operation S2110, the image decoding apparatus 2000 may identify a candidate vector. According to an embodiment of the present disclosure, the candidate vector may include at least one of a motion vector or a block vector.

According to an embodiment of the present disclosure, the motion vector may include a two-dimensional vector indicating a coordinate of a reference image with respect to a coordinate of a current image. The motion vector may include a vector indicating a position of an upper left sample of a reference block included in a reference image with respect to a position of an upper left sample of a current block included in the current image.

According to an embodiment of the present disclosure, the block vector may include a two-dimensional vector indicating a coordinate of the reference block with respect to a coordinate of the current block. The reference block determined by the block vector may be included in the same image or the same slice as the current block.

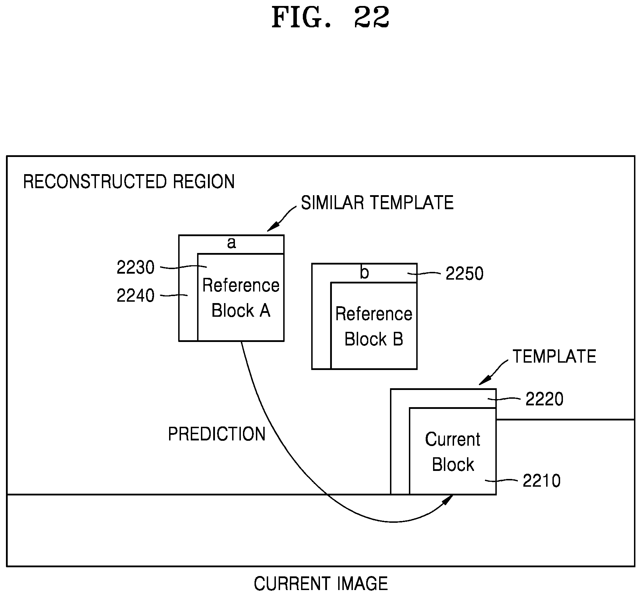

According to an embodiment of the present disclosure, the image decoding apparatus 2000 may identify (or determine) a candidate vector through a method described with reference to FIGS. 22 to 34.

According to an embodiment of the present disclosure, the image decoding apparatus 2000 may store the candidate vector in a candidate vector list. Candidate vectors determined according to an embodiment described below may be stored in the candidate vector list.

According to an embodiment of the present disclosure, the image decoding apparatus 2000 may determine the candidate vector to be used for template matching prediction. The image decoding apparatus 2000 may determine the reference block in the current image or a previously decoded image for the template matching prediction.

In operation S2120, the image decoding apparatus 2000 may remove a redundant candidate vector. When a plurality of redundant vectors are present from among identified candidate vectors, the image decoding apparatus 2000 may be configured to store only one of the plurality of redundant vectors.

In operation S2130, the image decoding apparatus 2000 may determine a reference vector and/or the reference block.

According to an embodiment of the present disclosure, the image decoding apparatus 2000 may determine the reference vector and/or the reference block by using a cost function. The image decoding apparatus 2000 may determine one or more reference blocks similar to a template of the current block or the reference vector indicating the reference block, by using the cost function.

According to an embodiment of the present disclosure, the image decoding apparatus 2000 may determine the reference block based on the candidate vector. The image decoding apparatus 2000 may determine the reference block (or a predictor) by using a weighted sum for one or more blocks indicated by one or more candidate vectors.

Operations S2110 to S2130 described in FIG. 21 are described as an example of an image decoding method. The image decoding apparatus 2000 may omit at least one or more of operations S2110 to S2130 or may additionally perform other operations.

FIG. 22 is a diagram for describing a template matching prediction mode according to an embodiment of the present disclosure.

Referring to FIG. 22, when a prediction mode of a current block 2210 is a template matching prediction mode, a reference block 2230 may be determined based on a reconstructed region.

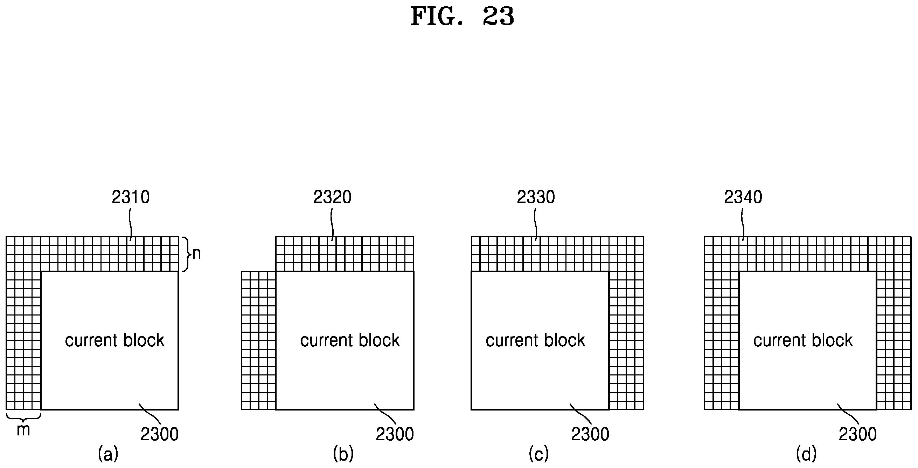

According to an embodiment of the present disclosure, the image decoding apparatus 2000 may reconstruct the current block 2210 by performing template matching prediction. The image decoding apparatus 2000 may determine a template 2220 of the current block 2210. According to an embodiment of the present disclosure, the image decoding apparatus 2000 may determine the template 2220 of the current block 2210 in an already reconstructed region. A shape of the template 2220 according to an embodiment of the present disclosure is described in detail with reference to FIG. 23.

According to an embodiment of the present disclosure, the image decoding apparatus 2000 may determine a reference block based on the template 2220 of the current block 2210. The image decoding apparatus 2000 may determine the reference block by using a template similar to the template 2220 in the reconstructed region. The image decoding apparatus 2000 may determine a block having the template similar to the template 2220 as the reference block. According to an embodiment of the present disclosure, the process in which the image decoding apparatus 2000 determines the reference block based on the template 2220 of the current block 2210 may be referred to as template matching.

According to an embodiment of the present disclosure, the image decoding apparatus 2000 may perform a comparison of samples included in the reconstructed region with the template 2220. For example, the image decoding apparatus 2000 may determine a similarity between samples included in a comparison template having the same shape as the template 2220 of the current block 2210 and the template 2220.

According to an embodiment of the present disclosure, the image decoding apparatus 2000 may determine the similarity between the templates by using a cost function. For example, the image decoding apparatus 2000 may determine the similarity between the templates by using at least one cost function from among a sum of absolute difference (SAD), a sum of absolute transformed difference (SATD), a sum of squared error (SSE), and a mean removed SAD (MR-SAD). For example, when the cost function is the SAD, the image decoding apparatus 2000 may determine the similarity based on a total sum of absolute values of differences between the sample included in the template 2220 of the current block 2210 and the sample included in the comparative template. The image decoding apparatus 2000 may determine the template similar to the template 2220 of the current block 2210, based on the similarity. For example, the image decoding apparatus 2000 may compare template A 2240 and template B 2250 with the template 2220 of the current block 2210 and may determine the template A 2240 having a less error as the similar template.

The image decoding apparatus 2000 may determine a reference block corresponding to the similar template as the reference block of the current block 2210. For example, the image decoding apparatus 2000 may determine the reference block A 2230 corresponding to the similar template 2240 as the reference block of the current block 2210. The image decoding apparatus 2000 may perform prediction on the current block 2210 based on a value of the reference block. According to an embodiment, the image decoding apparatus 2000 may determine the current block 2210 to be the same as the reference block.

According to an embodiment of the present disclosure, the image decoding apparatus 2000 may determine the similar template from among all available templates in the reconstructed region. For example, the image decoding apparatus 2000 may determine the similar template by comparing all or part of templates including reconstructed samples included in the reconstructed region with the template 2220 of the current block 2210. According to an embodiment, the image decoding apparatus 2000 may determine a partial region of the reconstructed region and may perform template matching only on the determined region.

According to an embodiment of the present disclosure, the image decoding apparatus 2000 may determine the template similar to the template 2220 of the current block 2210 in a block unit of the reconstructed region. For example, the image decoding apparatus 2000 may determine the similar template by comparing templates corresponding to blocks (for example, a transform block or a coding block) of the reconstructed region with the template 2220 of the current block 2210.

According to an embodiment of the present disclosure, the image decoding apparatus 2000 may determine a template for each predetermined interval. For example, the image decoding apparatus 2000 may determine the template for each three-pixel interval and compare the template with the template 2220 of the current block 2210.

According to an embodiment of the present disclosure, the image decoding apparatus 2000 may determine one reference template from a candidate list. According to an embodiment of the present disclosure, the image decoding apparatus 2000 may determine a most similar reference template by comparing a template corresponding to the candidate list with the template 2220 of the current block 2210. The image decoding apparatus 2000 may determine the reference block corresponding to the determined reference template, like a relationship between the template 2220 and the current block 2210.

According to an embodiment of the present disclosure, the image decoding apparatus 2000 may determine a plurality of reference templates from the candidate list. According to an embodiment of the present disclosure, the image decoding apparatus 2000 may determine the plurality of reference templates having a high similarity, by comparing the template corresponding to the candidate list with the template 2220 of the current block 2210. The image decoding apparatus 2000 may determine a plurality of reference blocks corresponding to the determined plurality of reference templates, like the relationship between the template 2220 and the current block 2210. The image decoding apparatus 2000 may predict the current block 2210 by using a weighted sum with respect to the plurality of reference blocks. According to an embodiment of the present disclosure, a weight may be determined based on a cost of each reference template or on a Wiener filter.

According to an embodiment of the present disclosure, the image decoding apparatus 2000 may determine the template by using a vector included in the candidate list. The image decoding apparatus 2000 may determine a position of the template by using the vector included in the candidate list. For example, the image decoding apparatus 2000 may determine the template based on a candidate pixel closest to a pixel moved from the current block 2210 by the vector. The candidate pixel may include a pixel in an integer unit or a pixel in a decimal unit, such as a 1/2 or 1/4 unit.

According to an embodiment of the present disclosure, the image decoding apparatus 2000 may perform filtering on the reference block, based on a ratio between the template 2220 of the current block 2210 and the reference template. For example, the image decoding apparatus 2000 may determine the current block 2210 by adjusting the reference block by a value corresponding to the ratio between the template 2220 of the current block 2210 and the reference template. According to an embodiment of the present disclosure, when the image decoding apparatus 2000 determines one reference template based on an integer unit pixel, the image decoding apparatus 2000 may perform filtering on the reference block based on the ratio between the template 2220 of the current block 2210 and the reference template.

FIG. 23 is a diagram for describing a template of a template matching prediction mode according to an embodiment of the present disclosure.

Referring to FIG. 23, templates 2310, 2320, 2330, 2340, and 2350 of a current block 2300 may have a plurality of shapes. According to an embodiment of the present disclosure, a shape of a template compared in a reconstructed region may be determined according to the templates of the current block 2300. According to an embodiment of the present disclosure, the template having the same shape as the templates 2310 and 2330 may be referred to as a template having an L-shape.

According to an embodiment of the present disclosure, the image decoding apparatus 2000 may determine the template of the current block 2300 to include at least one of a first template located at a left side of the current block, a second template located at an upper side of the current block, and a third template located at an upper left side of the current block. For example, the template 2310 may include the first template located at the left side of the current block, the second template located at the upper side of the current block, and the third template located at the upper left side of the current block, and the template 2320 may exclude the third template and include the first template and the second template. However, it is not limited thereto, and the template may include a template located at a right side of the current block 2300.

According to an embodiment of the present disclosure, the image decoding apparatus 2000 may perform template matching prediction by using the template 2330 including at least some of a right reference sample, an upper reference sample, and an upper right reference sample. The image decoding apparatus 2000 may determine the template based on a coding order (or a coding direction) of a block. According to an embodiment, when the coding of the block is performed from the right side to the left side, the image decoding apparatus 2000 may determine a reference block of the current bock 2300 or perform the template matching prediction by using the template 2330.

According to an embodiment of the present disclosure, the image decoding apparatus 2000 may determine the reference block of the current block 2300 or perform the template matching prediction by using the template 2340 including at least some of the right reference sample, the upper reference sample, a left reference sample, an upper left reference sample, and the upper right reference sample. According to an embodiment of the present disclosure, when the coding order (or the coding direction) of the block is changed, the image decoding apparatus 2000 may determine the reference block of the current block 2300 or perform the template matching prediction by using the template 2340 including a sample which may be referred to.

The template of the current block 2300 may include one or more reference lines. The first template may include m (here, m is an integer greater than or equal to 1) reference lines, and the second template may include n (here, n is an integer greater than or equal to 1) reference lines.

According to an embodiment of the present disclosure, when some samples of a template corresponding to the reference block are not reconstructed, the image decoding apparatus 2000 may determine the samples not reconstructed. For example, when a part of the first template is not reconstructed, the image decoding apparatus 2000 may determine a value of the sample not reconstructed and may determine the template by including the determined sample.

FIG. 23 is the diagram for describing the template according to an embodiment of the present disclosure but is not limited thereto. Templates of various shapes may be determined. Also, in the present disclosure, although it is described that the image decoding apparatus 2000 may perform template matching by using the template 2310 including all of the left reference sample, the upper reference sample, and the upper left reference sample, it is not limited thereto. As described in FIG. 23, the template matching prediction may be performed by using templates having various shapes.

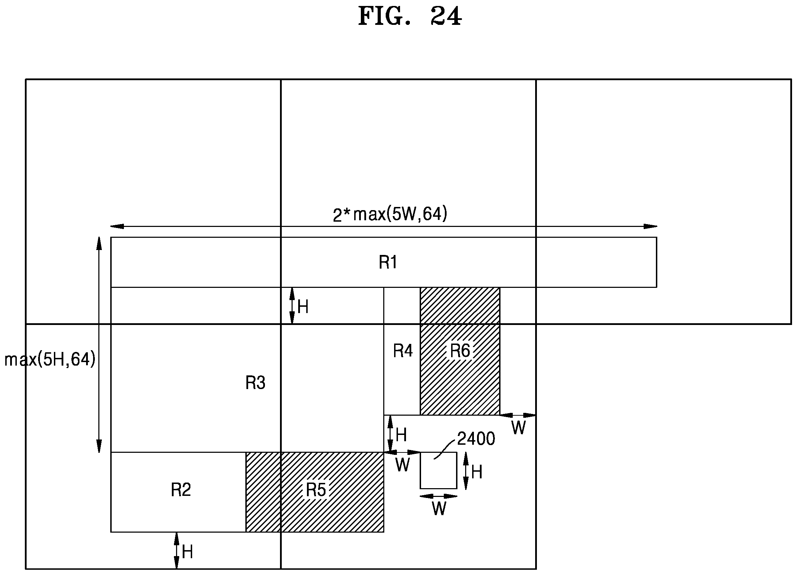

FIG. 24 is a diagram for describing a search range of a template matching prediction mode according to an embodiment of the present disclosure.

The image decoding apparatus 2000 may search for a template most similar to a template of a current block 2400 in a search range. The search range may include one or more predetermined search areas.

According to an embodiment of the present disclosure, the search area may be determined based on at least one of a width W or a height H of the current block 2400. Referring to FIG. 24, a first search area R1 may include a region apart from an edge of a CTU including the current block 2400 by a distance greater than the height H of the current block 2400. A width of the first search area may be determined based on the width W of the current block 2400. For example, the width of the first search area may be determined based on "a maximum value of 5*W and 64." A height of the first search area may be determined based on at least one of the height of the current block 2400 or positions (Xc, Yc) of the current block 2400. For example, the height of the first search area may be determined based on a difference between "a maximum value of "5*H and 64" and the height or the vertical position (Yc) of the current block 2400. Likewise, a second search area R2, a third search area R3, a fourth search area R4, a fifth search area R5, and a sixth search area R6 may be determined based on the width of the current block 2400, the height of the current block 2400, or the position of the current block 2400.

According to an embodiment of the present disclosure, the search area may be determined based on the CTU. For example, the search area may include the first search area included in the same CTU as the current block 2400, the second search area indicating a CTU located at an upper left side of the CTU including the current block 2400, the third search area indicating a CTU located at an upper side of the CTU including the current block 2400, and the fourth search area indicating a CTU located at a left side of the CTU including the current bock 2400. The search area may be determined based on the height or the width of the current block 2400.

According to an embodiment of the present disclosure, the image decoding apparatus 2000 may perform template matching by using a cost function (e.g., an SAD). The image decoding apparatus 2000 may determine a template for each predetermined interval. For example, a candidate may be determined in a pixel window having a predetermined size. The image decoding apparatus 2000 may identify a sampling factor related to the predetermined interval and perform the template matching based on the sampling factor. For example, when the sampling factor is 3, the image decoding apparatus 2000 may determine the candidate in a 3x3 pixel window.

According to an embodiment of the present disclosure, the image decoding apparatus 2000 may perform the template matching prediction based on the width or the height of the current block 2400. For example, the image decoding apparatus 2000 may perform the template matching prediction on a coding unit in which the width and the height of the current block 2400 are less than or equal to 64. A flag with respect to the template matching prediction may be signaled through a coding unit syntax.

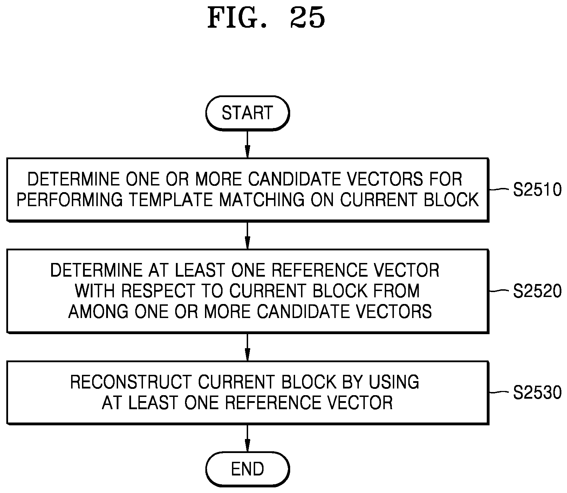

FIG. 25 is a flowchart of an image decoding method according to an embodiment of the present disclosure.

According to an embodiment of the present disclosure, the image decoding method may be performed by the image decoding apparatus 2000. For example, a processor of the image decoding apparatus 2000 may execute at least one instruction stored in memory to cause the image decoding apparatus 2000 to perform each of operations of the image decoding method.

In operation S2510, the image decoding apparatus 2000 may determine one or more candidate vectors for performing template matching on a current block. The candidate vector may include at least one of a motion vector or a block vector.

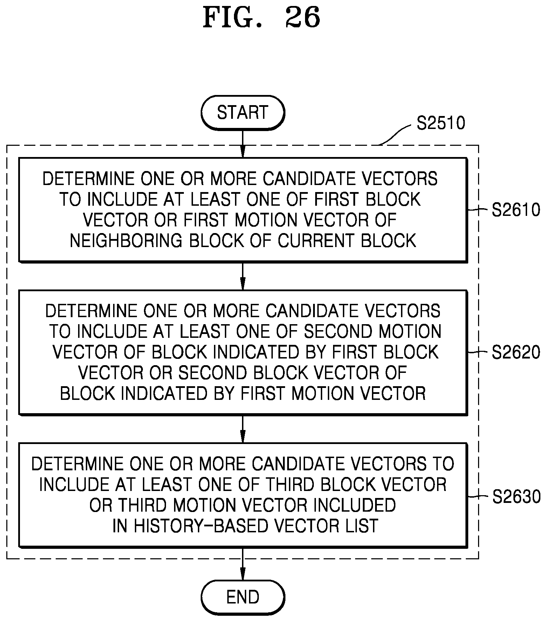

According to an embodiment of the present disclosure, the image decoding apparatus 2000 may determine the candidate vector based on a neighboring block. The image decoding apparatus 2000 may determine the candidate vector based on a block vector and/or a motion vector of the neighboring block. For example, the image decoding apparatus 2000 may determine the block vector and/or the motion vector of the neighboring block as the candidate vector. A process in which the candidate vector is determined by using the vector of the neighboring block according to an embodiment of the present disclosure is described in detail with reference to FIGS. 26 to 28. For example, the image decoding apparatus 2000 may determine the candidate vector based on a block vector and/or a motion vector of a block indicated by the block vector and/or the motion vector of the neighboring block.

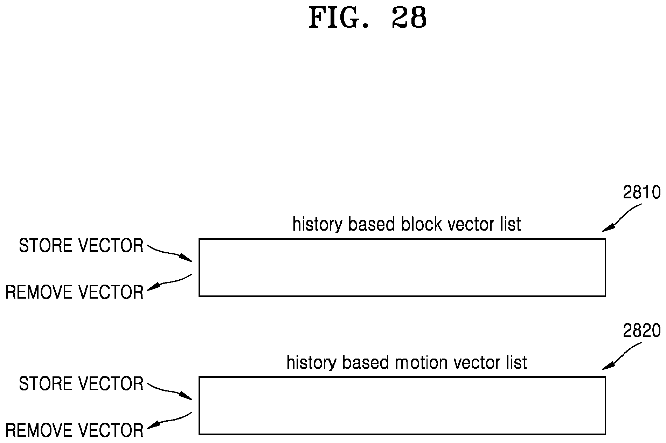

According to an embodiment of the present disclosure, the image decoding apparatus 2000 may determine the candidate vector based on a candidate vector list. The image decoding apparatus 2000 may determine at least one reference vector included in the candidate vector list as the candidate vector. A process in which the candidate vector is determined by using the candidate vector list according to an embodiment of the present disclosure is described in detail with reference to FIGS. 26 and 28.

In operation S2520, the image decoding apparatus 2000 may determine at least one reference vector for the current block from among the one or more candidate vectors. According to an embodiment of the present disclosure, the image decoding apparatus 2000 may determine the at least one reference vector by using a cost function. The image decoding apparatus 2000 may compare a template of the current block with a template of a block indicated by the candidate vector. The image decoding apparatus 2000 may determine a candidate vector of a block having a template similar to the template of the current block as the reference vector.

In operation S2530, the image decoding apparatus 2000 may reconstruct the current block by using the at least one reference vector. The image decoding apparatus 2000 may determine a reference block indicated by the reference vector. The image decoding apparatus 2000 may generate a prediction block by using the reference block. The image decoding apparatus 2000 may reconstruct the current block based on the prediction block.

Operations S2510 to S2530 described in FIG. 25 are described as an example of an image decoding method. The image decoding apparatus 2000 may omit at least one or more of operations S2510 to S2530 or may additionally perform other operations.

FIG. 26 is a flowchart of a process of determining a candidate vector, according to an embodiment of the present disclosure.

According to an embodiment of the present disclosure, the image decoding method may be performed by the image decoding apparatus 2000. For example, a processor of the image decoding apparatus 2000 may execute at least one instruction stored in memory to cause the image decoding apparatus 2000 to perform each of operations of the image decoding method. According to an embodiment of the present disclosure, operation S2510 of FIG. 25 may include at least one of operations S2610 to S2630.

In operation S2610, the image decoding apparatus 2000 may determine one or more candidate vectors to include at least one of a first block vector or a first motion vector of a neighboring block of a current block.

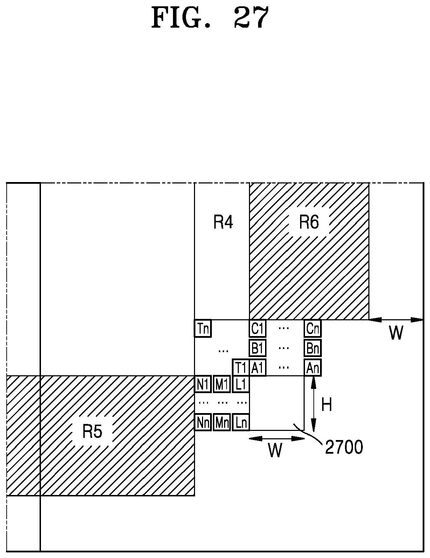

According to an embodiment of the present disclosure, the neighboring block may include at least one of an adjacent block and a non-adjacent block. The adjacent block may include a block adjacent to the current block. The non-adjacent block may include a block not adjacent to the current block but located within a predetermined distance from the current block. The neighboring block according to an embodiment of the present disclosure is described in detail with reference to FIG. 27. According to an embodiment of the present disclosure, the neighboring block may be included in a region excluding a reference block search range.

According to an embodiment of the present disclosure, the image decoding apparatus 2000 may identify a block vector and/or a motion vector of the neighboring block of the current block. The memory of the image decoding apparatus 2000 may store a block vector and/or a motion vector used or determined to be used for prediction of the neighboring block. According to an embodiment of the present disclosure, the image decoding apparatus 2000 may determine at least one of the identified block vector and motion vector of the neighboring block as the candidate vector.

In operation S2620, the image decoding apparatus 2000 may determine one or more candidate vectors to include at least one of a second motion vector of a block indicated by the first block vector or a second block vector of a block indicated by the first motion vector.

According to an embodiment of the present disclosure, the image decoding apparatus 2000 may determine a block vector and/or a motion vector of a block indicated by the block vector and/or the motion vector as the candidate vector. According to an embodiment of the present disclosure, the image decoding apparatus 2000 may determine the candidate vector by repeating a process of identifying the block vector and/or the motion vector of the block indicated by the block vector and/or the motion vector a plurality of times.

In operation S2630, the image decoding apparatus 2000 may determine the one or more candidate vectors to include at least one of a third block vector or a third motion vector included in a history-based vector list.

According to an embodiment of the present disclosure, the image decoding apparatus 2000 may identify a block vector and/or a motion vector stored in the history-based vector list. The image decoding apparatus 2000 may determine at least one of the identified block vector or motion vector as the candidate vector.

According to an embodiment of the present disclosure, the image decoding apparatus 2000 may determine a vector indicating a block of a previous image or a next image located in the same position as the current block as a reference vector. Alternatively, the image decoding apparatus 2000 may determine the block of the previous image or the next image located in the same position as the current block as a reference block.

Operations S2610 to S2630 described in FIG. 26 are described as an example of an image decoding method. The image decoding apparatus 2000 may omit at least one or more of operations S2610 to S2630 or may additionally perform other operations. Also, the performing order of operations S2610 to S2630 may be changed. According to an embodiment of the present disclosure, the image decoding apparatus 2000 may include at least one or more of operations S2610 to S2630.

For example, the image decoding apparatus 2000 may include only operation S2610. The image decoding apparatus 2000 may determine the one or more candidate vectors to include the at least one of the first block vector or the first motion vector of the neighboring block of the current block.

For example, the image decoding apparatus 2000 may include only operation S2620. The image decoding apparatus 2000 may determine the one or more candidate vectors to include the at least one of the second motion vector of the block indicated by the first block vector or the second block vector of the block indicated by the first motion vector.

For example, the image decoding apparatus 2000 may include only operation S2630. The image decoding apparatus 2000 may determine the one or more candidate vectors to include the at least one of the third block vector or the third motion vector included in the history-based vector list.

However, it is not limited thereto, and the image decoding apparatus 2000 may perform at least one or more of operations S2610 to S2630. The image decoding apparatus 2000 may perform at least one of the determining of the one or more candidate vectors to include the at least one of the first block vector or the first motion vector of the neighboring block of the current block, the determining of the one or more candidate vectors to include the at least one of the second motion vector of the block indicated by the first block vector of the neighboring block of the current block or the second block vector of the block indicated by the first motion vector of the neighboring block of the current block, or the determining of the one or more candidate vectors to include the at least one of the third block vector or the third motion vector included in the history-based vector list.

FIG. 27 is a diagram for describing a neighboring block of a current block, according to an embodiment of the present disclosure.

According to an embodiment of the present disclosure, the image decoding apparatus 2000 may determine a candidate vector with respect to template matching by using the neighboring block. The candidate vector may include a block vector and/or a motion vector. The block vector may denote a vector indicating a coordinate of the same image or slice. For example, the block vector may be used in a block copy mode or a template matching prediction mode. The image decoding apparatus 2000 may identify the block vector and/or the motion vector of the neighboring block.

According to an embodiment of the present disclosure, the neighboring block may have both the block vector and the motion vector. For example, when the neighboring block is predicted by using a CIIP mode, the neighboring block may include the block vector according to intra prediction and the motion vector according to inter prediction. Also, for example, the block vector and the motion vector may be determined as a candidate vector for prediction of the neighboring block, and the prediction may be performed by using only one of the determined block vector and motion vector.

According to an embodiment of the present disclosure, the neighboring block may denote a block having a distance from a current block 2700, the distance being less than or equal to a predetermined value. For example, the neighboring block may include a block located to have a vertical distance from the current block 2700, the vertical distance being less than or equal to a height of the current block 2700, and a horizontal distance from the current block 2700, the horizontal distance being less than or equal to a width of the current block 2700.

According to an embodiment of the present disclosure, the image decoding apparatus 2000 may identify the block vector and/or the motion vector of an adjacent block. The adjacent block may denote a neighboring block having an edge adjacent to the current block 2700. For example, the adjacent block may include left blocks L1, ..., and Ln of the current block 2700, upper blocks A1, ..., and An of the current block 2700, and an upper left block T1 of the current block 2700.

According to an embodiment of the present disclosure, the image decoding apparatus 2000 may identify the block vector and/or the motion vector of a non-adjacent block. The non-adjacent block may denote a neighboring block having an edge not adjacent to the current block 270. For example, the non-adjacent block may include left blocks M1, ... Mn, N1, ..., and Nn of the current block 2700, upper blocks B1, ..., Bn, C1, ..., and Cn of the current block 2700, and an upper left block Tn (except for T1) of the current block 2700.

The image decoding apparatus 2000 may determine the motion vector as the candidate vector when there is no block vector and there is only the motion vector in the neighboring block. The image decoding apparatus 2000 may determine both of the block vector and the motion vector as the candidate vector when there are both of the block vector and the motion vector in the neighboring block. The image decoding apparatus 2000 may perform pruning to include either one of the block vector and the motion vector that are redundant.

According to an embodiment of the present disclosure, the image decoding apparatus 2000 may determine a motion vector of a block indicated by the block vector of the neighboring block as the candidate vector. For example, the image decoding apparatus 2000 may determine the motion vector of the block indicated by the block vector of at least one of the adjacent block L1 or the non-adjacent block M1 as the candidate vector. Likewise, the image decoding apparatus 2000 may determine a motion vector and/or a block vector of a block indicated by the motion vector and/or the block vector of the neighboring block as the candidate vector.

FIG. 28 is a diagram for describing a block vector list according to an embodiment of the present disclosure.

According to an embodiment of the present disclosure, the image decoding apparatus 2000 may determine a candidate vector by using a history-based candidate vector list. According to an embodiment of the present disclosure, the history-based vector list may include a history-based block vector list 2810 and/or a history-based motion vector list 2820. The history-based vector list may be stored and output by a method of first in first out (FIFO). That is, the history-based vector list may first output data temporarily first stored. The history-based vector list may store N (N>1) vectors. The history-based vector list may be initialized in a CTU, a tile, or a slice.

The history-based block vector list 2810 may store and output a block vector. According to an embodiment of the present disclosure, the history-based vector list 2810 may store at least one of a block vector with respect to a template matching prediction mode or a block vector with respect to an intra block copy mode. The history-based block vector list 2810 may store only the block vector of template matching prediction. The history-based block vector list 2810 may store the block vector of the template matching prediction and the block vector of the block copy mode.

According to an embodiment of the present disclosure, the history-based block vector list 2810 may be generated for each of the template matching prediction mode and the block copy mode. According to an embodiment of the present disclosure, the template matching prediction mode and the block copy mode may share one history-based block vector list 2810.

The history-based motion vector list 2820 may store and output a motion vector. According to an embodiment of the present disclosure, the history-based motion vector list 2820 may include a previously stored motion vector.

According to an embodiment of the present disclosure, the history-based motion vector list 2820 may be generated for each of the template matching prediction mode and the block copy mode. According to an embodiment of the present disclosure, the template matching prediction mode and the block copy mode may share one history-based motion vector list 2820.

According to an embodiment of the present disclosure, the history-based block vector list 2810 and the history-based motion vector list 2820 may include one history-based vector list to store the block vector and the motion vector.

According to an embodiment of the present disclosure, the history-based vector list may include at least one of the history-based block vector list 2810 including one or more block vectors or the history-based motion vector list 2820 including one or more motion vectors. The block vector for the template matching prediction mode and the block vector for the intra block copy mode may be stored in at least one of the history-based block vector list 2810 or the history-based motion vector list 2820.

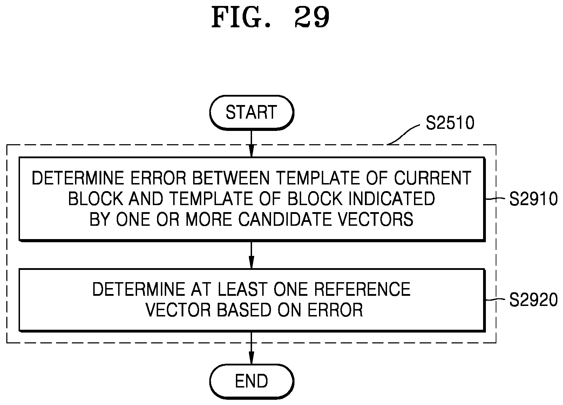

FIG. 29 is a flowchart of an image decoding method according to an embodiment of the present disclosure.

According to an embodiment of the present disclosure, the image decoding method may be performed by the image decoding apparatus 2000. For example, a processor of the image decoding apparatus 2000 may execute at least one instruction stored in memory to cause the image decoding apparatus 2000 to perform each of operations of the image decoding method.

In operation S2910, the image decoding apparatus 2000 may determine an error between a template of a current block and a template of a block indicated by one or more candidate vectors.

According to an embodiment of the present disclosure, the image decoding apparatus 2000 may determine the error by using a cost function. The image decoding apparatus 2000 may determine the error between the template of the current block and the template of the block indicated by the candidate vector by using the cost function. The cost function may include at least one of an SAD, an SATD, an SSE, or an MR-SAD. The error may be alternatively referred to by the term "cost" or "template cost."

In operation S2920, the image decoding apparatus 2000 may determine at least one reference vector based on the error. According to an embodiment of the present disclosure, the image decoding apparatus 2000 may determine one or more vectors as the reference vector in order of the one or more vectors having a less error.

Operations S2910 and S2920 described in FIG. 29 are described as an example of an image decoding method. The image decoding apparatus 2000 may omit at least one or more of operations S2910 and S2920 or may additionally perform other operations.

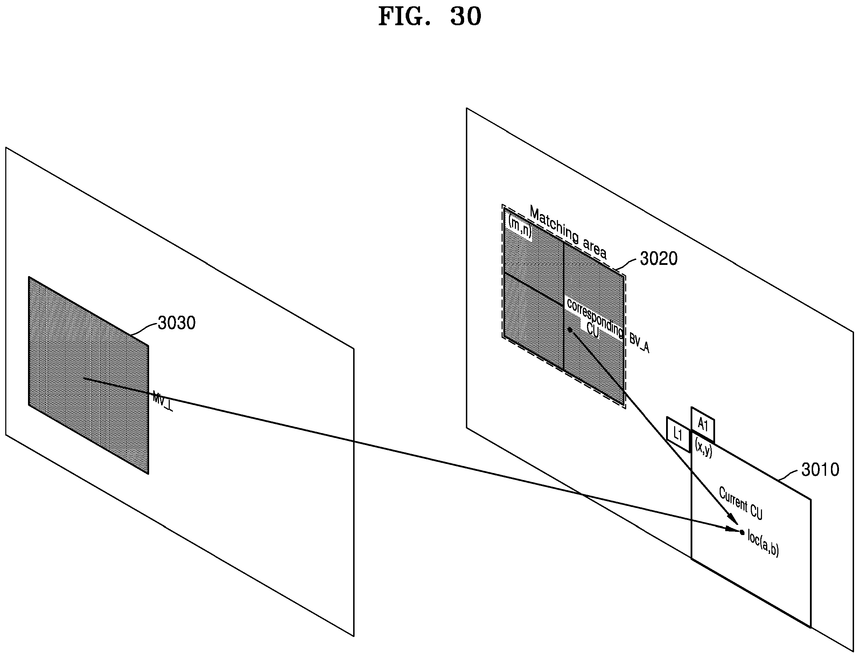

FIG. 30 is a diagram for describing prediction of a current block by using a cost function, according to an embodiment of the present disclosure.

The image decoding apparatus 2000 may determine a candidate vector. The candidate vector according to an embodiment of the present disclosure may be determined based on the embodiments described above. The image decoding apparatus 2000 may identify a block vector and/or a motion vector of a neighboring block. Referring to FIG. 30, a neighboring block A1 may have a block vector BV_A, and a neighboring block L1 may have a motion vector MV_L.

The image decoding apparatus 2000 may determine the block vector and/or the motion vector of the neighboring block as a candidate vector of a current block 3010. The image decoding apparatus 2000 may perform prediction on the current block 3010 by using a block indicated by one or more reference vectors from the candidate vector. A block 3020 indicated by the block vector BV_A and a block 3030 indicated by the motion vector MV_L may be a candidate of a reference block for predicting the current block 3010. According to an embodiment of the present disclosure, a block (or a region) indicated by a vector may be alternatively referred to by the term "predictor" or "matching area." According to an embodiment of the present disclosure, the candidate of the reference block may be alternatively referred to by the term "candidate block," "predictor," "reference area," or "matching area."

According to an embodiment of the present disclosure, the image decoding apparatus 2000 may compare the candidate vector (the block vector and/or the motion vector) by using a cost function. The image decoding apparatus 2000 may compare a template of the current block 3010 with a template of blocks 3020 and 3030 indicated by the candidate vector by using the cost function. The image decoding apparatus 2000 may determine one or more candidate vectors as the reference vector, the one or more candidate vectors having a less error according to the cost function.

According to an embodiment of the present disclosure, the image decoding apparatus 2000 may determine a plurality of reference vectors. The image decoding apparatus 2000 may determine a candidate vector having a less error as the reference vector. For example, the image decoding apparatus 2000 may determine a candidate vector having a smallest error as a first reference vector and a candidate vector having a second smallest error as a second reference vector. The image decoding apparatus 2000 may determine blocks (or predictors) indicated by the plurality of candidate vectors. The image decoding apparatus 2000 may determine a final reference block (or a final predictor) based on a weighted sum with respect to the blocks (or the predictors) indicated by the plurality of candidate vectors. For example, the final reference block (or the final predictor) may be determined by Equation 1. However, it is not limited to Equation 1, and the final reference block may be determined by using a plurality of reference blocks.

The final reference block = weight 1 * a smallest error reference block + weight 2 * a second smallest error reference block [Equation 1]

According to an embodiment of the present disclosure, the weight may be a value predetermined by the image decoding apparatus 2000. According to an embodiment of the present disclosure, the image decoding apparatus 2000 may determine the weight based on the error.

According to an embodiment of the present disclosure, the image decoding apparatus 2000 may determine one reference vector. The image decoding apparatus 2000 may determine the candidate vector having the smallest error as the reference vector. The image decoding apparatus 2000 may determine a block (or a predictor) indicated by the reference vector. The image decoding apparatus 2000 may determine the final reference block (or the final predictor) based on a weighted sum of the block (or the predictor) indicated by the reference vector (or the candidate vector having the smallest error) and a block (or a predictor) indicated by a default intra mode. For example, the final reference block (or the final predictor) may be determined by Equation 2.

The final reference block = weight 1 * a smallest error reference block + weight 2 * a default intra mode-based reference block [Equation 2]

The default intra mode may be determined based on a certain condition. The default intra mode may be selected from among a plurality of intra modes according to a certain condition.

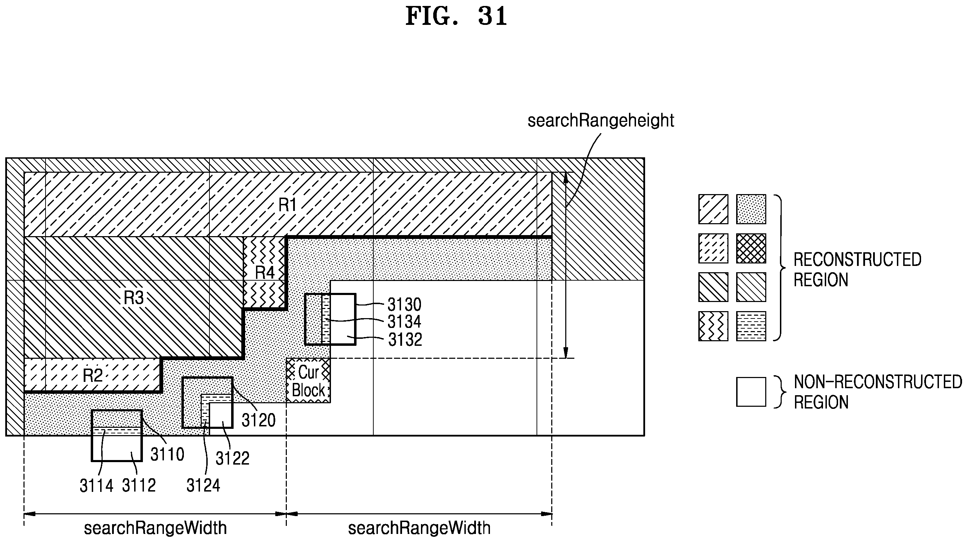

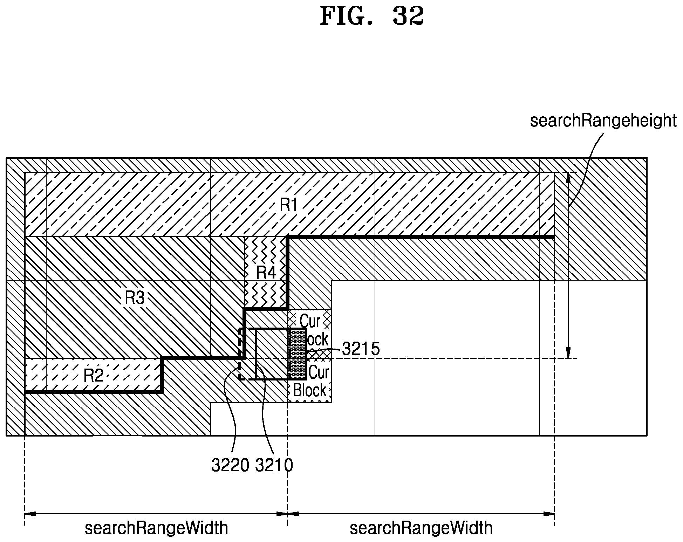

According to an embodiment of the present disclosure, some samples of the block indicated by the reference vector of the current block may not be reconstructed. Referring to FIGS. 31 and 32, a process in which the image decoding apparatus 2000 determines a reference block not reconstructed is described.

FIG. 31 is a diagram for determining the reference block which is not reconstructed, according to an embodiment of the present disclosure.

According to an embodiment of the present disclosure, a current image may be reconstructed in a certain direction. For example, the current image may be reconstructed in a right direction from a block located at a left edge of the current image. According to an embodiment of the present disclosure, a plurality of blocks of the current image may be reconstructed in parallel. For example, the plurality of blocks included in the current image may be separately reconstructed for each row. For example, the plurality of blocks in a second column may be reconstructed separately from the plurality of blocks in a first column. According to an embodiment of the present disclosure, a current block may be reconstructed by using a reference block including a reconstructed sample of the current image.

According to an embodiment of the present disclosure, the image decoding apparatus 2000 may determine the reference block in a current image. According to an embodiment of the present disclosure, the image decoding apparatus 2000 may determine the reference block with respect to a current block by using a block vector. The block vector may indicate a vector indicating the reference block. For example, the block vector may be a position vector for an upper left sample of the reference block with respect to an upper left sample of the current block. The block vector may be used when a prediction mode of the current block is a block copy mode or a template matching prediction mode. The image decoding apparatus 2000 may reconstruct the current block by using the reference block. According to an embodiment of the present disclosure, the reference block may be determined by using an upper left position of the reference block, a height of the reference block, and a width of the reference block.

According to an embodiment of the present disclosure, the upper left sample of the reference block may be determined in a reconstructed region. According to an embodiment of the present disclosure, at least part of the reference block determined by the image decoding apparatus 2000 may not be reconstructed. When a vertical distance between the upper left sample of the reference block and an edge of the reconstructed region is less than or equal to the height of the reference block and/or when a horizontal position between the upper left sample of the reference block and the edge of the reconstructed region is less than or equal to the width of the reference block, at least some samples of the reference block may not be reconstructed. Referring to FIG. 31, for example, the reference block not reconstructed may include one of a first reference block 3110 in which lower samples are not reconstructed, a second reference block 3120 in which lower right samples are not reconstructed, and a third reference block 3130 in which right samples are not reconstructed.

According to an embodiment of the present disclosure, the image decoding apparatus 2000 may determine the samples not reconstructed, by using reconstructed sample. The first reference block 3110 may include non-reconstructed samples 3112 and reference samples 3114 for determining the non-reconstructed samples 3112. Likewise, the second reference block 3120 may include non-reconstructed samples 3122 and reference samples 3124 for determining the non-reconstructed samples 3122, and the third reference block 3130 may include non-reconstructed samples 3132 and reference samples 3134 for determining the non-reconstructed samples 3132.

According to an embodiment of the present disclosure, the image decoding apparatus 2000 may determine the non-reconstructed samples to be the same as the reference samples. For example, the image decoding apparatus 2000 may determine the sample to be the same as the reference sample 3114 of the first reference block 3110 that is reconstructed and located at a lowermost edge. The image decoding apparatus 2000 may determine the non-reconstructed samples 3112 by padding the reference sample 3114. That is, in the case of the first reference block 3110 in which the lower samples are not reconstructed, a horizontal coordinate of the non-reconstructed samples 3112 may be determined to be the reference sample 3114. Also, for example, the image decoding apparatus 2000 may determine the non-reconstructed samples 3132 to be the same as the reference sample 3134 of the third reference block 3130 which is reconstructed and located at a rightmost edge. That is, in the case of the third reference block 3130 in which the right samples are not reconstructed, a vertical coordinate of the non-reconstructed samples 3132 may be determined to be the reference sample 3134.

According to an embodiment of the present disclosure, the image decoding apparatus 2000 may determine the non-reconstructed sample by using a weighted sum of the reconstructed samples. According to an embodiment of the present disclosure, the image decoding apparatus 2000 may determine a value of the non-reconstructed sample by using a weight of a value of the reference samples 3124 adjacent to the non-reconstructed sample 3122 of the second reference block 3120. For example, the image decoding apparatus 2000 may determine the non-reconstructed sample by using a weighted sum of the reference samples 3124 including a left sample and an upper sample adjacent to the non-reconstructed sample 3122. According to an embodiment, the weights used for the weighted sum may have the same ratio. For example, the weights for the upper reference sample and the left reference sample may be 1:1. According to an embodiment of the present disclosure, the weight used for the weighted sum may be determined based on a ratio between a width and a height of the non-reconstructed region.

According to an embodiment of the present disclosure, the image decoding apparatus 2000 may determine the non-reconstructed sample by using a setting value with respect to the current image. According to an embodiment, the image decoding apparatus 2000 may determine a value of the non-reconstructed sample by using a bit depth of the current image. For example, the image decoding apparatus 2000 may determine the value of the non-reconstructed sample to be a median value of the bit depth of the current image.

According to an embodiment of the present disclosure, the image decoding apparatus 2000 may determine the non-reconstructed samples 3112, 3122, and 3132 by using intra prediction.

According to an embodiment of the present disclosure, the intra prediction mode may include a DC mode or a planar mode. According to an embodiment, the image decoding apparatus 2000 may determine the non-reconstructed samples 3122 by performing intra prediction in the DC mode or the planar mode by using the reference samples 3124.

According to an embodiment of the present disclosure, the intra prediction mode may include a directional intra prediction mode. According to an embodiment, the image decoding apparatus 2000 may determine the non-reconstructed samples 3112, 3122, and 3132 by performing intra prediction in a directional intra mode by using the reference samples 3114, 3124, and 3134.

According to an embodiment of the present disclosure, the intra prediction mode may be determined by using a most probable mode (MPM) of a current block. According to an embodiment, the image decoding apparatus 2000 may determine the intra prediction mode by using an MPM list of the current block. The image decoding apparatus 2000 may determine the non-reconstructed samples 3112, 3122, and 3132 by performing intra prediction in the determined intra mode by using the reference samples 3114, 3124, and 3134.

According to an embodiment of the present disclosure, the intra prediction mode may be determined by using an intra prediction mode of a reconstructed region. According to an embodiment, the image decoding apparatus 2000 may determine the intra prediction mode of the reconstructed region as the intra prediction mode. The image decoding apparatus 2000 may determine the non-reconstructed samples 3112, 3122, and 3132 by performing intra prediction in the determined intra mode by using the reference samples 3114, 3124, and 3134.

According to an embodiment of the present disclosure, the intra prediction mode may be determined by using template-based intra mode derivation (TIMD). The image decoding apparatus 2000 may determine the intra prediction mode from the reference samples 3114, 3124, and 3134 of a template.

According to an embodiment of the present disclosure, the intra prediction mode may be determined by using decoder side intra mode derivation (DIMD). The DIMD may denote a process of obtaining an intra mode of a current block based on a gradient of a template of the current block. According to an embodiment of the present disclosure, the image decoding apparatus 2000 may determine the reference samples 3114, 3124, and 3134 of the reference blocks 3110, 3120, and 3130 as a template for the non-reconstructed samples 3112, 3122, and 3132. The image decoding apparatus may determine a gradient by using the reference samples 3114, 3124, and 3134 of the template. According to an embodiment of the present disclosure, the image decoding apparatus 2000 may determine the gradient by using a Sobel filter. For example, the image decoding apparatus 2000 may determine a horizontal change amount and a vertical change amount with respect to one sample, by using one sample from among the reference samples 3114, 3124, and 3134 and a neighboring sample. The image decoding apparatus 2000 may determine the gradient based on a ratio between the vertical change amount and the horizontal change amount. The image decoding apparatus 2000 may determine the gradient for the samples included in the template.

According to an embodiment of the present disclosure, the image decoding apparatus 2000 may determine the intra prediction mode of the reference block, based on the gradient of the samples included in the template. According to an embodiment of the present disclosure, the image decoding apparatus 2000 may determine the intra prediction mode corresponding to a most frequent gradient from among the gradients of the samples included in the template.

According to an embodiment of the present disclosure, the image decoding apparatus 2000 may determine the intra prediction modes corresponding to the gradients of the samples included in the template. The image decoding apparatus 2000 may determine the non-reconstructed samples 3112, 3122, and 3132 by using the plurality of intra prediction modes. For example, the image decoding apparatus 2000 may perform intra prediction by using three most frequent gradients from among the gradients of the samples included in the template. The image decoding apparatus 2000 may determine the non-reconstructed samples 3112, 3122, and 3132 by assigning a weight to the intra predicted samples.

According to an embodiment of the present disclosure, when the image decoding apparatus 2000 obtains the intra mode of the current block through the DMID, the image decoding apparatus 2000 may not obtain, from a bitstream, information for determining the intra prediction mode (e.g., a multi reference line (MRL) index, an intra sub-partitioning (ISP) index, an MPM flag, or an intra prediction mode (IPM) index). For example, the image decoding apparatus 2000 may obtain a DIMD flag with respect to whether or not to apply the DIMD (or whether or not to obtain the information with respect to the intra prediction mode). When the DIMD flag indicates not to apply the DIMD, the image decoding apparatus 2000 may obtain the information for determining the intra prediction mode. When the DIMD flag indicates to apply the DIMD, the image decoding apparatus 2000 may not obtain the information for determining the intra prediction mode and may determine the intra prediction mode through the DIMD.

According to an embodiment of the present disclosure, the image decoding apparatus 2000 may determine the non-reconstructed samples 3112, 3122, and 3132 by using a template matching intra prediction mode. The image decoding apparatus 2000 may determine a template including the reference samples 3114, 3124, and 3134. The image decoding apparatus 2000 may determine the non-reconstructed samples 3112, 3122, and 3132 by performing template matching intra prediction by using the template including the reference samples 3114, 3124, and 3134.

FIG. 32 is a diagram for determining a reference block which is not reconstructed, according to an embodiment of the present disclosure.

Referring to FIG. 32, a region 3215 of a block 3210 indicated by a reference vector may not be reconstructed. According to an embodiment of the present disclosure, the image decoding apparatus 2000 may reconstruct a current block by using the block 3210 of which one or more samples 3215 are not reconstructed.

According to an embodiment of the present disclosure, the image decoding apparatus 2000 may reconstruct at least some samples 3215 of the block 3210 indicated by the reference vector, the samples 3215 being not reconstructed, by using a motion vector of the current block. The image decoding apparatus 2000 may reconstruct the at least one or more non-reconstructed sample 3215 of the block 3210 by using the motion vector not used as the reference vector from among candidate vectors. The image decoding apparatus 2000 may perform filtering on the at least one or more reconstructed samples. For example, the image decoding apparatus 2000 may apply a smoothing filter to the at least one or more reconstructed samples.

According to an embodiment of the present disclosure, the image decoding apparatus 2000 may obtain a sample difference value with respect to the at least one or more non-reconstructed samples 3215. The image decoding apparatus 2000 may obtain the sample difference value from a bitstream. For example, the at least one or more non-reconstructed samples 3215 may be encoded and decoded by using block-based differential pulse code modulation (BDPCM).

According to an embodiment of the present disclosure, the sample difference value may be signaled through a sequence parameter set of the bitstream. The sample difference value may be signaled through the sequence parameter set in a transform skip mode.

The image decoding apparatus 2000 may determine values of the at least one or more non-reconstructed samples by using the obtained sample difference value. The difference value may denote a value of a difference between samples sequential in a horizontal direction or a vertical direction. For example, in the case of horizontal BDPCM, a sample value $S_{i+1,j}$ of a coordinate (i+1, j) may be determined by adding a difference value $Q_{i,j}$ to a sample value $S_{i,j}$ of a coordinate (i, j). Information about whether the sample difference value is for a horizontal direction or a vertical direction may be signaled through a bitstream.

According to an embodiment of the present disclosure, the image decoding apparatus 2000 may correct a position of the block 3210 to reconstruct all samples of the block 3210 indicated by the reference vector. For example, when a portion of the block 3210 indicated by the reference vector overlaps the current block, the image decoding apparatus 2000 may correct the position of the block 3210. The image decoding apparatus 2000 may determine a block 3220 in which all samples are reconstructed, by correcting the position of the block 3210.

According to an embodiment of the present disclosure, the image decoding apparatus 2000 may correct the position of the block 3210 in a horizontal direction or a vertical direction. For example, when a left region of the block 3210 indicated by the reference vector overlaps the current block, the position of the block 3210 may be corrected in the horizontal direction. Also, for example, when a lower region of the block 3210 indicated by the reference vector overlaps the current block, the position of the block 3210 may be corrected in the vertical direction. The image decoding apparatus 2000 may correct the position of the block 3210 to make the current block and the block 3220 adjacent to each other.

According to an embodiment of the present disclosure, the image decoding apparatus 2000 may reconstruct the current block by using the block of which the position is corrected.

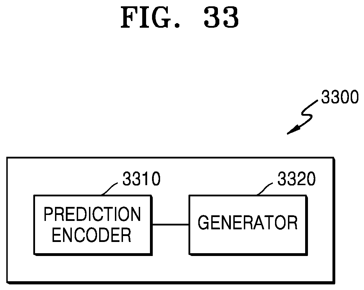

FIG. 33 is a block diagram illustrating components of an image encoding apparatus according to an embodiment of the present disclosure.

Referring to FIG. 33, an image encoding apparatus 3300 may include a prediction encoder 3310 and a generator 3320.

According to an embodiment of the present disclosure, the prediction encoder 3310 and the generator 3320 may be realized by at least one processor. According to an embodiment of the present disclosure, the image encoding apparatus 3300 may include memory storing input and output data of the prediction encoder 3310 and the generator 3320. The prediction encoder 3310 and the generator 3320 may operate according to an instruction stored in the memory. According to an embodiment of the present disclosure, the image encoding apparatus 3300 may include a memory controller configured to control data inputting and outputting of the memory.

According to an embodiment of the present disclosure, the prediction encoder 3310 may correspond to the prediction encoder 1915 illustrated in FIG. 19. According to an embodiment of the present disclosure, the generator 3320 may correspond to the entropy encoder 1925 illustrated in FIG. 19.

The prediction encoder 3310 may determine a prediction mode of a current block. The current block may include at least one of a CTU, a coding unit, a transform unit, or a prediction unit split from a current image to be encoded. According to an embodiment of the present disclosure, the prediction mode of the current block may include at least one of an intra mode, an inter mode, a combined mode, a geometric partitioning mode, a block copy mode, or a template matching prediction mode. According to an embodiment, the block copy mode may include an intra block copy mode. According to an embodiment, the intra block copy mode may be a submode of the intra mode. However, the intra block copy mode is not limited thereto and may indicate a mode separate from the intra mode. According to an embodiment, the template matching prediction mode may include a template matching intra prediction mode. The combined mode may include a CIIP mode in which prediction is performed by combining prediction according to the intra mode and prediction according to the inter mode. The geometric partitioning mode may include a mode for splitting a block to have directionality. The geometric partitioning mode may perform prediction by using inter prediction or intra prediction with respect to each of split regions of the block.

According to an embodiment of the present disclosure, when the prediction mode of the current block is the CIIP mode, the prediction encoder 3310 may perform prediction on the current block by combining the inter prediction and the intra prediction. For example, the prediction encoder 3310 may perform the intra prediction according to a planar mode. For example, the prediction encoder 3310 may determine a motion vector of a reference block with respect to the current block. The prediction encoder 3310 may perform the inter prediction by using the motion vector. The prediction encoder 3310 may predict the current block by using a weighted sum of a prediction block according to the inter prediction and a prediction block according to the intra prediction. A weight may be determined based on whether or not a neighboring block of the current block is intra predicted (or inter predicted).

According to an embodiment of the present disclosure, when the prediction mode of the current block is the geometric partitioning mode, the prediction encoder 3310 may perform prediction by splitting the current block. The prediction encoder 3310 may obtain a split angle and a split distance for an edge on which the splitting of the current block is performed. The prediction encoder 3310 may split the current block based on the split angle and the split distance. The prediction encoder 3310 may reconstruct the current block by performing inter prediction or intra prediction on each of split regions of the current block. The prediction encoder 3310 may (i) perform intra prediction on both of the split regions, (ii) perform inter prediction on one region and intra prediction on the other region, or (iii) perform inter prediction on both of the split regions.

According to an embodiment of the present disclosure, when the prediction mode of the current block is an intra mode, the prediction encoder 3310 may determine an intra prediction mode of the current block.

According to an embodiment of the present disclosure, when the prediction mode of the current block is the block copy mode, the prediction encoder 3310 may determine information about a block vector indicating the reference block.

According to an embodiment of the present disclosure, the prediction encoder 3310 may perform the intra prediction or the inter prediction on the current block according to the prediction mode of the current block and may encode the current block by using the prediction block generated as a result of performing the intra prediction or the inter prediction.

According to an embodiment of the present disclosure, when the prediction mode of the current block is the block copy mode, the prediction encoder 3310 may determine the prediction block from the reference block. For example, the prediction encoder 3310 may determine the prediction block to be same as the reference block or determine the prediction block by performing filtering on the reference block. The reference block may be determined based on at least one of a region included in the current image or a region included in a previously decoded image.

According to an embodiment of the present disclosure, when the prediction mode of the current block is the template matching prediction mode, the prediction encoder 3310 may reconstruct the current block by using the reference block. The prediction encoder 3310 may determine the prediction block by using the reference block.

The prediction encoder 3310 may perform deblocking filtering. A deblocking filter may improve image quality by smoothing an edge between blocks.

The prediction encoder 3310 may perform filtering on a sample of the current block on which the deblocking filtering is performed, by using an SAO filter and/or a BIF. The SAO filter and the BIF may improve the image quality by reducing an error between a reconstructed image and an original image. The SAO filter and the BIF may perform filtering in a sample unit.

The prediction encoder 3310 may perform filtering by using an ALF. The ALF may improve the image quality by reducing an error between a reconstructed image and an original image. The ALF may perform filtering in a block unit.

According to an embodiment of the present disclosure, encoding of the current block may denote a process of generating information for the image decoding apparatus 2000 to reconstruct the current block. The information generated through the encoding may be included in a bitstream.

According to an embodiment of the present disclosure, the prediction encoder 3310 may generate residual data corresponding to a difference between the prediction block and the current block. When the prediction block is determined as the current block, the residual data may not be generated.

The generator 3320 may generate a bitstream including a result of encoding an image. The bitstream may include an encoding result with respect to the current block.

According to an embodiment of the present disclosure, when the prediction mode of the current block is the block copy mode, the generator 3320 may generate a bitstream including information about the block vector indicating the reference block.

According to an embodiment of the present disclosure, the generator 3320 may transmit the bitstream to the image decoding apparatus 2000 through a network.

According to an embodiment of the present disclosure, the generator 3320 may store the bitstream in a data storage medium including at least one of a magnetic medium such as a hard disk, a floppy disk, and a magnetic tape, an optical recording medium such as a CD-ROM and a DVD, or a magneto-optical medium such as a floptical disk.

The generator 3320 may generate a bitstream including syntax elements generated through the encoding of the image. Values corresponding to the syntax elements may be included in the bitstream according to a hierarchical structure of the image.

The generator 3320 may obtain bins included in the bitstream by entropy encoding the syntax elements.

According to an embodiment of the present disclosure, the bitstream may include information about a prediction mode of a current block in a current image.

According to an embodiment of the present disclosure, when the prediction mode of the current block is an intra mode, the bitstream may include information indicating the intra prediction mode of the current block.

In the prediction mode (e.g., the intra mode) in which a reference sample included in the current image is used, the prediction block of the current block may be generated based on neighboring samples of the current block according to the intra prediction mode on the assumption that there is a sequence between the neighboring samples of the current block and samples in the current block. The prediction encoder 3310 according to an embodiment of the present disclosure may use not only the neighboring samples of the current block included in the current image, but also a spatial reference sample included in the current image for the intra prediction. When a sample reconstructed before the current block is used, not only samples directly adjacent to the current block, but also samples far from the current block may be used to predict the samples of the current block, and thus, a size of residual data may be reduced. According to an embodiment of the present disclosure, the image encoding apparatus 3300 may perform the intra prediction by using the reference block including a sample not reconstructed, and thus, a range of a region which may be determined as the reference block may be increased. The image encoding apparatus 3300 according to an embodiment of the present disclosure may increase the intra prediction efficiency, thereby improving the compression efficiency.

In the prediction mode (e.g., the inter mode) in which the reference sample included in a reference image rather than the current image is used, the prediction block of the current block may be generated based on a reference block (or the reference sample) of the reference image according to the prediction mode on the assumption that there is a sequence between the current image and the reference image. The image encoding apparatus 3300 according to an embodiment of the present disclosure may increase the intra prediction efficiency, thereby improving the compression efficiency.

The image encoding apparatus 3300 may increase the prediction accuracy by taking into account both of the reference block (or the reference sample) included in the current image and the reference block (or the reference sample) included in an image which is not the current image. The image encoding apparatus 3300 according to an embodiment of the present disclosure may improve the prediction accuracy by taking into account both of the current image and the image which is not the current image.

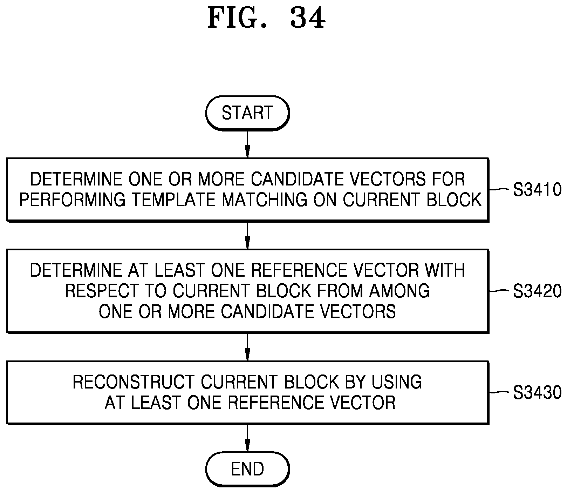

FIG. 34 is a flowchart of an image encoding method according to an embodiment of the present disclosure.

According to an embodiment of the present disclosure, the image encoding method may be performed by the image encoding apparatus 3300. For example, a processor of the image encoding apparatus 3300 may execute at least one instruction stored in memory to cause the image encoding apparatus 3300 to perform each of operations of the image decoding method.

In operation S3410, the image encoding apparatus 3300 may determine one or more candidate vectors for performing template matching on a current block. The candidate vector may include at least one of a motion vector or a block vector.

According to an embodiment of the present disclosure, the image encoding apparatus 3300 may determine the candidate vector based on a neighboring block. The image encoding apparatus 3300 may determine the candidate vector based on a block vector and/or a motion vector of the neighboring block. For example, the image encoding apparatus 3300 may determine the block vector and/or the motion vector of the neighboring block as the candidate vector. For example, the image encoding apparatus 3300 may determine the candidate vector based on a block vector and/or a motion vector of a block indicated by the block vector and/or the motion vector of the neighboring block.

According to an embodiment of the present disclosure, the image encoding apparatus 3300 may determine the candidate vector based on a candidate vector list. The image encoding apparatus 3300 may determine at least one reference vector included in the candidate vector list as the candidate vector.

According to an embodiment of the present disclosure, the image encoding apparatus 3300 may determine one or more candidate vectors to include at least one of a first block vector or a first motion vector of the neighboring block of the current block.

According to an embodiment of the present disclosure, the neighboring block may include at least one of an adjacent block and a non-adjacent block. The adjacent block may include a block adjacent to the current block. The non-adjacent block may include a block not adjacent to the current block but located within a predetermined distance from the current block. According to an embodiment of the present disclosure, the neighboring block may be included in a region excluding a reference block search range.

According to an embodiment of the present disclosure, the image encoding apparatus 3300 may identify the block vector and/or the motion vector of the neighboring block of the current block. The memory of the image encoding apparatus 3300 may store a block vector and/or a motion vector used or determined to be used for prediction of the neighboring block. According to an embodiment of the present disclosure, the image encoding apparatus 3300 may determine at least one of the identified block vector and motion vector of the neighboring block as the candidate vector.

According to an embodiment of the present disclosure, the image encoding apparatus 3300 may determine one or more candidate vectors to include at least one of a second motion vector of a block indicated by the first block vector or a second block vector of a block indicated by the first motion vector.

According to an embodiment of the present disclosure, the image encoding apparatus 3300 may determine a block vector and/or a motion vector of a block indicated by the block vector and/or the motion vector as the candidate vector. According to an embodiment of the present disclosure, the image encoding apparatus 3300 may determine the candidate vector by repeating a process of identifying the block vector and/or the motion vector of the block indicated by the block vector and/or the motion vector a plurality of times.

According to an embodiment of the present disclosure, the image encoding apparatus 3300 may determine the one or more candidate vectors to include at least one of a third block vector or a third motion vector included in a history-based vector list.

According to an embodiment of the present disclosure, the image encoding apparatus 3300 may identify a block vector and/or a motion vector stored in the history-based vector list. The image encoding apparatus 3300 may determine at least one of the identified block vector or motion vector as the candidate vector.

In operation S3420, the image encoding apparatus 3300 may determine at least one reference vector for the current block from among one or more candidate vectors. According to an embodiment of the present disclosure, the image encoding apparatus 3300 may determine the at least one reference vector by using a cost function. The image encoding apparatus 3300 may compare a template of the current block with a template of a block indicated by the candidate vector. The image encoding apparatus 3300 may determine a candidate vector of a block having a template similar to the template of the current block as the reference vector.

In operation S3430, the image encoding apparatus 3300 may reconstruct the current block by using the at least one reference vector.

Operations S3410 to S3430 described in FIG. 34 are described as an example of an image encoding method. The image encoding apparatus 3300 may omit at least one or more of operations S3410 to S3430 or may additionally perform other operations.

According to an embodiment of the present disclosure, an image decoding method is provided. The image decoding method may include determining one or more candidate vectors for performing template matching on a current block. The image decoding method may include determining at least one reference vector with respect to the current block, from among the one or more candidate vectors. The image decoding method may include reconstructing the current block by using the at least one reference vector.

According to an embodiment of the present disclosure, the determining of the one or more candidate vectors may include determining the one or more candidate vectors to include at least one of a first block vector or a first motion vector of a neighboring block of the current block, determining the one or more candidate vectors to include at least one of a second motion vector of a block indicated by the first block vector of the neighboring block of the current block or a second block vector of a block indicated by the first motion vector of the neighboring block of the current block, and determining the one or more candidate vectors to include at least one of a third block vector or a third motion vector included in a history-based vector list.

According to an embodiment of the present disclosure, the determining of the at least one reference vector may include determining an error between a template of the current block and a template of a block indicated by the one or more candidate vectors. The determining of the at least one reference vector may include determining the at least one reference vector, based on the error.

According to an embodiment of the present disclosure, the neighboring block may include at least one of an adjacent block adjacent to the current block or a non-adjacent block that is not adjacent to the current block but located within a predetermined distance from the current block.

According to an embodiment of the present disclosure, the history-based vector list may include at least one of a block vector with respect to a template matching prediction mode or a block vector with respect to an intra block copy mode.

According to an embodiment of the present disclosure, the history-based vector list may include at least one of a history-based block vector list including one or more block vectors or a history-based motion vector list including one or more motion vectors. The block vector with respect to the template matching prediction mode and the block vector with respect to the intra block copy mode may be stored in at least one of the history-based block vector list or the history-based motion vector list.

According to an embodiment of the present disclosure, the determining of the at least one reference vector may include determining a vector having a smallest error from among the one or more candidate vectors as the at least one reference vector. The reconstructing of the current block by using the at least one reference vector may include determining a reference region, based on a weighted sum between a block indicated by the at least one reference vector and a block indicated by a default intra mode. The reconstructing of the current block by using the at least one reference vector may include reconstructing the current block by using the reference region.

According to an embodiment of the present disclosure, the determining of the at least one reference vector may include determining a plurality of vectors having the smallest error from among the one or more candidate vectors as the at least one reference vector. The reconstructing of the current block by using the at least one reference vector may include determining the reference region, based on a weighted sum between blocks indicated by the at least one reference vector. The reconstructing of the current block by using the at least one reference vector may include reconstructing the current block by using the reference region.

According to an embodiment of the present disclosure, the image decoding method may include, when at least some samples of the block indicated by the at least one reference vector are not reconstructed, reconstructing the non-reconstructed at least some samples of the block indicated by the at least one reference vector, by using a motion vector of the current block. The image decoding method may include performing filtering on the reconstructed at least some samples.

According to an embodiment of the present disclosure, the image decoding method may include, when at least some samples of the block indicated by the at least one reference vector are not reconstructed, obtaining a sample difference value with respect to the non-reconstructed at least some samples. The image decoding method may include determining values of the non-reconstructed at least some samples by using the obtained sample difference value.

According to an embodiment of the present disclosure, the image decoding method may include, when at least some samples of the block indicated by the at least one reference vector are not reconstructed, correcting a position of the block to reconstruct all of samples of the block. The image decoding method may include reconstructing the current block by using the block of which the position is corrected.

According to an embodiment of the present disclosure, an image decoding apparatus is provided. The image decoding apparatus may include at least one processor and one or more memories. The at least one processor may execute one or more instructions included in the one or more memories to determine one or more candidate vectors for performing template matching on a current block. The at least one processor may execute the one or more instructions included in the one or more memories to determine at least one reference vector with respect to the current block, from among the one or more candidate vectors. The at least one processor may execute the one or more instructions included in the one or more memories to reconstruct the current block by using the at least one reference vector.

According to an embodiment of the present disclosure, the at least one processor may execute the one or more instructions included in the one or more memories to determine the one or more candidate vectors to include at least one of a first block vector or a first motion vector of a neighboring block of the current block. The at least one processor may execute the one or more instructions included in the one or more memories to determine the one or more candidate vectors to include at least one of a second motion vector of a block indicated by the first block vector of the neighboring block of the current block or a second block vector of a block indicated by the first motion vector of the neighboring block of the current block. The at least one processor may execute the one or more instructions included in the one or more memories to determine the one or more candidate vectors to include at least one of a third block vector or a third motion vector included in a history-based vector list.

According to an embodiment of the present disclosure, the at least one processor may execute the one or more instructions included in the one or more memories to determine an error between a template of the current block and a template of a block indicated by the one or more candidate vectors. The at least one processor may execute the one or more instructions included in the one or more memories to determine the at least one reference vector, based on the error.

According to an embodiment of the present disclosure, the neighboring block may include at least one of an adjacent block adjacent to the current block or a non-adjacent block that is not adjacent to the current block but located within a predetermined distance from the current block.

According to an embodiment of the present disclosure, the history-based vector list may include at least one of a block vector with respect to a template matching prediction mode or a block vector with respect to an intra block copy mode.

According to an embodiment of the present disclosure, the history-based vector list may include at least one of a history-based block vector list including one or more block vectors or a history-based motion vector list including one or more motion vectors. The block vector with respect to the template matching prediction mode and the block vector with respect to the intra block copy mode may be stored in at least one of the history-based block vector list or the history-based motion vector list.

According to an embodiment of the present disclosure, the at least one processor may execute the one or more instructions included in the one or more memories to determine a vector having a smallest error from among the one or more candidate vectors as the at least one reference vector. The at least one processor may execute the one or more instructions included in the one or more memories to determine a reference region, based on a weighted sum between a block indicated by the at least one reference vector and a block indicated by a default intra mode. The at least one processor may execute the one or more instructions included in the one or more memories to reconstruct the current block by using the reference region.

According to an embodiment of the present disclosure, the at least one processor may execute the one or more instructions included in the one or more memories to determine a plurality of vectors having the smallest error from among the one or more candidate vectors as the at least one reference vector. The at least one processor may execute the one or more instructions included in the one or more memories to determine the reference region, based on a weighted sum between blocks indicated by the at least one reference vector. The at least one processor may execute the one or more instructions included in the one or more memories to reconstruct the current block by using the reference region.

According to an embodiment of the present disclosure, the at least one processor may execute the one or more instructions included in the one or more memories to, when at least some samples of the block indicated by the at least one reference vector are not reconstructed, reconstruct the non-reconstructed at least some samples of the block indicated by the at least one reference vector, by using a motion vector of the current block. The at least one processor may execute the one or more instructions included in the one or more memories to perform filtering on the reconstructed at least some samples.

According to an embodiment of the present disclosure, the at least one processor may execute the one or more instructions included in the one or more memories to, when at least some samples of the block indicated by the at least one reference vector are not reconstructed, obtain a sample difference value with respect to the non-reconstructed at least some samples. The at least one processor may execute the one or more instructions included in the one or more memories to determine values of the non-reconstructed at least some samples by using the obtained sample difference value.

According to an embodiment of the present disclosure, the at least one processor may execute the one or more instructions included in the one or more memories to, when at least some samples of the block indicated by the at least one reference vector are not reconstructed, correct a position of the block to reconstruct all of samples of the block. The at least one processor may execute the one or more instructions included in the one or more memories to reconstruct the current block by using the block of which the position is corrected.

According to an embodiment of the present disclosure, an image encoding method is provided. The image encoding method may include determining one or more candidate vectors for performing template matching on a current block. The image encoding method may include determining at least one reference vector with respect to the current block, from among the one or more candidate vectors. The image encoding method may include reconstructing the current block by using the at least one reference vector.

According to an embodiment of the present disclosure, the determining of the one or more candidate vectors may include determining the one or more candidate vectors to include at least one of a first block vector or a first motion vector of a neighboring block of the current block, determining the one or more candidate vectors to include at least one of a second motion vector of a block indicated by the first block vector of the neighboring block of the current block or a second block vector of a block indicated by the first motion vector of the neighboring block of the current block, and determining the one or more candidate vectors to include at least one of a third block vector or a third motion vector included in a history-based vector list.

According to an embodiment of the present disclosure, the determining of the at least one reference vector may include determining an error between a template of the current block and a template of a block indicated by the one or more candidate vectors. The determining of the at least one reference vector may include determining the at least one reference vector, based on the error.

According to an embodiment of the present disclosure, the neighboring block may include at least one of an adjacent block adjacent to the current block or a non-adjacent block that is not adjacent to the current block but located within a predetermined distance from the current block.

According to an embodiment of the present disclosure, the history-based vector list may include at least one of a block vector with respect to a template matching prediction mode or a block vector with respect to an intra block copy mode.

According to an embodiment of the present disclosure, the history-based vector list may include at least one of a history-based block vector list including one or more block vectors or a history-based motion vector list including one or more motion vectors. The block vector with respect to the template matching prediction mode and the block vector with respect to the intra block copy mode may be stored in at least one of the history-based block vector list or the history-based motion vector list.

According to an embodiment of the present disclosure, the determining of the at least one reference vector may include determining a vector having a smallest error from among the one or more candidate vectors as the at least one reference vector. The reconstructing of the current block by using the at least one reference vector may include determining a reference region, based on a weighted sum between a block indicated by the at least one reference vector and a block indicated by a default intra mode. The reconstructing of the current block by using the at least one reference vector may include reconstructing the current block by using the reference region.

According to an embodiment of the present disclosure, the determining of the at least one reference vector may include determining a plurality of vectors having the smallest error from among the one or more candidate vectors as the at least one reference vector. The reconstructing of the current block by using the at least one reference vector may include determining the reference region, based on a weighted sum between blocks indicated by the at least one reference vector. The reconstructing of the current block by using the at least one reference vector may include reconstructing the current block by using the reference region.

According to an embodiment of the present disclosure, the image encoding method may include, when at least some samples of the block indicated by the at least one reference vector are not reconstructed, reconstructing the non-reconstructed at least some samples of the block indicated by the at least one reference vector, by using a motion vector of the current block. The image encoding method may include performing filtering on the reconstructed at least some samples.

According to an embodiment of the present disclosure, the image encoding method may include, when at least some samples of the block indicated by the at least one reference vector are not reconstructed, obtaining a sample difference value with respect to the non-reconstructed at least some samples. The image encoding method may include determining values of the non-reconstructed at least some samples by using the obtained sample difference value.

According to an embodiment of the present disclosure, the image encoding method may include, when at least some samples of the block indicated by the at least one reference vector are not reconstructed, correcting a position of the block to reconstruct all of samples of the block. The image encoding method may include reconstructing the current block by using the block of which the position is corrected.

According to an embodiment of the present disclosure, an image encoding apparatus is provided. The image encoding apparatus may include at least one processor and one or more memories. The at least one processor may execute one or more instructions included in the one or more memories to determine one or more candidate vectors for performing template matching on a current block. The at least one processor may execute the one or more instructions included in the one or more memories to determine at least one reference vector with respect to the current block, from among the one or more candidate vectors. The at least one processor may execute the one or more instructions included in the one or more memories to reconstruct the current block by using the at least one reference vector.

According to an embodiment of the present disclosure, the at least one processor may execute the one or more instructions included in the one or more memories to determine the one or more candidate vectors to include at least one of a first block vector or a first motion vector of a neighboring block of the current block. The at least one processor may execute the one or more instructions included in the one or more memories to determine the one or more candidate vectors to include at least one of a second motion vector of a block indicated by the first block vector of the neighboring block of the current block or a second block vector of a block indicated by the first motion vector of the neighboring block of the current block. The at least one processor may execute the one or more instructions included in the one or more memories to determine the one or more candidate vectors to include at least one of a third block vector or a third motion vector included in a history-based vector list.

According to an embodiment of the present disclosure, the at least one processor may execute the one or more instructions included in the one or more memories to determine an error between a template of the current block and a template of a block indicated by the one or more candidate vectors. The at least one processor may execute the one or more instructions included in the one or more memories to determine the at least one reference vector, based on the error.

According to an embodiment of the present disclosure, the neighboring block may include at least one of an adjacent block adjacent to the current block or a non-adjacent block that is not adjacent to the current block but located within a predetermined distance from the current block.

According to an embodiment of the present disclosure, the history-based vector list may include at least one of a block vector with respect to a template matching prediction mode or a block vector with respect to an intra block copy mode.

According to an embodiment of the present disclosure, the history-based vector list may include at least one of a history-based block vector list including one or more block vectors or a history-based motion vector list including one or more motion vectors. The block vector with respect to the template matching prediction mode and the block vector with respect to the intra block copy mode may be stored in at least one of the history-based block vector list or the history-based motion vector list.

According to an embodiment of the present disclosure, the at least one processor may execute the one or more instructions included in the one or more memories to determine a vector having a smallest error from among the one or more candidate vectors as the at least one reference vector. The at least one processor may execute the one or more instructions included in the one or more memories to determine a reference region, based on a weighted sum between a block indicated by the at least one reference vector and a block indicated by a default intra mode. The at least one processor may execute the one or more instructions included in the one or more memories to reconstruct the current block by using the reference region.

According to an embodiment of the present disclosure, the at least one processor may execute the one or more instructions included in the one or more memories to determine a plurality of vectors having the smallest error from among the one or more candidate vectors as the at least one reference vector. The at least one processor may execute the one or more instructions included in the one or more memories to determine the reference region, based on a weighted sum between blocks indicated by the at least one reference vector. The at least one processor may execute the one or more instructions included in the one or more memories to reconstruct the current block by using the reference region.

According to an embodiment of the present disclosure, the at least one processor may execute the one or more instructions included in the one or more memories to, when at least some samples of the block indicated by the at least one reference vector are not reconstructed, reconstruct the non-reconstructed at least some samples of the block indicated by the at least one reference vector, by using a motion vector of the current block. The at least one processor may execute the one or more instructions included in the one or more memories to perform filtering on the reconstructed at least some samples.

According to an embodiment of the present disclosure, the at least one processor may execute the one or more instructions included in the one or more memories to, when at least some samples of the block indicated by the at least one reference vector are not reconstructed, obtain a sample difference value with respect to the non-reconstructed at least some samples. The at least one processor may execute the one or more instructions included in the one or more memories to determine values of the non-reconstructed at least some samples by using the obtained sample difference value.

According to an embodiment of the present disclosure, the at least one processor may execute the one or more instructions included in the one or more memories to, when at least some samples of the block indicated by the at least one reference vector are not reconstructed, correct a position of the block to reconstruct all of samples of the block. The at least one processor may execute the one or more instructions included in the one or more memories to reconstruct the current block by using the block of which the position is corrected.

According to an embodiment of the present disclosure, according to an embodiment of the present disclosure, a computer-readable storage medium having stored thereon a bitstream encoded by an image encoding method is provided.

The method or embodiment provided in the present disclosure may be separately used or used in combination according to an arbitrary order. Also, each of the method (or the embodiment), the encoder, and the decoder may be realized by processing circuitry (for example, one or more processors or one or more integrated circuits). According to an embodiment, the one or more processors may execute a program stored in a non-transitory computer-readable medium.

An image decoding method, an image decoding apparatus, an image encoding method, and an image encoding apparatus according to an embodiment of the present disclosure may perform template matching prediction by using various predictors by using a predictor of not only a current image, but also another image, or a reference block, and thus, may improve the video coding efficiency. However, the technical effects of the image decoding method according to an embodiment of the present disclosure are not limited to the described aspects and may include technical features generated according to the present disclosure.

Machine-readable storage media may be provided as non-transitory storage media. Here, the term "non-transitory storage medium" only denotes that a medium is a tangible device and does not include signals (e.g., electromagnetic waves), and the term does not distinguish a storage medium semi-permanently storing data and a storage medium temporarily storing data. For example, the "non-transitory storage medium" may include a buffer temporarily storing data.

According to an embodiment, the method according to various embodiments disclosed in this specification may be provided as an inclusion of a computer program product. The computer program product may be transacted between a seller and a purchaser as a product. The computer program product may be distributed in the form of a machine-readable storage medium (e.g., CD-ROM) or may be distributed online (e.g., downloaded or uploaded) through an application store or directly between two user devices (e.g., smartphones). In the case of online distribution, at least part of a computer program product (e.g., a downloadable application) may be at least temporarily stored in a machine-readable storage medium, such as a server of a manufacturer, a server of an application store, or a memory of a relay server, or may be temporarily generated.

## Claims

**1.** An image decoding method comprising:

determining one or more candidate vectors for performing template matching on a current block;
determining at least one reference vector with respect to the current block, from among the one or more candidate vectors; and
reconstructing the current block by using the at least one reference vector.

**2.** The image decoding method of claim 1, wherein the determining the one or more candidate vectors comprises determining the one or more candidate vectors to include at least one of a first block vector of a neighboring block of the current block or a first motion vector of the neighboring block of the current block.

**3.** The image decoding method of any one of claims 1 and 2, wherein the determining the one or more candidate vectors further comprises determining the one or more candidate vectors to include at least one of a second motion vector of a block indicated by the first block vector of the neighboring block of the current block or a second block vector of a block indicated by the first motion vector of the neighboring block of the current block.

**4.** The image decoding method of any one of claims 1 to 3, wherein the determining of the one or more candidate vectors further comprises determining the one or more candidate vectors to include at least one of a third block vector in a history-based vector list or a third motion vector included in the history-based vector list.

5. The image decoding method of any one of claims 1 to 4, wherein the determining of the at least one reference vector comprises:

determining an error between a template of the current block and a template of a block indicated by the one or more candidate vectors; and
determining the at least one reference vector, based on the error.

6. The image decoding method of any one of claims 2 to 5, wherein the neighboring block includes at least one of an adjacent block adjacent to the current block or a non-adjacent block that is not adjacent to the current block and is located within a predetermined distance from the current block.

7. The image decoding method of any one of claims 4 to 6, wherein the history-based vector list includes at least one of a block vector with respect to a template matching prediction mode or a block vector with respect to an intra block copy mode.

8. The image decoding method of claim 7, wherein the history-based vector list further includes at least one of a history-based block vector list including one or more block vectors or a history-based motion vector list including one or more motion vectors, and
wherein the block vector with respect to the template matching prediction mode and the block vector with respect to the intra block copy mode are stored in at least one of the history-based block vector list or the history-based motion vector list.

9. The image decoding method of any one of claims 5 to 8, wherein the determining of the at least one reference vector further comprises determining a vector having a smallest error from among the one or more candidate vectors as the at least one reference vector, and
wherein the reconstructing of the current block by using the at least one reference vector comprises:

determining a reference region, based on a weighted sum between a block indicated by the at least one reference vector and a block indicated by a default intra mode; and
reconstructing the current block by using the reference region.

10. The image decoding method of any one of claims 5 to 9, wherein the determining of the at least one reference vector further comprises determining a plurality of vectors having the smallest error from among the one or more candidate vectors as the at least one reference vector, and
wherein the reconstructing of the current block by using the at least one reference vector further comprises:

determining a reference region, based on a weighted sum between blocks indicated by the at least one reference vector; and
reconstructing the current block by using the reference region.

11. The image decoding method of any one of claims 1 to 10, further comprising:

when at least some samples of the block indicated by the at least one reference vector are not reconstructed, reconstructing the non-reconstructed at least some samples of the block indicated by the at least one reference vector, by using a motion vector of the current block; and
performing filtering on the reconstructed at least some samples.

12. The image decoding method of any one of claims 1 to 11, further comprising:

when at least some samples of the block indicated by the at least one reference vector are not reconstructed, obtaining a sample difference value with respect to the non-reconstructed at least some samples; and
determining values of the non-reconstructed at least some samples by using the obtained sample difference value.

13. The image decoding method of any one of claims 1 to 12, further comprising:

when at least some samples of the block indicated by the at least one reference vector are not reconstructed, correcting a position of the block to reconstruct all of samples of the block; and

reconstructing the current block by using the block of which the position is corrected.

**14.** An image encoding method comprising:

determining one or more candidate vectors for performing template matching on a current block;
determining at least one reference vector with respect to the current block, from among the one or more candidate vectors; and
reconstructing the current block by using the at least one reference vector.

**15.** A computer-readable storage medium having stored thereon a bitstream encoded by an image encoding method comprising: determining one or more candidate vectors for performing template matching on a current block;

determining at least one reference vector with respect to the current block, from among the one or more candidate vectors; and
reconstructing the current block by using the at least one reference vector.

FIG. 1

100
110
BITSTREAM OBTAINER
120
DECODER

FIG. 2

200
210
BITSTREAM GENERATOR
220
ENCODER

FIG. 3

300
310a
310b
310b
310c
310c
310d
310d
310d
310d
310e
310e
310e
310f
310f
310f

# FIG. 4

410
420a
400
420b
430a
430b
430c

460
450
470a
470b
480a
480b
480c

FIG. 5
500
510
520a
520b
520c
520d
530a
530b
530c
530d

# FIG. 6

600
640
630a
620a
630b
620b
640
630c
620c
690
650
670a
670b
690
670c
660a
660b
660c

# FIG. 7

700
710a
710b
710c
730a
730c
730b
750a
750b
750e
750c
750d
720a
720c
720b

# FIG. 8

800
810a
810b
810c
830
820a
820b
820c
820d
820e

# FIG. 9

900
910a
910b
910c
920a
920b
920c
930
950

FIG. 10
1000
1010a 1010b
1020a
1030a 1030b
1020b
1030c 1030d
1012a
1014a
1022a 1022b
1012b
1014b
1024a 1024b

FIG. 11
1100
1110a 1110b
1120a
1130a 1130b
1120b
1130c 1130d
1112a
1114a
1116a 1116b
1122a 1122b
1126a 1126b
1112b
1114b
1116c 1116d
1124a 1124b
1126c 1126d

# FIG. 12

1200
1210a 1210b
1220a
1220b
1216a 1216b
1217
1216c 1216d
1226a 1226b
1226c 1226d
1227

# FIG. 13

| DEPTH \ BLOCK SHAPE | 0: SQUARE | 1: NS_VER | 2: NS_HOR |
| --- | --- | --- | --- |
| DEPTH D | 1300 | 1310 | 1320 |
| DEPTH D+1 | 1302 | 1312 | 1322 |
| DEPTH D+2 | 1304 | 1314 | 1324 |
| ... | ... | ... | ... |

FIG. 14
1400
DEPTH=D
1402a
1402b
PID 0 DEPTH=D
PID 1 DEPTH=D
1404a
PID 0 DEPTH=D
PID 1 DEPTH=D
1404b
1406a
1406b
PID 0 DEPTH=D+1
PID 1 DEPTH=D+1
PID 2 DEPTH=D+1
PID 3 DEPTH=D+1
1406c
1406d
1410
DEPTH=D
PID 0 DEPTH=D+1
1412a
PID 1 DEPTH=D+1
1412b
PID 0 DEPTH=D+1
1414a
PID 1 DEPTH=D+1
1414b
PID 3 DEPTH=D+1
1414c
1420
DEPTH=D
1422a
1422b
PID 0 DEPTH=D+1
PID 1 DEPTH=D+1
1424a
1424b
1424c
PID 0 DEPTH =D+1
PID 1 DEPTH=D+1
PID 3 DEPTH =D+1

FIG. 15

1510
1500
1502

FIG. 16

1620
1610
1600

# FIG. 17

| SQUARE BLOCK | |
|---|---|
| (00)b | |
| (01)b | |
| (10)b | |
| (11)b | |

| NON-SQUARE BLOCK | |
|---|---|
| (0)b | |
| (10)b | |
| (11)b | |

# FIG. 18

| SQUARE BLOCK | |
|---|---|
| (0)b | |
| (10)b | |
| (11)b | |

| NON-SQUARE BLOCK | |
|---|---|
| (0)b | |
| (10)b | |
| (11)b | |

FIG. 19

1900
1910
1920
T + Q
1925
ENTROPY ENCODER
1930
$Q^{-1}+T^{-1}$
FILTER INFORMATION
1915
PREDICTION ENCODER
1940
LOOP FILTER
1935
DEBLOCKING FILTER
FILTER INFORMATION
1950
1970
LOOP FILTER
1965
DEBLOCKING FILTER
1960
$Q^{-1}+T^{-1}$
1955
ENTROPY DECODER
1975
PREDICTION DECODER

FIG. 20

2000
2010
2020
OBTAINER
PREDICTION
DECODER

FIG. 21

START
IDENTIFY CANDIDATE VECTOR
S2110
REMOVE REDUNDANT CANDIDATE VECTOR
S2120
DETERMINE REFERENCE VECTOR AND/OR REFERENCE BLOCK
S2130
END

# FIG. 22

RECONSTRUCTED REGION
SIMILAR TEMPLATE
a
2230
2240
Reference Block A
b
2250
Reference Block B
TEMPLATE
2220
PREDICTION
Current Block
2210
CURRENT IMAGE

FIG. 23

2310
n
m
current block
2300
(a)
2320
current block
2300
(b)
2330
current block
2300
(c)
2340
current block
2300
(d)

FIG. 24

2*max(5W,64)
max(5H,64)
R1
R2
R3
R4
R5
R6
2400
W
H

# FIG. 25

START
DETERMINE ONE OR MORE CANDIDATE VECTORS FOR PERFORMING TEMPLATE MATCHING ON CURRENT BLOCK
S2510
DETERMINE AT LEAST ONE REFERENCE VECTOR WITH RESPECT TO CURRENT BLOCK FROM AMONG ONE OR MORE CANDIDATE VECTORS
S2520
RECONSTRUCT CURRENT BLOCK BY USING AT LEAST ONE REFERENCE VECTOR
S2530
END

FIG. 26

START
S2510
DETERMINE ONE OR MORE CANDIDATE VECTORS TO INCLUDE AT LEAST ONE OF FIRST BLOCK VECTOR OR FIRST MOTION VECTOR OF NEIGHBORING BLOCK OF CURRENT BLOCK
S2610
DETERMINE ONE OR MORE CANDIDATE VECTORS TO INCLUDE AT LEAST ONE OF SECOND MOTION VECTOR OF BLOCK INDICATED BY FIRST BLOCK VECTOR OR SECOND BLOCK VECTOR OF BLOCK INDICATED BY FIRST MOTION VECTOR
S2620
DETERMINE ONE OR MORE CANDIDATE VECTORS TO INCLUDE AT LEAST ONE OF THIRD BLOCK VECTOR OR THIRD MOTION VECTOR INCLUDED IN HISTORY-BASED VECTOR LIST
S2630
END

# FIG. 27

R4
R6
Tn
C1
...
Cn
W
...
B1
...
Bn
T1
A1
...
An
N1
M1
L1
H
... ... ...
Nn
Mn
Ln
R5
W
2700

# FIG. 28

2810
history based block vector list
STORE VECTOR
REMOVE VECTOR
2820
history based motion vector list
STORE VECTOR
REMOVE VECTOR

FIG. 29

START
S2510
DETERMINE ERROR BETWEEN TEMPLATE OF CURRENT BLOCK AND TEMPLATE OF BLOCK INDICATED BY ONE OR MORE CANDIDATE VECTORS
S2910
DETERMINE AT LEAST ONE REFERENCE VECTOR BASED ON ERROR
S2920
END

FIG. 30

3010
Current CU
loc(a,b)
A1
(x,y)
L1
3020
Matching area
BV_A
corresponding CU
(m,n)
3030
MV_L

FIG. 31
searchRangeheight
searchRangeWidth
searchRangeWidth
RECONSTRUCTED REGION
NON-RECONSTRUCTED REGION
R1
R2
R3
R4
Cur Block
3110
3112
3114
3120
3122
3124
3130
3132
3134

FIG. 32

searchRangeheight
searchRangeWidth
searchRangeWidth
R1
R2
R3
R4
Cur
Cur Block
3215
3210
3220

FIG. 33

3300
3310
3320
PREDICTION ENCODER
GENERATOR

# FIG. 34

START
DETERMINE ONE OR MORE CANDIDATE VECTORS FOR PERFORMING TEMPLATE MATCHING ON CURRENT BLOCK
S3410
DETERMINE AT LEAST ONE REFERENCE VECTOR WITH RESPECT TO CURRENT BLOCK FROM AMONG ONE OR MORE CANDIDATE VECTORS
S3420
RECONSTRUCT CURRENT BLOCK BY USING AT LEAST ONE REFERENCE VECTOR
S3430
END

**INTERNATIONAL SEARCH REPORT**

International application No. **PCT/KR2024/007090**

**A. CLASSIFICATION OF SUBJECT MATTER**

**H04N 19/593**(2014.01)i; **H04N 19/105**(2014.01)i; **H04N 19/176**(2014.01)i; **H04N 19/159**(2014.01)i; **H04N 19/157**(2014.01)i

According to International Patent Classification (IPC) or to both national classification and IPC

**B. FIELDS SEARCHED**

Minimum documentation searched (classification system followed by classification symbols)

H04N 19/593(2014.01); H04N 13/117(2018.01); H04N 13/243(2018.01); H04N 19/105(2014.01); H04N 19/11(2014.01); H04N 19/119(2014.01); H04N 19/132(2014.01); H04N 19/157(2014.01); H04N 19/513(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 템플릿 매칭(template matching), 후보(candidate), 벡터(vector), 참조(reference), 복원(reconstruct)

**C. DOCUMENTS CONSIDERED TO BE RELEVANT**

| Category* | Citation of document, with indication, where appropriate, of the relevant passages | Relevant to claim No. |
|---|---|---|
| X | KR 10-2023-0016609 A (ELECTRONICS AND TELECOMMUNICATIONS RESEARCH INSTITUTE et al.) 02 February 2023 (2023-02-02) See paragraphs [0100], [0121]-[0125], [0170], [0228], [0457]-[0458], [0475], [0481], [0504], [0508], [0583], [0599], [0770]-[0771], [0825], [0917]-[0921], [0942], [0955], [1040] and [1209]; claim 1; and figures 2 and 19-20. | 1-2,4-5,9-10,14-15 |
| Y | | 3,6-8,11-13 |
| Y | US 2017-0366822 A1 (KABUSHIKI KAISHA TOSHIBA) 21 December 2017 (2017-12-21) See paragraph [0097]; and figures 8A-8F. | 3 |
| Y | US 2023-0097850 A1 (BEIJING BYTEDANCE NETWORK TECHNOLOGY CO., LTD.) 30 March 2023 (2023-03-30) See claims 1 and 7-8. | 6-8 |
| Y | KR 10-2017-0029549 A (HFI INNOVATION INC.) 15 March 2017 (2017-03-15) See paragraphs [0031] and [0038]; and claim 32. | 11-13 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **09 September 2024** | **09 September 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No. **PCT/KR2024/007090**

**C. DOCUMENTS CONSIDERED TO BE RELEVANT**

| Category* | Citation of document, with indication, where appropriate, of the relevant passages | Relevant to claim No. |
|---|---|---|
| Y | KR 10-2023-0051319 A (VID SCALE, INC.) 17 April 2023 (2023-04-17)<br>See paragraph [0008]. | 11-12 |

Form PCT/ISA/210 (second sheet) (July 2022)

**INTERNATIONAL SEARCH REPORT**
**Information on patent family members**

International application No.
**PCT/KR2024/007090**

| Patent document cited in search report | Publication date (day/month/year) | Patent family member(s) | Publication date (day/month/year) |
|---|---|---|---|
| KR 10-2023-0016609 A | 02 February 2023 | CN 118044194 A | 14 May 2024 |
| | | WO 2023-008888 A1 | 02 February 2023 |
| US 2017-0366822 A1 | 21 December 2017 | CN 103227923 A | 31 July 2013 |
| | | CN 103227923 B | 08 June 2016 |
| | | EP 3340627 A1 | 27 June 2018 |
| | | JP 2013-125211 A1 | 08 July 2013 |
| | | JP 5368631 B2 | 18 December 2013 |
| | | US 11889107 B2 | 30 January 2024 |
| | | US 2024-0107057 A1 | 28 March 2024 |
| | | WO 2011-125256 A1 | 13 October 2011 |
| US 2023-0097850 A1 | 30 March 2023 | CN 115715465 A | 24 February 2023 |
| | | WO 2021-244656 A1 | 09 December 2021 |
| KR 10-2017-0029549 A | 15 March 2017 | CN 111147846 A | 12 May 2020 |
| | | CN 111147846 B | 11 March 2022 |
| | | EP 3152906 A1 | 12 April 2017 |
| | | EP 3152906 B1 | 16 June 2021 |
| | | JP 2019-083541 A | 30 May 2019 |
| | | JP 6781279 B2 | 04 November 2020 |
| | | KR 10-1961385 B1 | 25 March 2019 |
| | | KR 10-2017-0020928 A | 24 February 2017 |
| | | US 10869031 B2 | 15 December 2020 |
| | | US 2017-0134724 A1 | 11 May 2017 |
| | | WO 2016-004850 A1 | 14 January 2016 |
| KR 10-2023-0051319 A | 17 April 2023 | CN 117135357 A | 28 November 2023 |
| | | EP 3482563 A1 | 15 May 2019 |
| | | JP 2023-105219 A | 28 July 2023 |
| | | JP 7295178 B2 | 20 June 2023 |
| | | KR 10-2022-0047402 A | 15 April 2022 |
| | | KR 10-2521272 B1 | 12 April 2023 |
| | | US 11388438 B2 | 12 July 2022 |
| | | US 2022-0368947 A1 | 17 November 2022 |
| | | WO 2018-009746 A1 | 11 January 2018 |

Form PCT/ISA/210 (patent family annex) (July 2022)